# EUROPÄISCHE PATENTSCHRIFT

(11) **EP 2 023 434 B1**
(45) Veröffentlichungstag und Bekanntmachung des Hinweises auf die Patenterteilung: **07.09.2016**
(21) Anmeldenummer: 07112930.8
(22) Anmeldetag: 23.07.2007
(51) Int. Cl.: H01G 9/022, H01G 11/62, H01M 10/0525, H01M 10/0567, H01M 10/0568, H01G 9/00

(54) **Elektrolytzubereitungen für Energiespeicher auf Basis ionischer Flüssigkeiten**
Electrolyte preparations for energy storage devices based on ionic fluids
Préparations d'électrolytes pour accumulateurs d'énergie à base de liquides ioniques

(43) Veröffentlichungstag der Anmeldung: 11.02.2009
(73) Patentinhaber: Litarion GmbH, 01917 Kamenz (DE)
(72) Erfinder: Pascaly, Matthias, 48163 Münster (DE); Modlinger, Armin, 45770 Marl (DE); Schuster, Martin, 45721 Haltern am See (DE); van Hal, Roy, 50667 Köln (DE); Hilgers, Claus, 50672 Köln (DE); Uerdingen, Marc, 53797 Lohmar (DE)
(74) Vertreter: Tostmann, Holger Carl

(56) Entgegenhaltungen:
- WO-A-2007/058421
- US-A1- 2006 068 282
- DATABASE CA [Online] CHEMICAL ABSTRACTS SERVICE, COLUMBUS, OHIO, US; 2006, OGAWA, HIROSHI ET AL: "Ion conductors and their use in energy devices and fuel cells" XP002455425 gefunden im STN Database accession no. 146:84625 & JP 2006 344433 A (NISSAN MOTOR CO., LTD., JAPAN) 21. Dezember 2006 (2006-12-21)
- KATAYAMA, YASUSHI; MORITA, TATSUYA; MIURA, TAKASHI: "Study on anode reactions of secondary lithium batteries in room-temperature ionic liquids" DENKI KAGAKKAI YOYUEN IINKAI, Bd. 49, Nr. 2, 2006, Seiten 82-86, XP008084924 Yoyuen oyobi Koon Kagaku (2006), 49(2), 82-86CODEN: YKKAEG; ISSN: 0916-1589
- LEE ET AL: "Ionic liquids containing an ester group as potential electrolytes" ELECTROCHEMISTRY COMMUNICATION, ELSEVIER, AMSTERDAM, NL, Bd. 8, Nr. 3, März 2006 (2006-03), Seiten 460-464, XP005309535 ISSN: 1388-2481

## Beschreibung

### Technisches Gebiet

Die vorliegende Erfindung betrifft flüssige Elektrolyte für Energiespeicher, insbesondere Lithium-Ionen-Batterien und Doppelschichtkondensatoren, auf Basis ionischer Flüssigkeiten.

### Hintergrund der Erfindung

Elektrolyte in kommerziellen Lithium-Ionen-Batterien bestehen aus einem Leitsalz, meist LiPF₆, welches in aprotischen organischen Lösungsmitteln gelöst ist. Die stete Zunahme immer leistungsfähigerer elektronischer portabler Systeme erfordert eine enorme Verbesserung der Leistungsfähigkeit zukünftiger Lithium-Ionen-Batterien hinsichtlich Energiedichte und Lebenszeit. In heutigen flüssigen Elektrolytsystemen werden überwiegend leicht brennbare, organische Lösungsmittel, wie beispielsweise Carbonsäureester oder Acetonitril eingesetzt, die sich bei entsprechender Belastung entzünden können und somit zur Zerstörung der Batterie bzw. im ungünstigsten Fall zur Zerstörung der Geräte führen können. Ionische Flüssigkeiten (ILs) sind flüssige Salze mit einem Schmelzpunkt unterhalb 100 °C. Die interionischen Wechselwirkungen sorgen dafür, dass sie vernachlässigbar kleine Dampfdrücke aufweisen und somit nicht bzw. kaum entflammbar sind. Aufgrund des ionischen Charakters weisen sie Leitfähigkeiten von etwa 10⁻⁵ bis zu 10⁻² S/cm auf.

Typische Kationen und Anionen ionischer Flüssigkeiten werden durch folgende Formeln bzw. Strukturformeln wiedergegeben:

| **Kationen** | | **Anionen** |
|---|---|---|
| 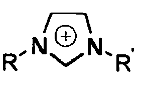 | 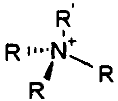 | 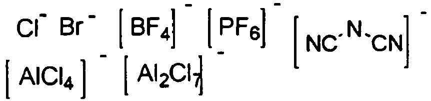 |
| 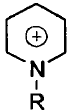 | 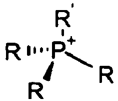 | 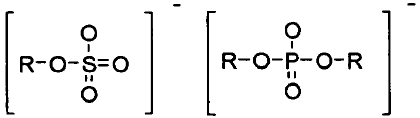 |
| 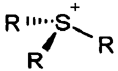 | | 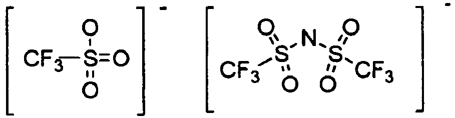 |

Aufgrund ihrer zum Teil vorteilhaften Eigenschaften wird die Substanzklasse der ionischen Flüssigkeiten als neue Elektrolytflüssigkeit für Lithium-Ionen-Batterien ca. seit Mitte der 90er Jahre diskutiert. Der Einsatz sowohl als flüssiger Elektrolyt als auch als leitfähiges Polymer ist Gegenstand dieser Untersuchungen.

So sind zum Beispiel in den Druckschriften US 2003/0165737, US 6,855,457, und EP 1 530 248 Lithium-Ionen-Batterien beschrieben, in denen Elektrolyte auf Basis ionischer Flüssigkeiten verwendet werden. In der WO 04/082059 werden allgemein auf Pyrrolidinium basierende ionische Flüssigkeiten als Hauptkomponente von Elektrolyten beschrieben. Schließlich werden in der EP 1 324 358 speziellere Elektrolytformulierungen für Doppelschichtkondensatoren auf Basis von Pyrrolidinium-ILs vorgestellt.

Da die Anforderungen an derartige Elektrolyte für immer leistungsfähigere Lithium-Ionen-Batterien steigen, besteht weiterhin Bedarf an verbesserten Elektrolyten auf Basis ionischer Flüssigkeiten, wobei an die elektrochemische Stabilität der ionischen Flüssigkeit, deren Viskosität, deren Leitfähigkeit, sowie bezüglich des vorgesehenen Temperaturarbeitsbereiches besondere Anforderungen gestellt werden. Darüber hinaus sollte auch eine möglichst hohe Löslichkeit lithiumhaltiger Leitsalze in den jeweiligen ionischen Flüssigkeiten gegeben sein.

WO 2007/058421 A1 offenbart einen Elektrolyten aus einer ionischen Flüssigkeit, beispielsweise Butyromethylpyrrolidinium, zusammen mit einem Leitsalz, das die Dichte der Zusammensetzung erhöht, zumindest einer Carbonatverbindung als Filmbildner, sowie einem aprotischen, dipolaren Lösungsmittel. In Hybrid-Batterien wird so die Bildung einer Ladungsdoppelschicht erreicht.

In der japanischen Patentanmeldung JP 2006-344433 A wird ausgeführt, dass die Anwesenheit möglichst großer Ionencluster im Elektrolyten seine Protonenleitfähigkeit verbesserten. Je größer die ionischen Cluster jedoch sind, desto höher wird die Viskosität des Elektrolyten sein.

Der Aufsatz von Katayama et al. mit dem Titel "Study on anode reactions of secondary lithium batteries in room-temperature ionic liquidsα in Denki Kagakkai Yoyuen linkai, Bd. 49, Nr. 2 (2006) offenbart auf den Seiten 82 - 86 eine Elektrolyt Zusammensetzung mit 1-Butyl-1-Methyl-Pyrrolidinium (TFSI) als ionischer Flüssigkeit zusammen mit einem Leitsalz und Ethylencarbonat als Filmbildner.

Auch bei Lee et al. in ihrer Publikation "Ionic liquids containing an estergroup as potential electrolytesα in Electrochemical Communication, Elsevier, Amsterdam, NL, Bd. 8, Nr. 3 (2006-03), S. 460 - 464, findet man eine Darstellung verschiedener Elektrolyte in Lösungen, die eine ionischen Flüssigkeit und zumindest jeweils ein Leitsalz und ein filmbildendes Agenz aufweisen.

Aufgabe der vorliegenden Erfindung ist es nun, Elektrolyte zu finden, die im vorgesehenen Temperaturarbeitsbereich der Lithium-Ionen-Batterien bzw. Doppelschichtkondensatoren von -20 °C bis 60 °C leistungsfähig sind, die eine elektrochemische Stabilität über einen Spannungsbereich von mindestens 4,5 V aufweisen, die mit möglichst wenig Lösungsmittel auskommen, um das Risiko der Entflammbarkeit zu minimieren, die eine hohe Leitfähigkeit von mindestens 3 mS/cm aufweisen, und in der gegebenenfalls hohe Konzentrationen gelöster lithiumhaltiger Leitsalze möglich sind. Auch sollten die Elektrolytlösungen eine möglichst hohe Reinheit bei einem Wassergehalt von unter 20 ppm aufweisen.

### Beschreibung der Erfindung

Die gestellte Aufgabe wird durch einen Elektrolyten gemäß Anspruch 1 gelöst, enthaltend a) eine ionische Flüssigkeit, die über einen Bereich von mindestens 4,5 V, bevorzugt 4,8 V, weiter bevorzugt 4,9 V, noch bevorzugter 5,0 V, und am meisten bevorzugt 5,4 V, elektrochemisch stabil ist, eine Viskosität von <300 mPa·s, vorzugsweise <250 mPa·s, bevorzugter <200 mPa·s, noch bevorzugter <150 mPa·s, bei 20 °C aufweist und eine Leitfähigkeit von mindestens 1 mS/cm, vorzugsweise mindestens 2 mS/cm, bevorzugter mindestens 3 mS/cm, bei 20 °C, und b) ein aprotisches, dipolares Lösungsmittel in einer Menge von 20 - 60 Vol-%, vorzugsweise 25 - 55 Vol-%, bevorzugter 30 - 50 Vol-%, bezogen auf den Elektrolyt zubereitung, und dle ionische Flüssigkeit aus der im Anspruch 1 beanspruchten Gruppe ausgewählt ist, wobei die Leitfähigkeit der Elektrolyt zubereitung mindestens um den Faktor 2, vorzugsweise mindestens um den Faktor 3, bevorzugter mindestens um den Faktor 4, größer ist als die Leitfähigkeit der ionischen Flüssigkeit, wobei das aprotische, dipolare Lösungsmittel gemäß Anspruch 1 ist.

Die Bestimmung der Viskositätswerte im Rahmen der vorliegenden Erfindung erfolgt anhand eines Rheometers (Modell RS 600) der Firma Thermo Haake GmbH, Karlsruhe mit einer Platte/Platte Messvorrichtung mit einem Durchmesser von 35 mm. Die Viskositäten werden für Temperaturen von -10 °C bis 80 °C in Schritten von 10 °C bei Scherraten von 100 bis 2000 s⁻¹ für die jeweilige Temperatur. Die Aufzeichnung der Messwerte erfolgt mit der Software RheoWin. Die im Folgenden dargestellten Viskositäts-Werte stellen den Mittelwert der für verschiedene Scherraten gemessenen Werte bei einer definierten Temperatur dar. Es konnte bei Temperaturen von -10 °C bis 80 °C ein Verhalten einer nahezu idealen Newtonschen Flüssigkeit nachgewiesen werden.

Die Bestimmung Leitfähigkeiten der IL/Lösungsmittel-Gemische im Rahmen der vorliegenden Erfindung erfolgte mit einem Leitfähigkeitsmeßgerät (Modell LF 537) der Firma WTW mit einer 2-Elektroden-Glas/Platin Meßzelle. Dazu wurden 5 ml des IL/Leitsalz-Gemisches unter einem leichten Argonstrom in ein Schlenkrohr gefüllt und mittels Wasserbad bei einer Temperatur zwischen 22 und 23°C gehalten. Während der Messung taucht die Meßzelle in die Lösung, zur Homogemisierung wird mit einem Magnetrührkem gerührt. Das Lösungsmittel wird über eine 2 ml Spritze mit Kanülle in 0.2 ml Schritten zugegeben. Nach jeder Zugabe wird gewartet bis die Lösung homogen ist, danach erfolgte die Messung der entsprechenden Leitfähigkeit.

Ionische Flüssigkeiten weisen eine weite strukturelle Variationsbreite auf. Aufgrund ihres Verhaltens im elektrischen Feld sind nur wenige Anionen für die vorgesehene Anwendung geeignet. So neigen zum Beispiel organische Sulfate und Sulfonate oder Dicyanamide entweder zur Zersetzung oder zur Polymerisation. Nur hochfluorierte Anionen weisen die notwendigen Stabilitäten auf. Um die einzelnen Eigenschaften der verwendeten ionischen Flüssigkeiten herauszuarbeiten, werden die strukturellen Unterschiede für die Anionen und Kationen getrennt diskutiert. Der weit aus größere Effekt auf die für den Einsatz als Elektrolyt relevanten Eigenschaften hat das Anion. Bei einem Vergleich der Viskositäten verschiedener Klassen von ionischen Flüssigkeiten zeigt sich unter Berücksichtigung von Anionenstabilitäten im elektrischen Feld und toxikologischen Aspekten, dass ionische Flüssigkeiten mit dem Bis(trifluoromethansulfonyl)imid-Anion (TFSI-Anion) die niedrigsten Viskositäten und damit hohe Leitfähigkeiten aufweisen.

Verwandt mit den TFSI-Schmelzen sind die Fluorsulfonylimide (N(SO₂F)₂⁻, FSI), die größtenteils noch höhere Leitfähigkeiten bei vergleichbarem elektrochemischem Fenster aufweisen. Nachteilig an den FSI-Anionen ist jedoch, dass diese schwieriger synthetisch zugänglich sind.

An der Verbindung 1-Ethyl-3-methylimidazolium (EMIM) Dicyanamid zeigt sich beispielhaft, dass die Viskosität bzw. die Leitfähigkeit nicht der alleinige Gradmesser ist. Mit einer Viskosität von 17 mPa·s und einer Leitfähigkeit von 27 mS/cm erscheint diese Verbindung sehr interessant für den Einsatz in Elektrolyte. Die Dicyanamide neigen jedoch im elektrischen Feld zur Polymerisation, so dass sie nicht gut verwendet werden können. Gleiches gilt für die Klasse der Thiocyanat-Anionen (SCN⁻).

Dimethidaninonen (C(SO₂CF₃)₃⁻) weisen vergleichbare Stabilitäten wie die TFSI-Anionen auf, wegen der deutlich höheren Masse des Anions werden jedoch geringere Leitfähigkeiten erreicht. Die Trifluormethansulfonate (Triflate) und Trifluoracetate weisen trotz leicht höherer Viskositäten erstaunlich hohe Leitfähigkeiten auf mit elektrochemischem Fenster im Bereich der TFSI-Anionen. Neben der Klasse der TFSI-ILs sind diese leicht zugänglich und daher für die Elektrolyte der vorliegenden Erfindung geeignet.

Unter den sogenannten klassischen ionischen Flüssigkeiten versteht man die BF₄- und PF₆-Schmelzen. Diese waren die ersten an Luft handhabbaren ionischen Flüssigkeiten, so dass deren Verwendung trotz ihrer Tendenz in Gegenwart von Wasser HF zu bilden, bis heute recht populär ist. Insbesondere die BF₄-Anionen sind von ihren physikochemischen Werten besonders als Elektrolyte geeignet. Jedoch muss beachtet werden, dass diese Substanzklasse sehr hygroskopisch ist, so dass zum Beispiel [EMIM][BF₄] nur mit höheren Wasserverunreinigungen, die der Batterie-Performance abträglich sein können, zugänglich sind. Ionische Flüssigkeiten mit PF₆-Anionen weisen als Reinsubstanzen zu hohe Viskositäten auf, so dass diese in der Regel nur in Mischungen eingesetzt werden können.

Mit dem Hydrogendifluorid-Anion F(HF)ₙ⁻ können sehr niedrige Viskositäten und hohe Leitfähigkeiten erreicht werden. Da aber zum Beispiel das Ammoniumsalz als stark giftig eingestuft wurde, sollte in diesem Fall auf dessen Verwendung als Basiselektrolyt verzichtet werden.

Bezüglich der Eignung der Elektrolyten aufgrund ihrer Viskosität und Leitfähigkeitswerte lässt sich folgende Reihenfolge bekannter Anionen aufstellen:

F(HF)ₙ⁻ > N(CN)₂⁻ > SCN⁻ > FS⁻I > C(SO₂CF₃)₃⁻ > CF₃SO₃⁻ > BF₄⁻ > CF₃COO⁻ > PF₆⁻

Das Anion der ionischen Flüssigkeit des Elektrolyten ist unteranderen TFSI. Es können auch ionische Flüssigkeitsgemische mit zwar dem selben Kation, aber unterschiedlichen Anionen verwendet werden. Beispielhaft seien PF₆-haltige ionische Flüssigkeitsgemische genannt, da reine PF₆-haltige ionische Flüssigkeiten oft zu hohe Viskositäten aufweisen, wie oben erwähnt.

Die Kationen der ionischen Flüssigkeiten bestimmen nicht in dem Maße, wie die Anionen die Viskosität bzw. die Leitfähigkeit, haben aber einen großen Einfluss auf die elektrochemische Stabilität. Eine Verbindung wird dann als "elektrochemisch stabil" im Sinne dieser Erfindung angesehen, wenn sie bei cyclovoltammetrischen Messungen bei einer vorgegebenen Spannung einen Stromfluss von weniger als 0.1 mA aufweist. Die cyclovoltammetrischen Messungen werden an einem Autolab Potentiostaten PGSTAT30 der Firma Deutsche Metrohm GmbH & Co. KG, Filderstadt durchgeführt. Zur Aufzeichnung der Messwerte dient die Software GPES version 4.9, Eco Chemi B.V. Utrecht, The Netherlands. Für die Messung wurde eine Drei-Elektroden-Anordnung in einer nichtgeteilten Zelle verwendet. Neben einer Platin-Arbeitselektrode (Metrohm, 6.1204.310) wurde als Gegenelektrode eine Aluminiumfolie verwendet. Als Referenzelektrode diente eine Ag/AgCI-Elektrode (Metrohm, 6.0728.010). Die Messungen wurden bei einer Scan-Rate von 10 mV/s unter Argon bei Raumtemperatur durchgeführt.

Unter dem Begriff "elektrochemisches Fenster" wird im Sinne dieser Erfindung der Spannungsbereich verstanden, in dem eine Verbindung, insbesondere eine ionische Flüssigkeit, elektrochemisch stabil ist.

So weisen beispielsweise Pyridinium-basierte ionische Flüssigkeiten nur kleine elektrochemische Fenster auf und sind daher für diese Anwendungen oft nicht geeignet. Phosphoniumverbindungen scheiden in der Regel aufgrund ihrer zu hohen Viskositäten aus. Ammoniumverbindungen weisen ebenfalls recht hohe Viskositäten auf, wobei aber durch gezielte Strukturmodifikationen diese hohen Viskositäten gesenkt werden können. Zum Beispiel kann durch Einbringen eines Hexyl-Substituenten die Viskosität in [Hexlytrimethylammonium][TFSI] auf 82 mPa·s gesenkt werden.

Auch die Einführung von funktionalisierten Alkylketten beispielsweise von Alkoxyalkylsubstituenten kann eine Erniedrigung der Viskosität und damit eine Leitfähigkeitserhöhung bewirken. Ein Belspiel hierfür ist [Diethylmethyl-(2-methoxyethyl)ammonium][TFSI] mit einer Viskosität von ca. 140 mPa·s, einer Leitfähigkeit von 4 mS/cm und einem elektrochemischen Fenster von 5,4 V.

Die cyclischen Ammoniumverbindungen, insbesondere mit Pyrrolidiniumkationen, zeigen teilweise noch niedrigere Viskositäten bei hohen Leitfähigkeiten. Alle Ammoniumverbindungen zeichnen sich durch große elektrochemische Fenster im Bereich von 4,5 bis 5,9 V aus. Dimethylimidazolium basierte ionische Flüssigkeiten sind aufgrund ihrer Viskosität bzw. Leitfähigkeit vorteilhaft, weisen jedoch schlechtere Stabilitäten als die Ammoniumverbindungen auf.

Die Bedeutung der Asymmetrie der Struktur des Kations wird im besonderen an den Imidazolium-basierten ionischen Flüssigkeiten deutlich. So ist beispielsweise [1,3-Dimethylimidazolium][BF₄] eine hochviskose Flüssigkeit, wogegen [1-Ethyl-3-methylimidazolium][BF₄] niedrigviskos vorliegt.

Eine strukturelle Besonderheit der Imidazolium basierten ILs ist, dass sie in der C₂-Position ein CH-acides Wasserstoffatom aufweisen, das zum Beispiel in der Gegenwart von Palladium zur Carbenbildung führen kann. Ähnliches kann auch in elektrochemischen Prozessen stattfinden. Daher werden für die vorliegende Erfindung in C₂-Position alkylierte Varianten elektrochemisch untersucht.

Zusammenfassend kann folgende Reihenfolge bereits bekannter Kationen auf Basis deren physiko-chemischen Eigenschaften aufgestellt werden:

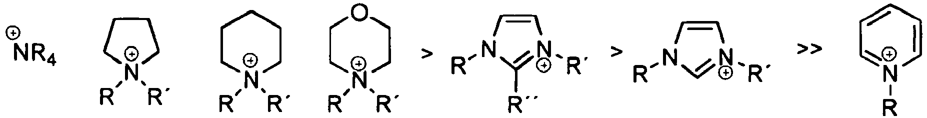

Durch gezieltes Einbringen von funktionalisierten Substituenten lässt sich die Performance der Imidazolium- bzw. der cyclischen Ammoniumkationen weiter verbessern.

Sulfonium-Kationen sind aufgrund ihrer physiko-chemischen Eigenschaften ebenfalls als Elektrolyte geeignet.

Daher kann der Elektrolyt eine 1-Alkoxyalkyl-1-alkylpyrrolidinium-Verbindung als organisches Kation enthalten.

Im Falle der oben genannten Alkylgruppen-haltigen Kationen sind die Alkylreste unabhängig voneinander vorzugsweise ausgewählt aus der Gruppe bestehend aus: a) aliphatischen geradkettigen oder verzweigten Kohlenwasserstoffresten, mit 1-20 Kohlenstoffatomen, die in der Kohlenstoffkette zusätzlich Heteroatome, ausgewählt aus N, S und O, sowie Unsättigungen in Form von einer oder mehrerer Doppel- oder Dreifachbindungen und gegebenenfalls eine oder mehrere funktionelle Gruppen, die ausgewählt sind aus Amino-, Carboxyl-, Acyl-, Hydroxylgruppen, aufweisen können; oder b) cycloaliphatischen Kohlenwasserstoffresten mit 3 bis 20 Kohlenstoffatomen, wobei die cyclischen Reste Ring-Heteroatome, ausgewählt aus N, S und O, sowie Unsättigungen, in Form von einer oder mehrerer Doppel- oder Dreifachbindungen und gegebenenfalls eine oder mehrere funktionelle Gruppen, die ausgewählt sind aus Amino-, Carboxyl-, Acyl-, Hydroxylgruppen, aufweisen können.

Organische Lösemittel weisen häufig ein hohes Lösevermögen für Lithiumleitsalze auf und werden aus diesem Grunde schon seit Jahren in IL-freien Elektrolyten eingesetzt. Unverdünnte ionische Flüssigkeiten sind in den meisten Fällen nur bedingt geeignet für den Einsatz als Elektrolyt. So sind die Viskositäten relativ hoch, was in der Regel eine geringe Grundleitfähigkeit bedingte und zusätzlich die Befüllung der Batterien oder Kondensatoren erschwert. Ursache dafür ist die Bildung von großen Ionen-Clustem in den reinen ionischen Flüssigkeiten. Durch Verdünnung mit einem polaren Lösemittel werden diese Ionenpakete aufgebrochen. Dabei entstehen mehr Ionen mit einer kleineren Masse und somit einer höheren Mobilität. Die durch die Zugabe erreichte niedrigere Viskosität erhöht die Mobilität und somit die Leitfähigkeit zusätzlich. Bei einer weiteren Zugabe werden immer mehr Ionen-Cluster aufgebrochen bis ein Maximum an Leitfähigkeit erreicht wird. Weitere Zugabe führt zur Verdünnung und somit zu einer Abnahme der Leitfähigkeit. Ionische Flüssigkeiten verhalten sich also wie schwache Elektrolyte; der Dissoziationsgrad α wäre ein Maß für die Größe der Ionenpakete.

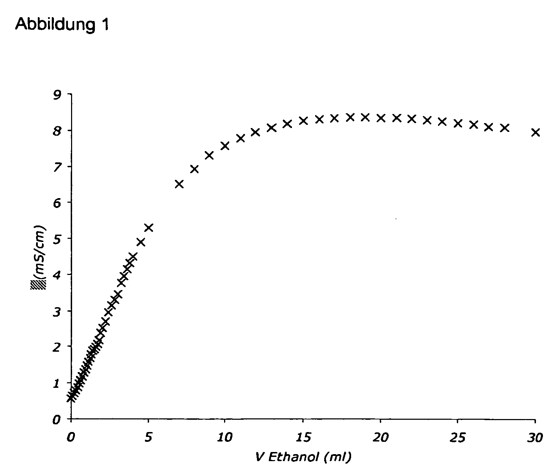

Abbildung 1 zeigt eine typische Kurve für dieses Verhalten, hier die Verdünnung von [EMIM][Diethylphosphat] mit Ethanol. Durch Zugabe eines Lösemittels ist in diesem Fall eine Verbesserung der Leitfähigkeit um einen Faktor von etwa 15 zu beobachten.

In der Erfindung ist das aprotische dipolare Lösungsmittel des Elektrolyten ausgewählt aus der Gruppe, die Ethylencarbonat, Propylencarbonat, Dimethylcarbonat, Dimethylsulfoxid, Aceton, Acetonitril, Dimethylformamid, gamma-Butyrolacton, Dimethoxyethan, Tetrahydrofuran, ein Dialkylcarbonat oder ein Carbonsäureester, umfasst.

In einer weiter bevorzugten Ausführungsform der Erfindung werden Gemische aus mindestens zwei Lösemitteln verwendet. Dabei sollte eine Komponente sehr polar sein, vorzugsweise mit einer Dielektrizitätskonstante >20, wodurch die Bildung kleiner Ionenpakete gefördert wird. Typische Beispiele für sehr polare Lösungsmittel sind Ethylencarbonat, Propylencarbonat, Dimethylformamid, Acetonitril oder gamma-Butyrolacton. Als weiteres Lösungsmittel des Lösungsmittelgemisches wird dann ein sehr niedrig viskoses Lösungsmittel zugesetzt, vorzugsweise mit einer Viskosität von <0,8 mPa·s bei Raumtemperatur, um durch Erniedrigung der Viskosität eine weitere Erhöhung der Leitfähigkeit zu erreichen. Geeignete Niedrigviskoslösungsmittel sind zum Beispiel Ether wie Dimethoxyethan (DME) und Tetrahydrofuran (THF), aber auch Carbonsäureester und Dialkylcarbonate, insbesondere Dimethylcarbonat (DMC).

Eine besonders bevorzugte Lösungsmittelmischung besteht aus Ethylencarbonat und Dimethylcarbonat, vorzugsweise in einem Verhältnis von 50-100 : 50-0, bevorzugt, 60-95 : 40-5, bevorzugter 70-90 : 30-10, am meisten bevorzugt 75-85 : 25-15, zum Beispiel 80:20.

Bezüglich der Menge des in dem erfindungsgemäßen Elektrolyten enthaltenen Lösungsmittels ist zu beachten, dass ein höherer Lösungsmittelanteil im Vergleich zum Anteil der ionischen Flüssigkeit Kostenvorteile bringt, da die ionischen Flüssigkeiten in der Regel viel teurer sind als Lösungsmittel. Darüber hinaus verbessert sich, wie oben gezeigt, die Performance des Elektrolyten mit steigendem Lösungsmittelanteil bis zu einem gewissen Grad, wobei oberhalb eines Grenzwertes die Performance bezüglich der Leitfähigkeit der Zubereitung bei weiterer Lösungsmittelzugabe wieder abnimmt. Mit steigendem Lösungsmittelanteil können weitere Nachteile hinzukommen, so kann etwa die Toxizität der Zubereitung oder deren Entflammbarkeit zunehmen, sofern brennbare oder toxische Lösungsmittel verwendet werden. Es hat sich für die erfindungsgemäßen Elektrolyte gezeigt, dass eine Lösungsmittelmenge von 20 - 60 Vol-%, vorzugsweise 25 - 55 Vol.-% bevorzugter 30 - 50 Vol.-%, den besten Kompromiss aus möglichst hoher Leitfähigkeit, Wirtschaftlichkeit, niedriger Viskosität, geringer Entflammbarkeit und Toxizität darstellt.

Die erfindungsgemäßen Elektrolyte können zur Verbesserung der Performance gegebenenfalls Additive enthalten. Unter Additiven werden hier Zusätze verstanden, welche in relativ kleinen Mengen, üblicherweise bis 5 Gew.-% der Zubereitung zugesetzt werden. Da Lösungsmittel teilweise mit einem wesentlich höheren Anteil eingesetzt werden, fallen diese nicht in die Kategorie der Additive.

Zum Beispiel ist beim Einsatz von Grafitelektroden bekannt, dass diese bei der reversiblen Einlagerung von Lithiumkationen nach mehreren Zyklen immer mehr Schichten verlieren und damit die Lebensdauer dieser Grafitelektroden stark reduziert ist. Ein Grund dieser Zerstörung des Grafits ist die Miteinlagerung von u.a. Lösemittelmolekülen. Diese werden bei den Lade-Entladezyklen in der Elektrode elektrochemisch zersetzt, wodurch die Struktur des Grafits zerstört wird. Verschiedene Additive können durch Bildung einer Schutzschicht auf der Elektrode diese Einlagerungen verhindern. Solange die kleinen Lithiumionen noch durch diese Schicht wandern können, kann die Elektrode weiterhin ihre Funktion erfüllen. Typischerweise werden ungesättigte oder cyclische Verbindungen eingesetzt, da diese eine Polymerschicht bilden können. Beispiele solcher Additivverbindungen sind Acrylnitril, Ethylensulfit oder Vinylencarbonat. Sehr gute Ergebnisse werden zum Beispiel von Zugabe von 2-15 Vol.-%, z.B. 5 Vol.-% Vinylencarbonat erzielt.

Wie aus den vorherigen Erläuterungen ersichtlich wird, können einige Verbindungen in dem erfindungsgemäßen Elektrolyten eine Doppelfunktion ausüben. So kann das bei den Lösemitteln beschriebene Ethylencarbonat auch positive Wirkung im Sinne eines hier beschriebenen Additivs entfalten, während andererseits das bei den Additiven beschriebene Vinylencarbonat auch Lösungsmitteleigenschaften aufweist.

In einer bevorzugten Ausführungsform enthält der erfindungsgemäße Elektrolyt also zusätzlich ein Additiv mit einer polymerisationsfähigen, funktionellen Gruppe. Dabei wird das Additiv vorzugsweise ausgewählt aus der Gruppe, die Acrylnitril, Ethylensulfit, Propansulton, ein organisches Carbonat, vorzugsweise Ethylencarbonat, Vinylencarbonat, Vinylethylencarbonat oder Fluorethylencarbonat, und Sulfonate, umfasst. Auch Mischungen der zuvor genannten Additive können in der erfindungsgemäßen Zubereitung enthalten sein.

Die Menge des Lösungsmittels und gegebenenfalls Additivs wird in der erfindungsgemäßen Zubereitung vorzugsweise so gewählt, dass die Zubereitung einen Flammpunkt von über 150 °C, vorzugsweise über 180 °C und bevorzugter über 200 °C aufweist.

Für bestimmte Anwendungen brancht ein leitsalznicht unbedingt in der erfindungsgemäßen Elektrolyt zubereitung vorhanden zu sein So hat sich gezeigt, dass im Falle von Doppelschichtkondensatoren (electrolytic double layer condensator, EDLC) Leitsalze nicht notwendig sind. Überraschenderweise wurde nämlich gefunden, dass bei der Zugabe von Leitsalz im Falle alkoxysubstituierter Pyrrolidinium-ILs eine erheblich stärkere Absenkung der Leitfähigkeit stattfindet, als dies im Falle der reinen alkylsubstituierten Verbindungen der Fall ist. Da jedoch die alkoxysubstituierten Pyrrolidinium-ILs eine hohe Anfangsleitfähigkeit ohne Leitsalz aufweisen im Vergleich zu z.B. alkylsubstituierter Pyrrolidinium-ILs, sind die ILs mit alkoxysubstituierten Kationen von Vorteil bei Anwendungen im Falle von Doppelschichtkondensatoren, in denen auf den Einsatz von Leitsalz verzichtet wird,

Die ionische Flüssigkeit des erfindungsgemäßen Elektrolyten ist eine 1-Alkoxyalkyl-1-Alkylpyrrolidinium-Verbindung gemäß Anspruch 1.

Des Weiteren hat sich gezeigt, dass die Löslichkeit von Leitsalzen, insbesondere die von LiBOB und Li-Triflat in den jeweiligen ionischen Flüssigkeiten sehr unterschiedlich ist. Insbesondere in den Triflat-Verbindungen, z.B. in dem Pyrrolidimniumtriflat [Py₁₄][OTf], zeigen LiBOB, LiTFSI und Li-Triflat gute Löslichkeiten, während sich LiBOB, LiTFSI und Li-Triflat in den TFSI-basierten ionischen Flüssigkeiten nicht in signifikanter Menge lösen.

Im folgenden werden die Ergebnisse umfangreicher Untersuchungen beschrieben, bei denen insbesondere der Einfluss der Anionen und der Kationen der ionischen Flüssigkeit, der Einfluss des Lösungsmittels, der Lösungsmittelmenge, sowie der Einfluss der Menge und Typs des verwendeten Leitsalzes in dem Stand der Technik gemäßen bzw. erfindungsgemäßen Elektrolyten untersucht wurde.

### 1. Untersuchte ionische Flüssigkeiten (nicht erfindungsgemäß)

Zunächst werden die 7 in Tabelle 1 aufgeführten ILs als Reinstoffe hinischtlich ihrer elektrochemischen Stabilität und ihrer Viskosität charakterisiert. Anschließend wird die Änderung der Viskosität durch die Zugabe von verschiedenen Lösemitteln und Leitsalzen bestimmt. Die bestmögliche Kombination bestehend aus ionischer Flüssigkeit, Li-Salz, organisches Lösemittel und Additiv wird so ermittelt.

**Tabelle 1: untersuchte ILs mit Literaturwerten (Stand der Technik)**

| **IL *** | **Struktur** | **Cond. [ms/cm]** |
|---|---|---|
| [ET3S][TFSI] | 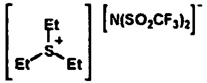 | 6.9 |
| [Py₁₄][TFSI] | 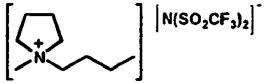 | 2.6 |
| [Py₁₄][OTf] | 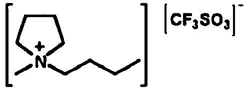 | n.b. |
| [BMIM][OTf] | 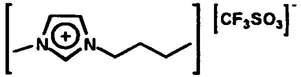 | 2.9 |
| [EdiMIM][TFSI] | 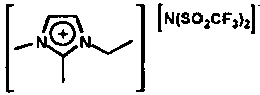 | 3.7 |
| [EMIM][TFSI] | 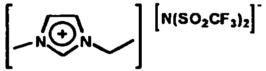 | 8.6 |
| [EMIM][BF₄] | 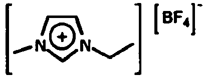 | 14.1 |

| | | |
|---|---|---|
| * nicht erfindungsgemäß | | |

Aufgrund der hohen elektrochemischen Stabilitäten von Pyrrolidinium-basierten ILs scheint [Py14][TFSI] eine vielversprechende IL für die zu untersuchende Applikation zu sein. Allerdings zeigen die vergleichbaren Imidazolium- und Sulfonium-ILs weitaus höhere Leitfähigkeiten. Falls die noch zu untersuchende Stabilität des Sulfonium bzw. des in C2-Position geschützten Imidazols über der des [EMIM]-Kations liegt, wären diese Systeme für die weiteren Anwendungsuntersuchungen zu bevorzugen. Bis dahin sollte das in der Literatur sehr gut untersuchte System [EMIM][TFSI] als Bezugspunkt dienen.

### 2. Charakterisierung der ILs

Basierend auf der getroffenen Auswahl, die in der Tabelle 1 wiedergegeben sind, wurden diese nach ihren Eigenschaften bewertet. Aufgrund der literaturbekannten hohen elektrochemischen Stabilitäten der zyklischen Ammoniumverbindungen und insbesondere Pyrrolidinium basierten ILs sollten diese bevorzugt betrachtet werden. Zur Verifizierung der getroffenen Annahme wurde ein Basisdatensatz an physikochemischen Daten bestimmt. Hierzu wurden die sogenannten Katalogqualitäten weiter aufgereinigt, so dass diese in hochreiner Qualität, wie sie in Tabelle 2 wiedergegeben sind, für die Messungen zur Verfügung stehen. Bis auf [EMIM][BF₄] können alle Produkte in hervorragender Reinheit bereitgestellt werden. [EMIM][BF₄] kann nicht weiter getrocknet werden ohne eine weitere Erhöhung des Fluoridwertes, aufgrund der thermischen Instabilität des BF₄-Anions in Gegenwart von Wasserspuren, zu akzeptieren. Die Verbindung wurde bis zu einem Karl-Fischer-Wert von 414 ppm getrocknet und enthält dann 1067 ppm freies Fluorid. Dieses stellt einen technisch machbaren Kompromiss dar. Alle anderen 6 Verbindungen enthalten neben Resten an freiem Amin nicht mehr als max. 50 ppm an kumulierten Nebenkomponenten wie Wasser und Gesamthalogenid, einschließlich Fluorid.

**Tabelle 2: Reinheiten der untersuchten ILs (Stand der Technik), ILs nicht erfindungsgemäß**

| **IL** | **Struktur** | **Reinheit (HPLC/NMR Assay)** | **H₂O-Gehalt [ppm]** | **Fluorid [ppm]** | **Rest-Halogenid [ppm]** |
|---|---|---|---|---|---|
| [ET3S][TFSI] | 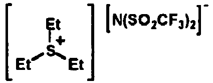 | > 98% | 12 | - | - |
| [Py₁₄][TFSI] | 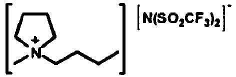 | > 98% | 16 | - | 22 |
| [Py₁₄][OTf] | 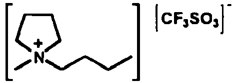 | > 98% | 22 | - | - |
| [BMIM][OTf] | 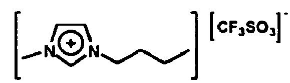 | > 99% | 42 | - | - |
| [EdiMIM][TFSI] | 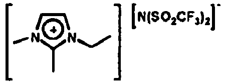 | > 99% | 9 | - | 12 |
| [EMIM][TFSI] | 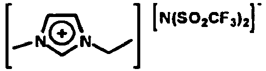 | > 99% | 10 | - | 6 |
| [EMIM][BF₄] | 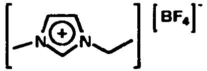 | > 99% | 414 | 1067 | 234 |

| | | | | | |
|---|---|---|---|---|---|
| Ein "-" in Tabelle 2 kennzeichnet einen Wert unterhalb der Nachweisgrenze von 5 ppm. | | | | | |

In der Literatur werden die Reinheiten oft nicht eindeutig ausgewiesen, obwohl Verunreinigungen eine Ursache für verminderte elektrochemische Stabilitäten, veränderten Leitfähigkeiten, etc. sein können. Anders als bei vielen literaturbekannten Werten sind vorliegend die gemessenen und angegebenen physiko-chemischen Daten mit den entsprechenden Reinheiten korreliert.

### 3. Physiko-chemische Werte der ILs (nicht erfindungsgemäß)

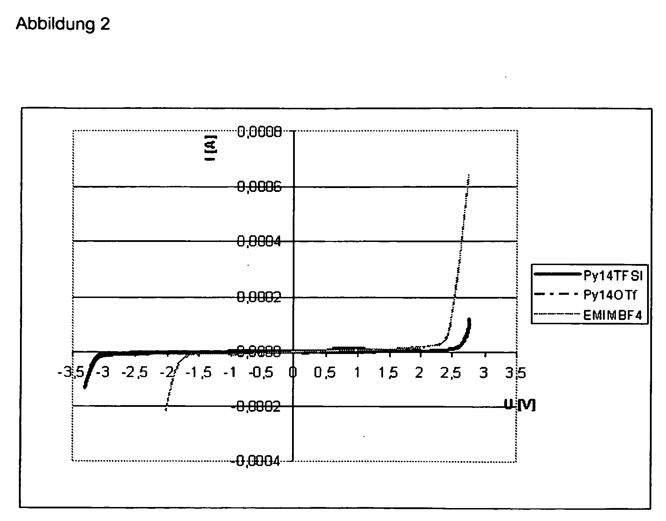

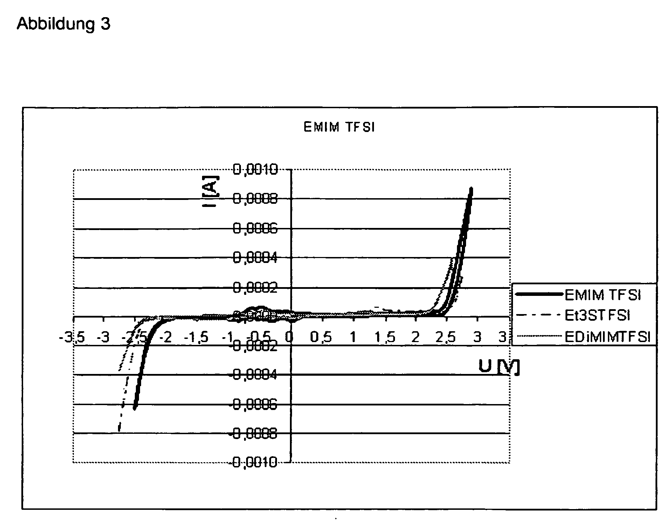

Die in Abbildung 2 und 3 gezeigten Cyclovoltammogramme zeigen die elektrochemische Stabilität. Diese wurden mit einem Potentiostat der Firma METROHM mit der Elektrodenkonfiguration Pt gegen Al mit der Referenzelektrode Ag/AgCl gemessen. Aus der Literatur war bekannt, dass das Pyrrolidinium-Kation mit zu den elektrochemisch stabilsten zählt. N,N-Butyl-methylpyrrolidinium bis(trifluormethansulfonyl)imid ([Py14][TFSI]) und N,N-Butyl-methylpyrrolidinium trifluormethansulfonat ([Py14][OTf]) weisen mit 6,0 V die größten elektrochemischen Fenster der untersuchten ILs auf. Der geringe Unterschied der elektrochemischen Fenster der beiden Pyrrolidinium-Verbindungen ist auf das Anodenpotential der jeweiligen Anionen zurückzuführen. Gegenüber den bereits sehr gut charakterisierten EMIM-Kationen zeigt das in C-2-Position geschützte EDiMIM eine weitaus höhere Stabilität im kathodischen Bereich. Das Fenster beträgt insgesamt 4,9 V gegenüber 4,8 V des [EMIM][TFSI]. Durch Verlängern der Alkylkette am Imidazol kann auch eine leicht höhere Stabilität erreicht werden. Nachteil des Einbringens von weiteren Substituenten bzw. längeren Substituenten ist die Erhöhung der Viskosität und damit auch die Erniedrigung der Leitfähigkeit. Das Triethylsulfonium bis(trifluormethansulfonyl)imid ([ET3S][TFSI] weist ein elektrochemisches Fenster von 5,0 V auf und ist daher stabiler als die zweifach substituierten Imidazole, erreicht aber nicht die Stabilitäten der Ammoniumverbindungen.

Abbildung 2 (Stand der Technik) zeigt die Cyclovoltamogramme von [Py14][TFSI], [Py14][OTf] und [EMIM][BF₄].

Abbildung 3 (Stand der Technik) zeigt die Cyclovoltamogramme von [EMIM][TFSI], [Et3S][TFSI] und [EDiMIM][TFSI].

Die kleinsten elektrochemischen Fenster besitzen die zweifach substituierten Imidazolium-Kationen. Aufgrund der recht hohen Wasserwerte fällt [EMIM][BF₄] gegenüber [EMIM][TFSI] im kathodischen Bereich ab und ist in der Qualität nicht als Elektrolytmaterial geeignet. Daher wird im folgenden nicht weiter auf diese IL eingegangen. Das literaturbekannte und mit am besten für Li-Ionen-Batterien untersuchte [EMIM][TFSI] besitzt ein Fenster von 4,8 V. Legt man nur die elektrochemische Stabilität als Entscheidungskriterium zu Grunde, so sollten Elektrolyte bevorzugt aus zyklischen Ammoniumverbindungen bestehen. Für einen optimalen Elektrolyten ist aber neben der Stabilität eine möglichst hohe Leitfähigkeit von Bedeutung.

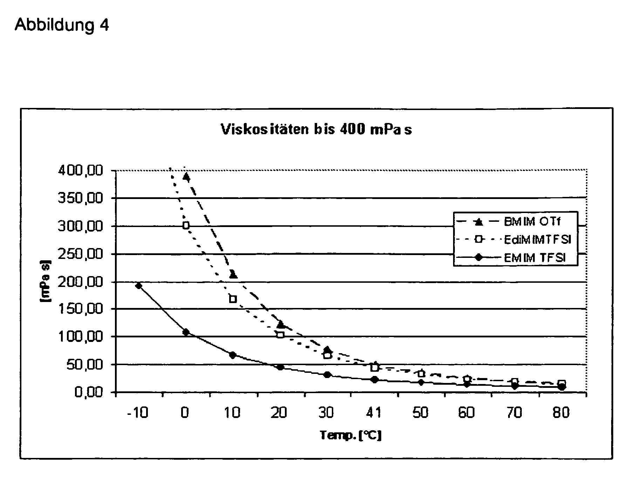

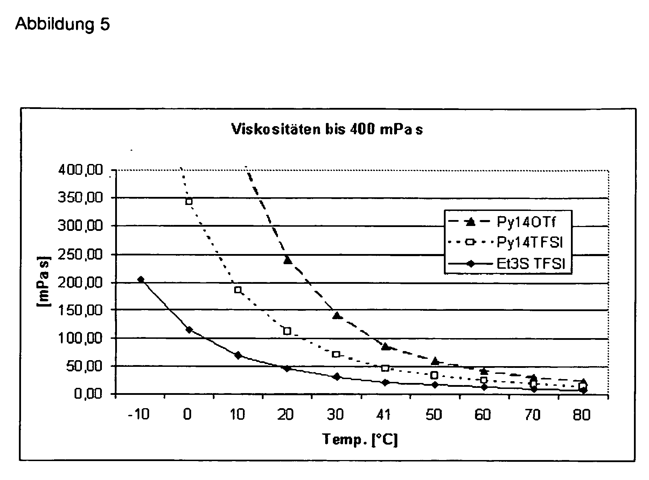

Der Vergleich der gemessenen Viskositäten ist in den Abbildungen 4 und 5 aufgetragen. Durch den Zusatz von niedrig-viskosen Lösungsmitteln kann die Leitfähigkeit unter Umständen erhöht werden. Vom Trend her ist zu erkennen, dass die elektrochemisch stabileren Systeme Pyrrolidinium und dreifach substituierte Imidazolium-Kationen die niedrigsten Leitfähigkeiten und entsprechend höchsten Viskositäten aufweisen.

Abbildung 4 (Stand der Technik) zeigt den Vergleich der Viskositäten im Temperaturbereich von -10 bis 80°C. Siehe auch "Tabelle zu Abbildung 4" im Anhang.

Abbildung 5 (Stand der Technik) zeigt den Vergleich der Viskosität im Temperaturbereich von -10 bis 80°C. Siehe auch "Tabelle zu Abbildung 5" im Anhang.

Die IL [ET3S][TFSI] besitzt eine niedrige Viskosität und eine hohe Leitfähigkeit von 6.02 mS/cm, welches aus den ausgewählten Systemen die dritthöchste darstellt und dabei mit zu den elektrochemisch stabilsten zählt. Daher wird [ET3S][TFSI] neben [Py14][TFSI] im folgenden in den Elektrolyten betrachtet.

Die höchsten Leitfähigkeiten können mit den disubstituierten Imidazoliumkationen bei vergleichbarer Viskosität wie die Sulfoniumverbindungen von 8.17 mS/cm bzw. 9.28 mS/cm erreicht werden. Diese erreichen aber nicht wie vorhergehend ausgeführt die notwendigen elektrochemischen Fenster. In Tabelle 3 sind die physiko-chemischen Werte der ausgewählten reinen ILs zusammenfassend wiedergegeben.

Aus dieser wird deutlich, dass es von Interesse wäre, die Viskosität der elektrochemisch stabilen Pyrrolidinium- bzw. der dreifach substituierten Imidazoliumverbindungen durch synthetische Modifikation am Kation zu neuartigen ILs zu erniedrigen und somit das Eigenschaftsprofil weiter entscheidend zu verbessern.

**Tabelle 3: Untersuchte ILs (Stand der Technik)**

| IL* | Struktur | Reinheit | Viskosität [mPa s], 20°C | Elektrochem. Fenster [V] | Leitfähigkeit [mS/cm] |
|---|---|---|---|---|---|
| [ET3S][TFSI] | 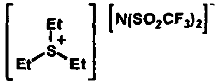 | > 98% | 46,1 | 5.0 | 6.02 |
| [Py₁₄][TFSI] | 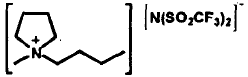 | > 98% | 111,8 | 6.0 | 2.47 |
| [Py₁₄[OTf] | 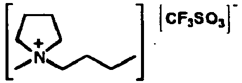 | > 98% | 240,4 | 6.0 | 1.65 |
| [BMIM][OTf] | 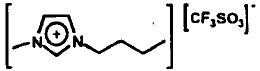 | > 99% | 123,1 | 5.0 | 2.62 |
| [EdiMIM][TFSI] | 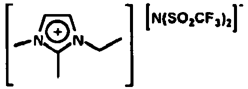 | > 99% | 102, 3 | 4.9 | 3.40 |
| [EMIM][TFSI] | 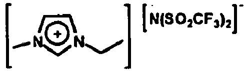 | > 99% | 44,9 | 4.8 | 8.17 |

| | | | | | |
|---|---|---|---|---|---|
| * nicht erfindungsgemäß | | | | | |

### 4. Neuartige ionische Kationenstrukturen

Basierend auf den umfassenden Untersuchungen wird deutlich, dass hinsichtlich der elektrochemischen Stabilität des Kations Ammonium, Sulfonium, Phosphonium gegenüber den aromatischen Imidazolium und Pyridinium zu bevorzugen ist. Unter Berücksichtigung der physiko-chemischen Eigenschaften, insbesondere der Viskosität und der direkt voneinander abhängigen Leitfähigkeit, scheiden PhosphoniumVerbindungen aus. Daher bauen die erfindungsgemäßen Strukturen auf Pyrrolidinium, auf.

Durch das Einbringen von Alkoxyalkyl-Substituenten am Kation wird eine viskositätserniedrigende Wirkung und damit eine Leitfähigkeitserhöhung beobachtet. So weist die Verbindung [Diethylmethyl-(2-methoxyethyl)ammonium][TFSI] Werte von ca. 140 mPa·s, 4 mS/cm und ein elektrochemisches Fenster von 5,9 V auf. Modifiziert man die entsprechenden zyklischen aromatischen bzw. aliphatischen N-Verbindungen, so werden die in unten abgebildeten entsprechenden Alkoxy-substituierten IL-Kationen erhalten:

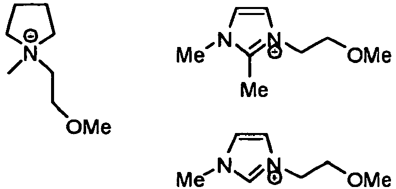

### 5. Synthese der Alkoxysubstituierten ILs

Durch Alkylierung der entsprechenden Aminverbindung mit 2-Methoxyethylchlorid werden die entsprechend substituierten Immidazoliumverbindungen bzw. Pyrrolidiniumverbindungen in moderaten bis sehr guten Ausbeuten erhalten. In der folgenden Abbildung sind die Ausbeuten wiedergegeben:

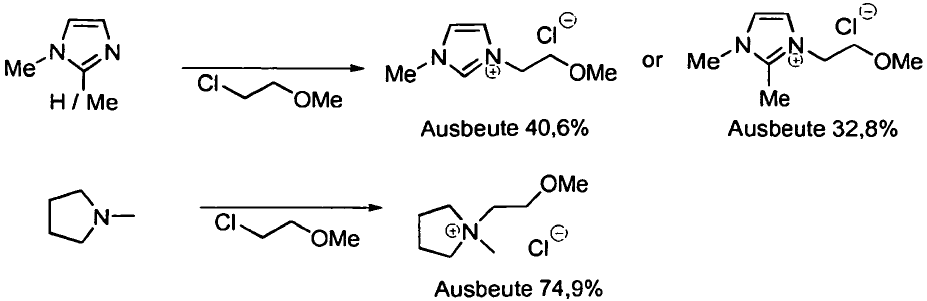

Durch Anionentausch (siehe folgende Abbildung) können verschiedene ILs dargestellt werden. Um eine hochreine Verbindung für elektrochemsiche Anwendungen herzustellen, ist es unabdingbar, dass die erhaltene ionische Flüssigkeit mit Wasser zwei Phasen bildet, damit die sich bildende Salzfracht durch Extraktion auch im technischen Maßstab entfernt werden kann.

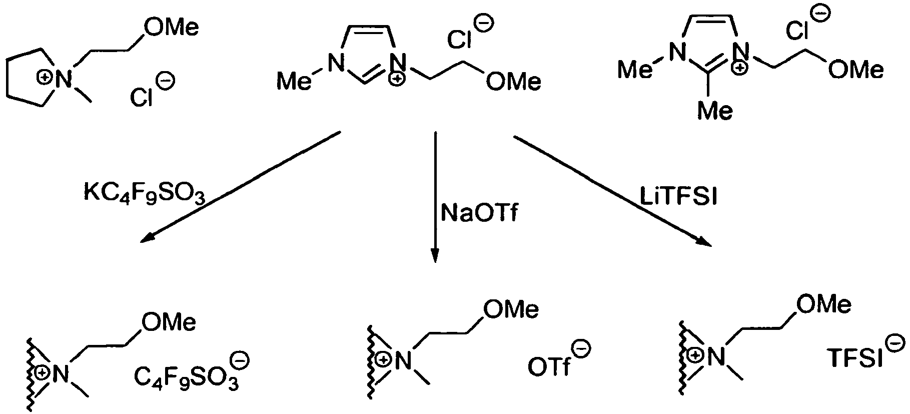

Neben den bereits beschriebenen elektrochemisch sehr interessanten Anionen Triflat (OTf) und TFSI wurde auch Nonafluorbutansulfonat (Nonaflat) eingeführt. Aus den drei unterschiedlichen Chloriden sollten somit neun neue ILs für weitere Charakterisierungen gebildet werden. Der Einfluß der Methoxygruppe bewirkte jedoch eine starke Hydrophilierung der Produkte, so dass die Triflate nur zum Teil in sehr schlechten Ausbeuten von 10% zugänglich waren. Die Nonaflat-Verbindungen wurden mit 50% Verlust, bedingt durch die hohe Querlöslichkeit in die Wasserphase erhalten. Das hydrophobste Anion, TFSI, konnte mit guter Ausbeute von größer 73% in allen Fällen eingeführt werden. Alle erreichten Ergebnisse sind in Tabelle 4 zusammengefasst, wobei die Eintragung in Zeile 3 erfindungsgemäß ist.

Betrachtet man die Gesamtausbeute über die zweistufige Synthese, so wird deutlich, daß insbesondere die Synthese von [(MeOE)MePyyr][TFSI] derzeit technisch sinnvoll möglich ist. Es ist jedoch zu bedenken, dass die einzelnen Reaktionsschritte nicht optimiert wurden und durch geschickte Reaktionsführung bessere Ergebnisse erzielt werden können. Daher wurden alle in ausreichender Menge -bis auf die Triflateerhaltenen Substanzen physiko-chemisch charakterisiert.

**Tabelle 4: Ausbeute der Synthese der Alkoxysubstituierten ILs (erfindungsgemäße IL )**

| | IL | Struktur | Ausbeute 2. Stufe [%] | Gesamtausbeute [%] |
|---|---|---|---|---|
| 1 | [(MeOE)MePyrr][OTf] | 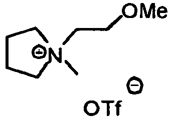 | 10,4 | 7,8 |
| 2 | [(MeOE)MePyrr][Non naflat] | 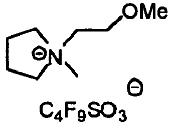 | 49,9 | 37,4 |
| 3 | [(MeOE)MePyrr][TFS I] | 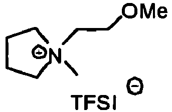 | 77,5 | 58,0 |
| 4 | [(MeOE)MIM][OTf] | 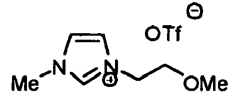 | 0,2 | 0,1 |
| 5 | [(MeOE)MIM][Nonafl at] | 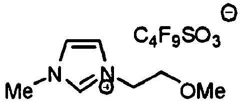 | 47,2 | 19,2 |
| 6 | [(MeOE)MIM][TFSI] | 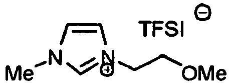 | 76, 5 | 31,1 |
| 7 | [(MeOE)DiMIM][OTf] | 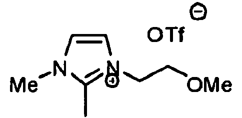 | 2,5 | 0,8 |
| 8 | [(MeOE)DiMIM][Non aflat] | 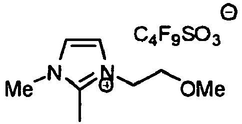 | 71,8 | 23,6 |
| 9 | [(MeOE)DiMIM][TFSI ] | 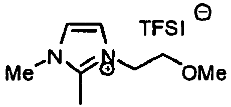 | 73,4 | 24,1 |

### 6. Physiko-chemische Werte der Alkoxysubstituierten ILs

Die Alkoxy-substituierten ILs aus Abschnitt 5 wurden auf ihre Viskosität, Leitfähigkeit und elektrochemische Stabilität hin untersucht. Auf die Messung der Triflate wurde aufgrund der zu geringen Ausbeuten verzichtet. Ebenso wurden [(MeOE)MePyrr][Nonaflat] und [(MeOE)MIM][Nonaflat] nicht untersucht, da diese bei Raumtemperatur fest vorlagen und entsprechend hohe Viskositäten und niedrige Leitfähigkeiten zu erwarten sind, so dass diese für die Anwendung als Elektrolyt nicht geeignet sind.

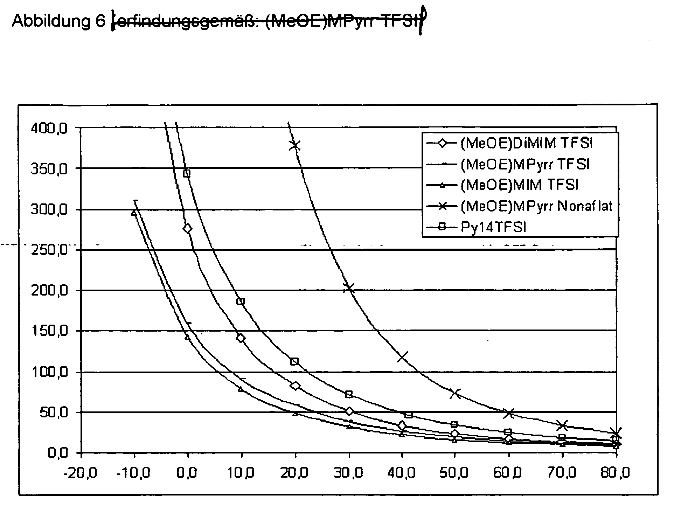

In Abbildung 6 sind die gemessenen Viskositäten von Alkoxysubstituierten ILs und Py14TFSI im Temperaturbereich -10°C bis 80°C dargestellt. Siehe auch "Tabelle zu Abbildung 6" im Anhang.

Durch das Einführen der Methoxyeinheit werden niedrige Viskositäten für die jeweilige Grundstruktur erreicht. [(MeOE)MPyrr][TFSI] und [(MeOE)MIM][TFSI] besitzen eine Viskosität von 58,3 mPa·s bzw. 48,2 mPa s, welche für reine ionische Flüssigkeiten bereits sehr niedrige Viskositäten sind. Einer der bekanntesten niedrig-viskosen ILs ist [EMIM][TFSI] welches mit 44,9 mPa·s im selben Bereich liegt. Im Vergleich zum Butylsubstituenten konnten die Viskositäten halbiert bzw. um ein Viertel erniedrigt werden.

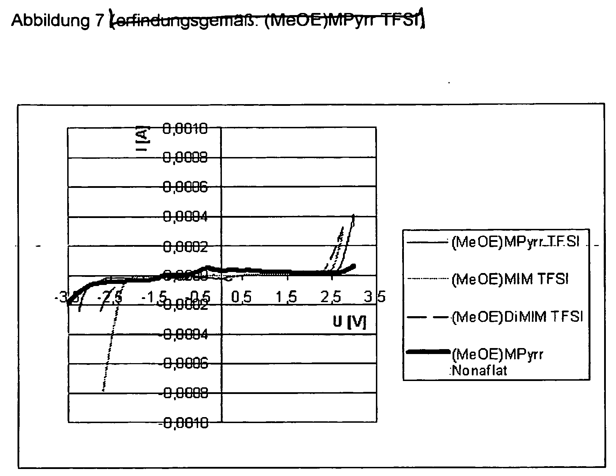

Neben der niedrigen Viskosität und damit verbundenen hohen intrinsischen Leitfähigkeit ist die elektrochemische Stabilität für die Anwendung bedeutsam. Die in Abbildung 7 dargestellen Cyclovoltammogramme verdeutlichen, dass die Methoxyethylsubstituierten Pyrrolidinium-Verbindungen in Analogie zu den Alkyl-substituierten die elektrochemisch stabilsten sind.

Abbildung 7 zeigt Cyclovoltamogramme der Alkoxy-substituierten ILs.

So weist [(MeOE)MPyrr][TFSI] ein Fenster von 5,9 V auf. Etwas geringe Stabilitäten weisen wiederum die 1,2,3-Trialkyl-limidazolium-Kationen auf, diese sind aber etwas stabiler als die in C-2-Position nicht geschützten Imidazolium-Kationen. Von der elektrochemischen Stabilität sind die Alkoxy-substituierten ILs vergleichbar mit den alkylsubstituierten Analogen.

Daher sind die Alkoxypyrrolidiniumverbinungen, unter Berücksichtigung der niedrigen Viskositäten, welches hohe Leitfähigkeiten bedingt, im besonderen Maße für die Anwendung als Elektrolytmaterial geeignet.

### 7. Vergleichsbeispiel: Ionische Flüssigkeit versetzt mit Leitsalz

Ausgehend von [Py₁₄][TFSI], das in elektrochemischen Reinheiten von größer 99% verfügbar ist, wurde dieses mit LiPF₆, LiTFSI, LiBF₄, LiOTf und LiBOB versetzt. Als zweites System wurde die bislang wenig charakterisierte Verbindung [Et3S][TFSI] ausgewählt. Es wurde eine Konzentration von 0,75 Mol/l bezogen auf die ionische Flüssigkeit eingestellt und die Leitfähigkeit der Lösung mittels der Leitfähigkeitselektrode Glas-Platin, der Firma METTLER-TOLEDO (Typ 980-K197120/1m/2x-27.4) gemessen. Es zeigte sich, daß die Leitsalze in der Konzentration von 0,75 Mol/l alle schlecht löslich in [Py₁₄][TFSI] waren, so dass nur für das bestlösliche Leitsalz LiTFSI in dieser Konzentration Formulierungen angesetzt und vermessen wurden.

Für alle Leitsalze wurde daraufhin mit der Konzentration von 0,5 Mol/l gearbeitet. In [Py₁₄][TFSI] löst sich selbst über 24h in gerührtem System LiBOB gar nicht und setzt sich vollständig als Bodensatz ab. LiBF₄ ist ebenso wie LiPF₆ schwerlöslich. Neben dem gut löslichen LiTFSI konnte LiOTf als Suspension eingesetzt werden, das ab einem Zusatz von 6 Gew.-% Dimethoxyethan bzw. 14 Gew.-% gamma-Butyrolacton als klare Formulierung vorliegt.

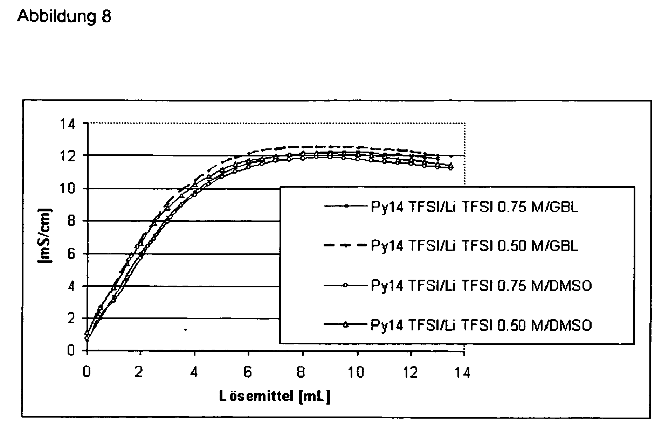

Der Vergleich der für die Formulierung [Py₁₄][TFSI]/LiTFS angesetzten Konzentration von 0,75 und 0,5 Mol/l zeigt, das der Unterschied der Leitfähigkeit beobachtbar ist, aber nicht signifikant ausfällt. Es zeigt sich, dass mit Mischungen der reinen ionischen Flüssigkeit versetzt mit gamma-Butyrolacton bzw. DMSO höhere Leitfähigkeiten erreicht werden, als die mit Leitsalz angesetzten Formulierungen bedingt durch den viskositätserhöhenden Effekt. Der Vergleich der analogen Formulierung mit 0,5 gegenüber 0,75 Mol/l LiTFSI zeigt, dass die 0,5 molare Leitsalzformulierung im Trend 0,3 bis 0,4 mS/cm gegenüber der 0,75 molaren Formulierung leitfähiger ist. So weist das System [Py14][TFSI]/0.5 molar LiTFSI gegenüber [Py₁₄][TFSI]/0.75 molar LiTFSI bei Zugabe von 8 ml gamma-Butyrolacton Leitfähigkeiten von 12,54 bzw. 12,16 mS/cm auf. Abbildung 8 zeigt den Vergleich der Leitsalzkonzentration 0.5 zu 0.75 Molar. Siehe auch "Tabelle zu Abbildung 8" im Anhang.

Daher wurden für die anderen ausgewählten ILs Mischungsreihen mit 0,5 M Lösungen der Li-Leitsalze angefertigt und überprüft, welche Leitsalze für die jeweilige IL am besten geeignet sind. In Abbildung 8 sind die Gemische abgebildet. Im einzelnen werden die im weiteren Verlauf neben dem [Py₁₄][TFSI] verwendeten Systeme diskutiert, die weiteren Systeme sind der Vollständigkeit halber mit aufgeführt.

In [Et₃S][TFSI] löst sich LiTFSI vollständig hingegen LiBF₄, LiOTf und LiPF₆ nur teilweise, LiBOB bildet einen schwerlöslichen Bodensatz.

Entgegen dem [Py₁₄][TFSI] lösen sich in [Py₁₄][OTf] nur durch den Austausch des Anions viele Leitsalze. Es ist die einzige IL in dieser Untersuchungsreihe in der sich LiBOB vollständig löst. LiTFSI, LiBOB und LiOTf bilden in 0,5 M Konzentration klare Lösungen und LiPF₆ sowie LiBF₄ liegen teilweise gelöst vor.

In [(MeOE)MPyrr][TFSI] löst sich neben LiTFSI nur LiBF₄ vollständig. LiPF₆ und LiOTf sind teilweise gelöst und LiBOB fällt wiederum als Feststoff an.

### 8. Vergleichsbeispiel: Elektrolyte auf Basis von (Py₁₄][TFSI] (nicht erfindungsgemäß)

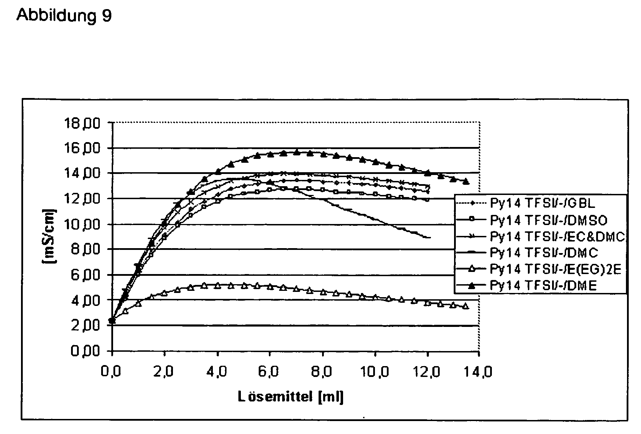

Es wurde reines [Py₁₄][TFSI] sowie mit 0,5 molar LiTFSI und LiOTf angesetzt und mit unterschiedlichen Gehalten an polaren Lösungsmitteln, von 0 bis 13,5 ml Zugabe, versetzt. Als polare Lösungsmittel wurden gamma-Butyrolacton (GBL), DMSO, Ethylencarbonat (EC), Dimethylcarbonat (DMC), Dimethoxyethan (DME) und Diethylenglycoldiethylether (E(EG)2E) eingesetzt. Diese Lösungen wurden auf ihre Leitfähigkeit hin überprüft. Die erhaltenen Ergebnisse der reinen ILs versetzt mit Lösemitteln sind in der Abbildung 9 wiedergegeben.

Abbildung 9 zeigt die Leitfähigkeiten von [Py₁₄][TFSI]-Formulierungen. Siehe auch "Tabelle zu Abbildung 9" im Anhang.

Die Verwendung von Diethylenglycoldiethylether (dies ist vor allem als niedrigviskoses und nicht-giftiges Lösemittel mit hohem Flammpunkt interessant) führt zur signifikant schlechteren Leitfähigkeit bereits der reinen IL, so dass der Einsatz in weiteren Formulierungen als nicht sinnvoll erachtet werden kann. Reines DMC weist eine starke Leitfähigkeitserhöhung auf. So wird bei einem equivalenten Volumenverhältnis bereits die maximale Leitfähigkeit von 13,5 mS/cm erreicht. Das erreichte Maximum fällt gegenüber den anderen Lösungsmitteln jedoch rasch ab, so dass schnell der Verdünnungbereich erreicht wird, bevor alle Ionenpakete aufgebrochen sind. Ursache könnte eine zu geringe Polarität des Lösungsmittels sein, so dass der Viskositätseffekt überwiegt. Der überwiegende Teil der untersuchten polaren Lösungsmittel erreicht ab einem Volumenverhältnis von 1 zu 1,2 bis 1 zu 1,6 den Plateauwert der Leitfähigkeit. Dieser bleibt bis zu einem Verhältnis von 1 zu 2 konstant, bevor durch den Verdünnungseffekt die Leitfähigkeit abnimmt.

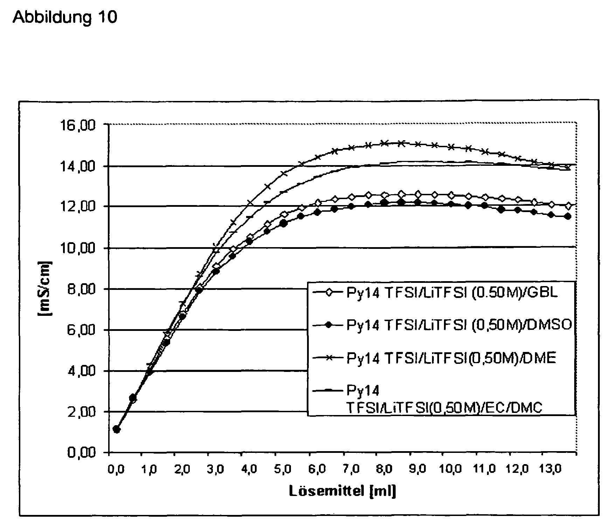

Je nach Polarität des eingesetzten Lösungsmittels werden die Ionenpakete unterschiedlich stark aufgebrochen, so dass die Leitfähigkeitserhöhung stärker ausgeprägt sein kann. In Abbildung 10 sind die leitfähigsten Kombinationen mit LiTFSI-Salz wiedergegeben.

Abbildung 10 zeigt die Leitfähigkeiten von [Py₁₄][TFSI]/LiTFSI-Formulierungen. Siehe auch "Tabelle zu Abbildung 10" im Anhang.

Die Kombination von [Py₁₄][TFSI]/LiTFSI mit DME zeigt die höchste Leitfähigkeitserhöhung um den Faktor 13,5 auf 15,09 mS/cm, obwohl die Polarität von DME niedriger als die von allen anderen untersuchten Lösemitteln ist. Auch der lang anhaltende Plateauwert bestätigt dies. Reines [Py₁₄][TFSI] verhält sich mit DME analog. Nur aufgrund der niedrigeren Anfangsviskosität wird rascher der Maximalwert von 15,66 mS/cm (Faktor 6,4) erreicht.

Mit der Kombination EC/DMC (70:30 v/v) können Leitfähigkeiten von 14,18 mS/cm erreicht werden. Gegenüber den beiden erstgenannten fallen gamma-Butyrolacton mit 12,54 mS/cm und DMSO mit 11,91 bereits deutlich ab.

Im Hinblick auf die mögliche Brennbarkeit des Elektrolyten wäre es wünschenswert, wenn dieser nicht mehr als 30 % organisches Lösemittel enthielte. Um maximale Leitfähigkeitswerte zu erreichen, enthalten aber alle untersuchten [Py₁₄][TFSI]/LiTFSI-Formulierungen 50 bis 60 % Lösemittel. Nimmt man die 30%-Marke als Lösemittelgrenzwert und betrachtet dort die Leitfähigkeiten, so ist der Unterschied zwischen den Formulierungen nicht so signifikant. DME bzw. EC/DMC (70:30 v/v) weisen identische Werte von 7,33 mS/cm und GBL 6,8 mS/cm auf. Bei 30 % Lösemittelzusatz wirkt sich die Ausgangsleitfähigkeit stärker aus, d.h. je höher die Ausgangsleitfähigkeit bzw. je niedriger die Viskosität der Formulierung ohne Lösemittelzusatz ist, desto höhere Leitfähigkeiten können im nicht idealen Bereich durch höhere Ionenbeweglichkeit erreicht werden.

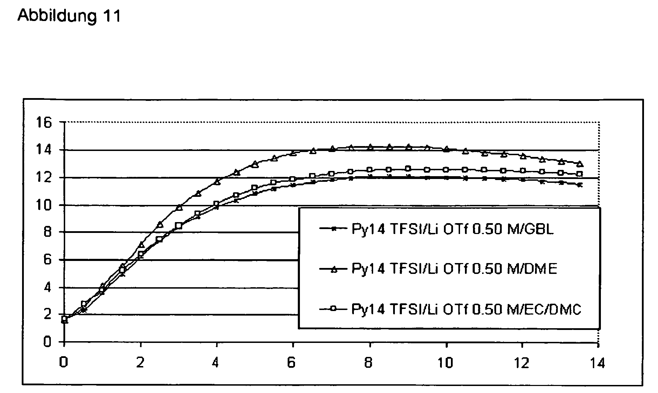

Neben den LiTFSI-Salzen wurden auch Suspensionen mit LiOTf untersucht. In Abbildung 11 sind die Leitfähigkeiten der Formulierung mit 0,5 molaren LiOTf-Lösungen mit DME und EC/DMC (70:30 v/v) sowie GBL wiedergegeben.

Abbildung 11 zeigt die Leitfähigkeiten von [Py₁₄][TFSI]/LiOTf-Formulierungen.Siehe auch "Tabelle zu Abbildung 11" im Anhang.

In Analogie zu den erhaltenen Ergebnissen mit LiTFSI ergibt sich für die Formulierung [Py₁₄][TFSI]/LiOTf mit DME die höchsten Leitfähigkeit von 14,25 mS/cm. Mit EC/DMC (70:30 v/v) können nur deutlich geringere maximale Leitfähigkeiten von 12,62 mS/cm erhalten werden. Für GBL ist der Kurvenverlauf flacher und die Maximalwerte liegen mit 12,07 mS/cm weit unter denen von DME.

### 9. Vergleichsbeispiel: Elektrolyte auf Basis von [Py₁₄][OTf] (nicht erfindungsgemäß)

Obwohl [Py₁₄][OTf] eine recht hohe Viskosität von 111,8 mPa s (20°C) aufweist, wurde diese IL weiter untersucht, da es zum einen auf Basis einer wirtschaftlich interessanten Kostenstruktur darstellbar ist und zum anderen als einzige der untersuchten ILs eine hervorragende Löslichkeit für LiBOB aufweist. Die hohe Viskosität zeigt sich auch in der gemessenen Leitfähigkeit von 1.7 mS/cm ohne Lösemittelzusatz. Jedoch können durch die Zugabe von EC/DMC (70:30 v/v) erstaunlicherweise sogar um 1,5 mS/cm höhere Leitfähigkeiten als im System [Py₁₄][TFSI]/EC/DMC (70:30 v/v) erreicht werden. Allerdings müssen dazu bis zu zwei Äquivalente an EC/DMC (70:30 v/v) zugesetzt werden.

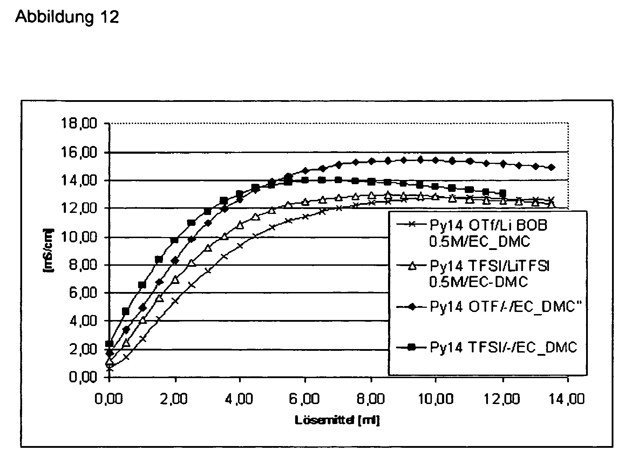

Abbildung 12 zeigt Leitfähigkeiten von [Py₁₄][OTf]-Formulierungen im Vergleich zu [Py14][TFSI]-Formulierungen. Siehe auch "Tabelle zu Abbildung 12" im Anhang.

Mit Zusatz an LiBOB als Leitsalz verstärkt sich der Viskositätseffekt, jedoch können trotz niedriger Anfangsleitfähigkeit die Werte von [Py₁₄][TFSI]/LiTFSI erreicht und sogar bei hohem Lösemittelanteil überschritten werden.

### 10. Beispiel: Elektrolyte auf Basis von [(MeOE)MPy][TFSI]

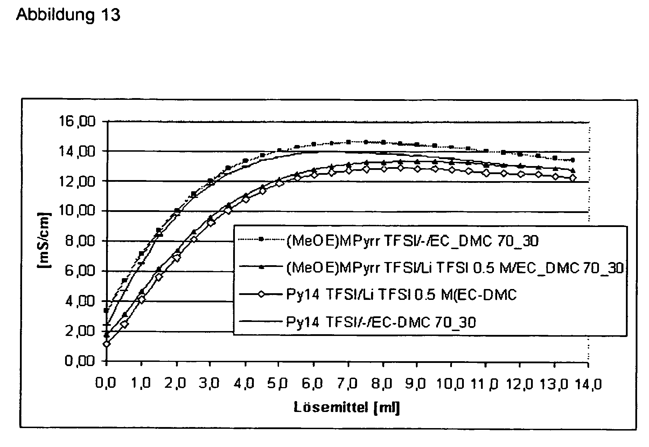

Die Ausgangsleitfähigkeit der reinen IL [(MeOE)MPy][TFSI] beträgt 3,39 mS/cm und ist gegenüber der Alkylvariante [Py14][TFSI] um 1 mS/cm erhöht. In Abbildung 13 ist der Leitfähigkeitsverlauf bei Zugabe von EC/DMC (70:30 v/v) mit und ohne Leitsalzzugabe wiedergegeben.

Abbildung 13 zeigt die Leitfähigkeiten von [(MeOE)MPy][TFSI]-Formulierungen. Siehe auch "Tabelle zu Abbildung 13" im Anhang.

Erstaunlicherweise ist die Leitfähigkeitsemiedrigung bei Zugabe von LiTFSI-Leitsalz im Falle von [(MeOE)MPy][TFSI] um 0,5 mS/cm ausgeprägter als bei [Py₁₄][TFSI], so dass der erreichte Effekt durch die Viskositätserniedrigung in der Zubereitung mit Leitsalz nicht wie erwartet ausfällt. Der Verlauf der Leitfähigkeit entspricht dem der bereits in Abbildung 10 für die [Py₁₄][TFSI]-Verbindung diskutierten. Die erreichten Werte sind jedoch um 0,5 mS/cm erhöht. Der Maximalwert wird bei 13,36 mS/cm erreicht. Es zeigt also, das durch weitere Funktionalisierung der Seitenketten die Leitfähigkeit erhöht werden kann.

Der erfindungsgemäße Elektrolyt ist in besonderen Ausfürungsformen der erfindung die ionische Flüssigkeit die Pyrrolidinium-Verbindung [(MeOE)MePyrr][TFSI], wobei diese DMC, DME oder EC/DMC, vorzugsweise im Verhältnis im Bereich von 60-100 zu 40-0, als Lösungsmittel enthält.

### 11. Vergleichsbeispiel: Elektrolyte auf Basis von [Et₃S][TFSI]

[Et3S][TFSI] ist eines der, wie in den vorherigen Kapitel gezeigt, niedrigst-viskosen nicht protischen ILs. Die Ausgangsleitfähigkeit dieser Verbindung bei Zugabe von 0.5 M LiTFSI-Leitsalz beträgt 3,34 mS/cm und ist dreimal so hoch wie die der [Py14][TFSI] Verbindungen.

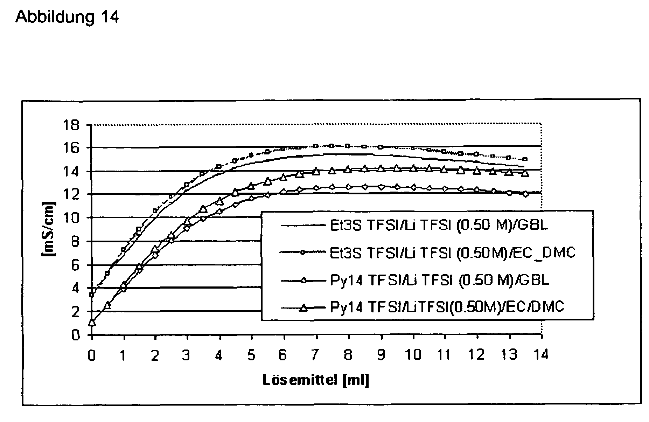

Abbildung 14 zeigt die Leitfähigkeiten von [Et₃S][TFSI]-Formulierungen. Siehe auch "Tabelle zu Abbildung 14" im Anhang.

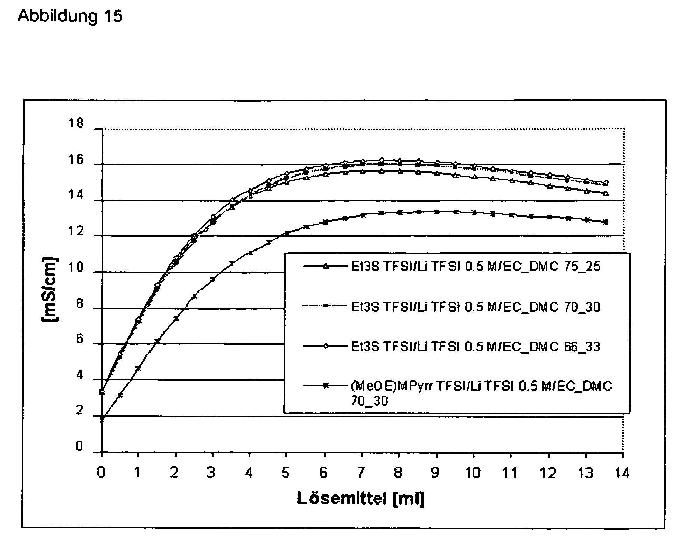

Im Gemisch mit 0,5 M LiTFSI wird bei Zugabe von 7,5 ml EC/DMC (70:30 v/v) die höchste Leitfähigkeit aller untersuchten Elektrolyte von 16,04 mS/cm erreicht. Bereits bei 30 % Lösemittelzugabe, welches dem 3 ml Wert entspricht, wird eine Leitfähigkeit von 12,77 mS/cm erhalten.
Um die hohe Leitfähigkeit noch weiter zu verbessern, wurde das Verhältnis von EC zu DMC optimiert. Für die Polarität des Gemisches ist ein möglichst hoher EC-Anteil notwendig. Zuerst wurde der EC-Anteil auf 75 %erhöht, d.h. der DC-Anteil betrug 25 %. Es zeigte sich, dass ab einer Restkonzentration von kleiner 25 % DMC erste Kristallbildung des Leitsalzes im Elektrolyten zu beobachten war, so dass die Konzentration an EC nicht weiter erhöht wurde. Aus Abbildung 15 wird deutlich, dass die Zunahme an EC eine Verringerung der maximalen Leitfähigkeit gegenüber dem bereits in Abbildung 14 gezeigten System bewirkt. Erhöht man den DMC-Anteil, so erhöht sich auch die maximale Leitfähigkeit. Vorteil eines höheren EC-Anteils ist jedoch eine verringerte Entflammbarkeit, da DMC einen niedrigeren Flammpunkt aufweist als EC.

Die Varianz des Lösemittels hat aber nur geringe Auswirkungen auf die Leitfähigkeit, solange im Bereich bis 30 %-Lösemittelanteil im Elektrolyten gearbeitet wird. Der Unterschied beträgt bei 3 ml Lösemittelzugabe lediglich 0,4 mS/cm im Maximum und ist somit zu vernachlässigen.

Abbildung 15 zeigt die Optimierung des [Et₃S][TFSI]-Elektrolyten. Siehe auch "Tabelle zu Abbildung 15" im Anhang.

Für [Et₃S][TFSI] können bei nur geringer Lösemittelzugabe von EC/DMC im Verhältnis von 66:33 hohe Leitfähigkeiten, selbst bei Zugaben von nur 30 %, erreicht werden.

### 12. Flammpunkte von IL-basierten Zubereitungen

Um Aussagen über die Entflammbarkeit der Zubereitungen zu machen, wurden von den in Tabelle 5 gezeigten Zubereitungen der Flammpunkt gemäß DIN ISO 2592 bestimmt:

**Tabelle 5: Flammpunkte ausgesuchter Elektrolyte.**

| | Flammpunkt |
|---|---|
| (MeOE)MPyr TFSI (reine IL) | 358 °C |
| (MeOE)MPyr TFSI/EC = 70 : 30 v/v | 174 °C |
| (MeOE)MPyr TFSI/DMC_EC = 70 : 30 v/v (DMC/EC = 30:70 v/v) | 62 °C |

### 13.

Ausgehend von einer umfassenden Literaturrecherche der primären und sekundären Literatur wurden die in Tabelle 6 dargestellten ILs als Elektrolyte für die Li-Ionen-Batterie untersucht.

**Tabelle 6: Untersuchte ILs (nicht erfindungsgemäß)**

| IL | Struktur | Reinheit | Viskosität [mPa s], 20°C | Elektrochemisches Fenster [V] | Leitfähigkeit [mS/cm] |
|---|---|---|---|---|---|
| [ET3S][TFSI] | 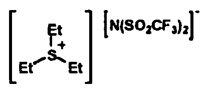 | > 98% | 46,1 | 5.0 | 6.02 |
| [Py14][TFSI] | 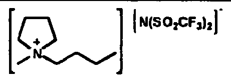 | > 98% | 111,8 | 6.0 | 2.47 |
| [Py₁₄][OTf] | 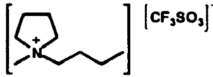 | > 98% | 240,4 | 6.0 | 1.65 |
| [BMIM][OTf] | 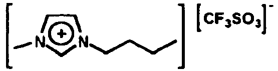 | > 99% | 123,1 | 5.0 | 2.62 |
| [EdiMIM][TFSI] | 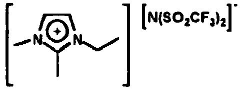 | > 99% | 102,3 | 4.9 | 3.40 |
| [EMIM][TFSI] | 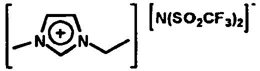 | > 99% | 44,9 | 4.8 | 8.17 |
| [EMIM][BF₄] | 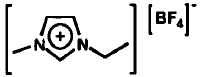 | > 99% | 92,1 | 4.4 | 9.28 |

Diese ILs wurden hinsichtlich ihrer Reinheit optimiert und deren physiko-chemischen Kenndaten aus dem hochreinen Material (Wassergehalt kleiner 20ppm; Halogenidgehalt kleiner 50ppm sowie Assay größer 99%) ermittelt, die ebenfalls in Tabelle 6 angeben sind.

Aus den Ergebissen und der Korrelation mit der Literatur kann die folgende Reihenfolge der Anionen in Bezug auf ihre elektrochemische Eignung aufgestellt werden:

FSI > TFSI > C(SO₂CF₃)₃ > CF₃SO₃ > BF₄ > CF₃COO > PF₆

Für die Kationen ist vor allem die elektrochemische Stabilität in der hier wiedergegebenen Reihenfolge ausschlaggebend:

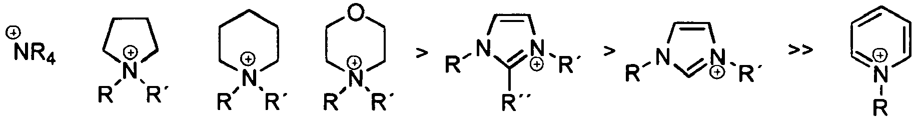

Durch geschicktes Design des Kations können die sehr stabilien nicht-aromatischen Ammoniumverbindungen auch niedrigviskos erhalten werden, so dass aus ihnen interessante Elektrolyte formuliert werden können. Dieser Weg wurde bei der Synthese neuartiger ionischer Flüssigkeiten als Elektrolytmaterial beschritten. Wie im Folgenden gezeigt, konnte die Verbindung [N-Methoxyethyl-N-methylpyrrolidinium][TFSI] in guter Ausbeute von 58 % über zwei Stufen erhalten werden:

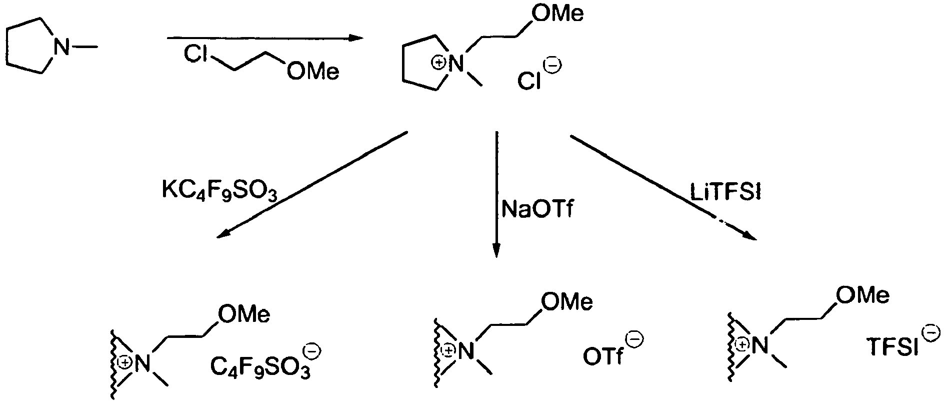

Deren Viskosität konnte gegenüber der Alkylpyrrolidiniumverbindung auf 58 mPa s halbiert werden, so dass der Bereich der Viskositäten von den niedrigstviskosen ILs erreicht werden konnte. Dabei werden aber die gleichen hervorragenden elektrochemischen Stabilitäten der Pyrrolidiniumverbindungen mit Fenstern von 6,0 V erzielt.

Neben den bisher beschriebenen Verbindungen wurde [N-Methoxyethyl-N-methylpyrrolidinium][TFSI] für die weiterführenden Formulierungsversuche ausgewählt. Die Untersuchung des Mischungsverhaltens der Leitsalze (verwendet wurden LiTFSI, LIBOB, LiOTf, LiBF₄, LiPF₆) zeigte, dass in der ursprünglich geplanten Konzentration von 0,75 M diese Lithiumsalze zumeist unlöslich waren. Daraufhin wurden alle Versuche mit 0,5 M Leitsalz durchgeführt. Vergleichende Leitfähigkeitsmessungen mit beiden Konzentrationen in der Formulierung [Py₁₄][TFSI]/0.5 M LiTFSI bzw. 0,75 M LiTFSI in DMSO zeigen Leitfähigkeitswerte die näherungsweise vergleichbar sind.

**Tabelle 7: Mischbarkeit mit Li-Leitsalzen**

| IL | LiTFSI | LiOTf | LiBF4 | LiPF6 | LiBOB |
|---|---|---|---|---|---|
| [ET3S][TFSI] | ++ | +/- | + | + | - |
| [Py₁₄][TFSI] | ++ | +/- | - | - | - |
| [Py₁₄][OTf] | ++ | ++ | +/- | +/- | ++ |
| [(MeOE)MPyr][TFSI] | ++ | +/- | ++ | +/- | - |
| [BMIM][OTf] | - | +/- | - | - | +/- |
| [EdiMIM][TFSI] | ++ | - | ++ | - | - |
| [EMIM][TFSI] | ++ | - | ++ | - | - |
| [EMIM][BF₄] | ++ | - | + | + | - |

In Tabelle 7 ist das Mischungsverhalten der untersuchten Elektrolyte wiedergegeben. Aufgrund ihres Mischungsverhaltens sowie der überragenden physiko-chemischen Kenndaten wurden [Py₁₄][TFSI], [Et₃S][TFSI] und [(MeOE)MPyrr][TFSI] als IL ausgewählt. Abweichend wurde trotz seiner sehr hohen Viskosität [Py₁₄][OTf] ebenfalls betrachtet, da dies die einzige aller untersuchten ILs ist, die eine gute Löslichkeit für das Leitsalz LiBOB zeigte. Die meisten Leitsalze lösen sich in diesem Elektrolyten, so dass diese auch als Lösungsvermittler eingesetzt werden könnte. Darüber hinaus ist [Py₁₄][OTf] zu wesentlich geringeren Herstellkosten verfügbar.

Neben Dimethoxyethan hat sich vor allem das Gemisch Ethylencarbonat/Dimethylcarbonat im Verhältnis 70 zu 30 als ideales Lösemittel für auf ionischen Flüssigkeiten basierenden Elektrolyte gezeigt.

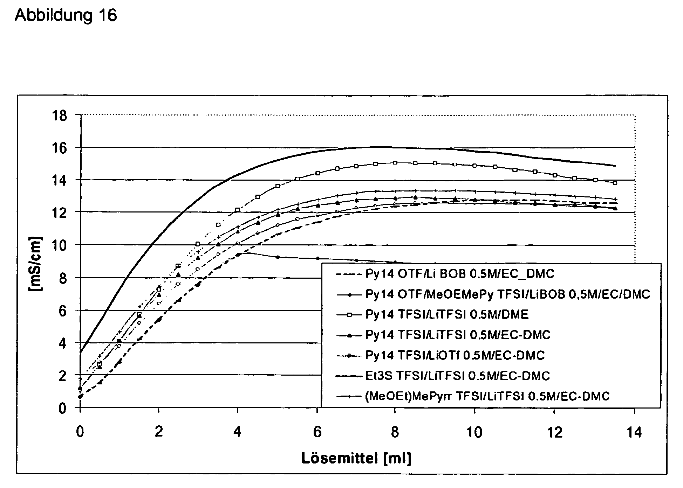

Abbildung 16 zeigt die Leitfähigkeiten der Elektrolyte. Siehe auch "Tabelle zu Abbildung 16" im Anhang.

Im Gemisch mit 0,5 M LiTFSI werden mit [Et₃S][TFSI] bei Zugabe von 7,5 ml EC/DMC die höchsten Leitfähigkeiten aller in diesem Projekt untersuchten Elektrolytlösungen von 16,04 mS/cm erreicht. Bereits bei 30% Lösemittelzugabe welches dem 3 ml Wert entspricht, wird eine Leitfähigkeit von 12,77 mS/cm erhalten. Dies ist im Hinblick auf einen möglichst hohen Flammpunkt, der einen niedrigen Lösemittelanteil bedingt, von großer Bedeutung. Um die hohe Leitfähigkeit noch weiter zu verbessern, wurde das Verhältnis von EC zu DMC optimiert, als ideales Verhältnis stellte sich 66 zu 33 heraus. Mit diesem Elektrolyten sind die höchsten Leitfähigkeiten aller untersuchten Elektrolyte erreichbar. Da eine elektrochemische Stabilität von 5.0 V hinreichend ist, ist [Et₃S][TFSI] das Elektrolytmaterial der Wahl.

Für eine noch höhere elektrochemische Stabilität sind die untersuchten Pyrrolidiniumverbindungen geeignet. Insbesondere [Py₁₄][TFSI] weist aufgrund seiner geringeren Viskosität und der damit korrelierenden höheren Basisleitfähigkeit höhere Leitfähigkeiten als das entsprechende [Py₁₄][OTf] auf. Versuche, die Viskosität mit dem Additiv [(MeOE)MPyr][TFSI] zu reduzieren, waren erfolgreich, jedoch die Auswirkung auf die Leitfähigkeit nur marginal. Die Verwendung von [(MeOE)MPyr][TFSI] als reines Elektrolytmaterial führte zu Werten die um 0,5 mS/cm gegenüber [Py₁₄][TFSI] erhöht sind.

[Py₁₄][OTf] ist ein sehr stabiles und kostenattraktives Elektrolytmaterial, das jedoch nicht die Leitfähigkeiten des [Et₃S][TFSI]-Materials erreicht. In dem meistens verwendeten Elektrolytengemisch, d.h. ca. 30% Lösemittelanteil z.B. an EC/DMC, ist jedoch der Unterschied zwischen [Py₁₄][OTf] und [Py₁₄][TFSI] nicht signifikant.

### Tabellenanhang:

**Tabelle zu Abbildung 2:**

| Py14TFSI | | Py14OTf | | EMIM BF4 | |
|---|---|---|---|---|---|
| U [V] | I [A] | U [V] | I [A] | U [V] | I [A] |
| 2,76 | 1,20E-04 | 2,77 | 7,32E-05 | 2,75 | 6,39E-04 |
| 2,735 | 7,20E-05 | 2,745 | 5,55E-05 | 2,726 | 5,74E-04 |
| 2,711 | 5,48E-05 | 2,721 | 4,43E-05 | 2,701 | 5,13E-04 |
| 2,686 | 4,14E-05 | 2,696 | 3,57E-05 | 2,677 | 4,57E-04 |
| 2,662 | 3,15E-05 | 2,672 | 2,90E-05 | 2,652 | 4.03E-04 |
| 2,638 | 2,43E-05 | 2,647 | 2,36E-05 | 2,628 | 3,52E-04 |
| 2,613 | 1,94E-05 | 2,623 | 1,92E-05 | 2,603 | 3,03E-04 |
| 2,564 | 1,38E-05 | 2,599 | 1,57E-05 | 2,579 | 2.57E-04 |
| 2,54 | 1,22E-05 | 2,574 | 1,28E-05 | 2,555 | 2,13E-04 |
| 2,516 | 1,10E-05 | 2,55 | 1,05E-05 | 2,53 | 1,72E-04 |
| 2,491 | 1,00E-05 | 2,525 | 8,60E-06 | 2,506 | 1,35E-04 |
| 2,467 | 9,30E-06 | 2,501 | 7,10E-06 | 2,481 | 1,03E-04 |
| 2,442 | 8,66E-06 | 2,477 | 5,94E-06 | 2,457 | 7,62E-05 |
| 2,418 | 8,12E-06 | 2,452 | 5,05E-06 | 2,433 | 5,64E-05 |
| 2,393 | 7,65E-06 | 2,428 | 4,37E-06 | 2,408 | 4,32E-05 |
| 2,369 | 7,22E-06 | 2,403 | 3,86E-06 | 2,384 | 3,54E-05 |
| 2,345 | 6,83E-06 | 2,379 | 3,46E-06 | 2,359 | 3,10E-05 |
| 2,32 | 6,47E-06 | 2,354 | 3,16E-06 | 2,335 | 2,78E-05 |
| 2,271 | 5,84E-06 | 2,33 | 2,91E-06 | 2,31 | 2,52E-05 |
| 2,247 | 5,56E-06 | 2,306 | 2,71E-06 | 2,286 | 2,31E-05 |
| 2,223 | 5,31E-06 | 2,281 | 2,54E-06 | 2,262 | 2,17E-05 |
| 2,198 | 5,07E-06 | 2,257 | 2,39E-06 | 2,237 | 2,06E-05 |
| 2,174 | 4,86E-06 | 2,232 | 2,26E-06 | 2,213 | 1,97E-05 |
| 2,149 | 4,65E-06 | 2,208 | 2,14E-06 | 2,188 | 1,91E-05 |
| 2,125 | 4,46E-06 | 2,184 | 2,03E-06 | 2,164 | 1,88E-05 |
| 2,101 | 4,28E-06 | 2,159 | 1,93E-06 | 2,14 | 1,82E-05 |
| 2,076 | 4,11E-06 | 2,135 | 1,84E-06 | 2,115 | 1,75E-05 |
| 2,052 | 3,95E-06 | 2,11 | 1,76E-06 | 2,091 | 1,67E-05 |
| 2,027 | 3,81E-06 | 2,086 | 1,68E-06 | 2,066 | 1,60E-05 |
| 2,003 | 3,67E-06 | 2,061 | 1,60E-06 | 2,042 | 1,54E-05 |
| 1,978 | 3,54E-06 | 2,037 | 1,53E-06 | 2,018 | 1,48E-05 |
| 1,954 | 3,41E-06 | 2,013 | 1,46E-06 | 1,993 | 1,43E-05 |
| 1,93 | 3,29E-06 | 1,988 | 1,40E-06 | 1,969 | 1,39E-05 |
| 1,905 | 3,17E-06 | 1,964 | 1,33E-06 | 1,944 | 1,34E-05 |
| 1,881 | 3,06E-06 | 1,939 | 1,27E-06 | 1,92 | 1,31E-05 |
| 1,856 | 2,95E-06 | 1,915 | 1,22E-06 | 1,895 | 1,27E-05 |
| 1,832 | 2,85E-06 | 1,891 | 1,16E-06 | 1,871 | 1,24E-05 |
| 1,637 | 2,14E-06 | 1,866 | 1,11E-06 | 1,847 | 1,21E-05 |
| 1,612 | 2,06E-06 | 1,842 | 1,05E-06 | 1,822 | 1,18E-05 |
| 1,568 | 1,92E-06 | 1,817 | 1,00E-06 | 1,627 | 9,60E-06 |
| 1,522 | 1,76E-06 | 1,793 | 9.55E-07 | 1,602 | 9,36E-06 |
| 1,478 | 1,61E-06 | 1,768 | 9,08E-07 | 1,559 | 8,92E-06 |
| 1,436 | 1,46E-06 | 1,744 | 8,62E-07 | 1,522 | 8,60E-06 |
| 1,395 | 1,33E-06 | 1,72 | 8,19E-07 | 1,485 | 8,12E-06 |
| 1,344 | 1,18E-06 | 1,695 | 7,76E-07 | 1,449 | 7,75E-06 |
| 1,3 | 1,07E-06 | 1,671 | 7,34E-07 | 1,412 | 7,46E-06 |
| 1,263 | 9,85E-07 | 1,646 | 6,93E-07 | 1,375 | 7,23E-06 |
| 1,219 | 8,83E-07 | 1,622 | 6,53E-07 | 1,339 | 6,81E-06 |
| 1,163 | 7,46E-07 | 1,598 | 6,14E-07 | 1,302 | 6,56E-06 |
| 1,122 | 6,37E-07 | 1,573 | 5,76E-07 | 1,266 | 6,34E-06 |
| 1,08 | 5,17E-07 | 1,549 | 5,39E-07 | 1,229 | 6,12E-06 |
| 1,039 | 3,82E-07 | 1,524 | 5,03E-07 | 1,192 | 5,97E-06 |
| 0,9921 | 2,11E-07 | 1,5 | 4,66E-07 | 1,156 | 5,70E-06 |
| 0,9116 | -1,96E-07 | 1,476 | 4,32E-07 | 1,119 | 5,52E-06 |
| 0,8603 | -5,54E-07 | 1,451 | 4,00E-07 | 1,082 | 5,36E-06 |
| 0,7993 | -9,47E-07 | 1,427 | 3,68E-07 | 1,046 | 5,14E-06 |
| 0,748 | -9,50E-07 | 1,402 | 3,38E-07 | 0,997 | 4,94E-06 |
| 0,7138 | -7,50E-07 | 1,378 | 3,08E-07 | 0,9482 | 4,59E-06 |
| 0,6772 | -4,74E-07 | 1,353 | 2,79E-07 | 0,8994 | 4,36E-06 |
| 0,6406 | -2,42E-07 | 1,329 | 2,51E-07 | 0,8505 | 4,18E-06 |
| 0,5966 | -8,38E-08 | 1,305 | 2,24E-07 | 0,8139 | 3,98E-06 |
| 0,5551 | -4,61E-08 | 1,28 | 1,97E-07 | 0,7773 | 3,82E-06 |
| 0,5185 | -8,33E-08 | 1,256 | 1,70E-07 | 0,7407 | 3,67E-06 |
| 0,4819 | -1,76E-07 | 1,231 | 1,44E-07 | 0,704 | 3,50E-06 |
| 0,4453 | -3,07E-07 | 1,207 | 1,18E-07 | 0,6674 | 3,32E-06 |
| 0,4086 | -4,54E-07 | 1,183 | 9,18E-08 | 0,6308 | 3,11E-06 |
| 0,372 | -6,17E-07 | 1,158 | 6,57E-08 | 0,5942 | 2,87E-06 |
| 0,3354 | -8,79E-07 | 1,134 | 3,91E-08 | 0,5576 | 2,58E-06 |
| 0,2988 | -1,31E-06 | 1,109 | 1,26E-08 | 0,5209 | 2,24E-06 |
| 0,2621 | -1,90E-06 | 1,085 | -1,43E-08 | 0,4843 | 1,88E-06 |
| 0,2255 | -2,58E-06 | 1,06 | -4,09E-08 | 0,4477 | 1,50E-06 |
| 0,1889 | -3,00E-06 | 1,036 | -6,73E-08 | 0,4111 | 1,14E-06 |
| 0,1523 | -2,92E-06 | 1,012 | -9,30E-08 | 0,3745 | 8,35E-07 |
| 0,1157 | -2,60E-06 | 0,9872 | -1,18E-07 | 0,3378 | 5,82E-07 |
| 7,90E-02 | -2,30E-06 | 0,9628 | -1,42E-07 | 0,3012 | 3,67E-07 |
| 4,24E-02 | -2,09E-06 | 0,9384 | -1,66E-07 | 0,2646 | 1,99E-07 |
| 5,80E-03 | -1,97E-06 | 0,914 | -1,90E-07 | 0,228 | 7,47E-08 |
| -3,08E-02 | -1,90E-06 | 0,8896 | -2,14E-07 | 0,1913 | -3,53E-08 |
| -6,74E-02 | -1,86E-06 | 0,8652 | -2,39E-07 | 0,1547 | -1,54E-07 |
| -0,1041 | -1,85E-06 | 0,8408 | -2,65E-07 | 0,1181 | -3,00E-07 |
| -0,1407 | -1,90E-06 | 0,8163 | -2,91E-07 | 8,15E-02 | -4,98E-07 |
| -0,1773 | -2,03E-06 | 0,7919 | -3,18E-07 | 4,49E-02 | -7,87E-07 |
| -0,2139 | -2,18E-06 | 0,7675 | -3,46E-07 | 8,24E-03 | -1,17E-06 |
| -0,2505 | -2,24E-06 | 0,7431 | -3,76E-07 | -2,84E-02 | -1,59E-06 |
| -0,2872 | -2,19E-06 | 0,7187 | -4,07E-07 | -6,50E-02 | -1,94E-06 |
| -0,3238 | -2,11E-06 | 0,6943 | -4,40E-07 | -0,1016 | -2,18E-06 |
| -0,3604 | -2,02E-06 | 0,6699 | 4,73E-07 | -0,1382 | -2,31E-06 |
| -0,397 | -1,95E-06 | 0,6454 | -5,07E-07 | -0,1749 | -2,37E-06 |
| -0,4337 | -1,89E-06 | 0,621 | -5,41E-07 | -0,2115 | -2,40E-06 |
| -0,4703 | -1,85E-06 | 0,5966 | -5,73E-07 | -0,2481 | -2,44E-06 |
| -0,5069 | -1,82E-06 | 0,5722 | -6,04E-07 | -0,3091 | -2,57E-06 |
| -0,5435 | -1,79E-06 | 0,5478 | -6,32E-07 | -0,3458 | -2,81E-06 |
| -0,5801 | -1,78E-06 | 0,5234 | -6,58E-07 | -0,3824 | -3,22E-06 |
| -0,6168 | -1,83E-06 | 0,499 | -6,79E-07 | -0,419 | -3,85E-06 |
| -0,6534 | -2,00E-06 | 0,4745 | -6,98E-07 | -0,4556 | -4,70E-06 |
| -0,69 | -2,15E-06 | 0,4501 | -7,16E-07 | -0,4922 | -5,71E-06 |
| -0,7266 | -2,26E-06 | 0,4257 | -7,37E-07 | -0,5289 | -6,79E-06 |
| -0,7632 | -2,35E-06 | 0,4013 | -7,61E-07 | -0,5655 | -7,82E-06 |
| -0,7999 | -2,50E-06 | 0,3769 | -7,87E-07 | -0,6021 | -8,67E-06 |
| -0,8365 | -2,71E-06 | 0,3525 | -8,15E-07 | -0,6387 | -9,31E-06 |
| -0,8731 | -3,00E-06 | 0,3281 | -8,48E-07 | -0,6754 | -9,84E-06 |
| -0,9097 | -3,35E-06 | 0,2963 | -9,05E-07 | -0,7242 | -1,06E-05 |
| -0,9464 | -3,62E-06 | 0,2597 | -1,00E-06 | -0,773 | -1,17E-05 |
| -0,983 | -3,77E-06 | 0,228 | -1,13E-06 | -0,817 | -1,26E-05 |
| -0,9952 | -3,80E-06 | 0,1987 | -1,30E-06 | -0,8585 | -1,33E-05 |
| -1,032 | -3,82E-06 | 0,162 | -1,62E-06 | -0,8951 | -1,35E-05 |
| -1,068 | -3,75E-06 | 0,1254 | -2,07E-06 | -0,9317 | -1,35E-05 |
| -1,105 | -3,68E-06 | 8,88E-02 | -2,60E-06 | -0,9683 | -1,32E-05 |
| -1,142 | -3,58E-06 | 5,22E-02 | -3,16E-06 | -1,005 | -1,29E-05 |
| -1,178 | -3,50E-06 | 1,56E-02 | -3,68E-06 | -1,042 | -1.26E-05 |
| -1,215 | -3,47E-06 | -2,11E-02 | -4,05E-06 | -1,078 | -1,23E-05 |
| -1,252 | -3,40E-06 | -5,77E-02 | -4,24E-06 | -1,115 | -1,20E-05 |
| -1,288 | -3,35E-06 | -9,43E-02 | -4,24E-06 | -1,151 | -1,18E-05 |
| -1,325 | -3,33E-06 | -0,1309 | -4,13E-06 | -1,188 | -1,16E-05 |
| -1,361 | -3,30E-06 | -0,1675 | -4,01E-06 | -1,225 | -1,14E-05 |
| -1,398 | -3,27E-06 | -0,2042 | -3,87E-06 | -1,261 | -1,12E-05 |
| -1,435 | -3,26E-06 | -0,2408 | -3,78E-06 | -1,298 | -1,11E-05 |
| -1,471 | -3,24E-06 | -0,2774 | -3,66E-06 | -1,335 | -1,09E-05 |
| -1,508 | -3,26E-06 | -0,314 | -3,55E-06 | -1,371 | -1,07E-05 |
| -1,544 | -3,25E-06 | -0,3506 | -3,42E-06 | -1,408 | -1.10E-05 |
| -1,581 | -3,29E-06 | -0,3873 | -3,30E-06 | -1,444 | -1,12E-05 |
| -1,618 | -3,33E-06 | -0,4239 | -3,20E-06 | -1,493 | -1,12E-05 |
| -1,654 | -3,39E-06 | -0,4605 | -3,15E-06 | -1,53 | -1,14E-05 |
| -1,691 | -3,48E-06 | -0,4971 | -3,10E-06 | -1,566 | -1,20E-05 |
| -1,728 | -3,61E-06 | -0,5338 | -3,04E-06 | -1,603 | -1,30E-05 |
| -1,764 | -3,75E-06 | -0,5704 | -3,26E-06 | -1,64 | -1,47E-05 |
| -1,801 | -3,90E-06 | -0,607 | -3,82E-06 | -1,676 | -1,76E-05 |
| -1,837 | -4,07E-06 | -0,6436 | -4,60E-06 | -1,713 | -2,18E-05 |
| -1,874 | -4,17E-06 | -0,6802 | -5,25E-06 | -1,75 | -2,73E-05 |
| -1,911 | -4,24E-06 | -0,7169 | -5,52E-06 | -1,786 | -3,53E-05 |
| -1,947 | -4,29E-06 | -0,7535 | -5,44E-06 | -1,823 | -4,75E-05 |
| -1,984 | -4,34E-06 | -0,7901 | -5,21E-06 | -1,859 | -6,57E-05 |
| -2,021 | -4,39E-06 | -0,8267 | -5,01E-06 | -1,896 | -9,15E-05 |
| -2,057 | -4,46E-06 | -0,8633 | -4,83E-06 | | |
| -2,094 | -4,55E-06 | -0,9 | -4,70E-06 | | |
| -2,118 | -4,63E-06 | -0,9366 | -4,60E-06 | | |
| -2,155 | -4,81E-06 | -0,9732 | -4,58E-06 | | |
| -2,191 | -5,01E-06 | -1,01 | -4,53E-06 | | |
| -2,228 | -5,35E-06 | -1,046 | -4,56E-06 | | |
| -2,265 | -5,77E-06 | -1,083 | -4,51E-06 | | |
| -2,301 | -6,43E-06 | -1,12 | -4,48E-06 | | |
| -2,338 | -7,23E-06 | -1,156 | -4,52E-06 | | |
| -2,375 | -8,05E-06 | -1,193 | -4,55E-06 | | |
| -2,411 | -8,90E-06 | -1,23 | -4,48E-06 | | |
| -2,448 | -9,54E-06 | -1,266 | -4,45E-06 | | |
| -2,484 | -9,82E-06 | -1,303 | -4,45E-06 | | |
| -2,521 | -9,96E-06 | -1,339 | -4,46E-06 | | |
| -2,558 | -9,96E-06 | -1,376 | -4,44E-06 | | |
| -2,594 | -1,01E-05 | -1,413 | -4,39E-06 | | |
| -2,631 | -1,02E-05 | -1,449 | -4,41E-06 | | |
| -2,675 | -1,03E-05 | -1,486 | -4,33E-06 | | |
| -2,716 | -1,05E-05 | -1,523 | -4,31E-06 | | |
| -2,753 | -1,06E-05 | -1,559 | -4,27E-06 | | |
| -2,79 | -1,08E-05 | -1,596 | -4,28E-06 | | |
| -2,826 | -1,11E-05 | -1,632 | -4,24E-06 | | |
| -2,863 | -1,14E-05 | -1,669 | -4,22E-06 | | |
| -2,899 | -1,20E-05 | -1,706 | -4,20E-06 | | |
| -2,936 | -1,26E-05 | -1,742 | -4,19E-06 | | |
| -2,973 | -1,37E-05 | -1,779 | -4,25E-06 | | |
| -3,009 | -1,49E-05 | -1,815 | -4,22E-06 | | |
| -3,046 | -1,70E-05 | -1,852 | -4,22E-06 | | |
| -3,083 | -2.05E-05 | -1,889 | -4,25E-06 | | |
| -3,119 | -2,68E-05 | -1,913 | -4,31E-06 | | |
| -3,156 | -3,76E-05 | -1,95 | -4,47E-06 | | |
| -3,192 | -5,42E-05 | -1,986 | -4,56E-06 | | |
| -3,229 | -7,61E-05 | -2,023 | -4,54E-06 | | |
| -3,241 | -8,46E-05 | -2,06 | -4,56E-06 | | |
| -3,278 | -1,13E-04 | -2,096 | -4,65E-06 | | |
| -3,29 | -1,23E-04 | -2,133 | -4,80E-06 | | |
| | | -2,157 | -4,94E-06 | | |
| | | -2,194 | -5,16E-06 | | |
| | | -2,231 | -5,43E-06 | | |
| | | -2,267 | -5,72E-06 | | |
| | | -2,304 | -6,12E-06 | | |
| | | -2,34 | -6,70E-06 | | |
| | | -2,377 | -7,46E-06 | | |
| | | -2,414 | -8,25E-06 | | |
| | | -2,45 | -8,84E-06 | | |
| | | -2,487 | -9,16E-06 | | |
| | | -2,523 | -9,44E-06 | | |
| | | -2,56 | -9,70E-06 | | |
| | | -2,597 | -1,00E-05 | | |
| | | -2,633 | -1,03E-05 | | |
| | | -2,67 | -1,05E-05 | | |
| | | -2,707 | -1,06E-05 | | |
| | | -2,743 | -1,07E-05 | | |
| | | -2,78 | -1,08E-05 | | |
| | | -2,816 | -1,11E-05 | | |
| | | -2,853 | -1,13E-05 | | |
| | | -2,89 | -1,15E-05 | | |
| | | -2,926 | -1,18E-05 | | |
| | | -2,963 | -1,22E-05 | | |
| | | -3 | -1,30E-05 | | |
| | | -3,036 | -1,47E-05 | | |
| | | -3,073 | -1,92E-05 | | |
| | | -3,109 | -2,81E-05 | | |
| | | -3,146 | -4,12E-05 | | |
| | | -3,183 | -5,72E-05 | | |
| | | -3,219 | -7,53E-05 | | |
| | | -3,256 | -9,47E-05 | | |
| | | -3,293 | -1,15E-04 | | |
| | | -3,275 | -1,16E-04 | | |
| | | -3,239 | -9,56E-05 | | |

**Tabelle zu Abbildung 3:**

| EMIM TFSI | | Et3STFSI | | EDiMIM TFSI | |
|---|---|---|---|---|---|
| U [V] | I [A] | U [V] | I [A] | U [V] | I [A] |
| 2,898 | 8,72E-04 | -2,75 | -7,87E-04 | 2,6 | 3,21E-04 |
| 2,874 | 7,78E-04 | -2,706 | -6,64E-04 | 2,576 | 3,59E-04 |
| 2,849 | 6,94E-04 | -2,657 | -5,35E-04 | 2,551 | 3,23E-04 |
| 2,825 | 6,18E-04 | -2,608 | -4,16E-04 | 2,527 | 2,90E-04 |
| 2,8 | 5,48E-04 | -2,572 | -3,34E-04 | 2,502 | 2,59E-04 |
| 2,776 | 4,83E-04 | -2,535 | -2,60E-04 | 2,478 | 2,29E-04 |
| 2,751 | 4,21E-04 | -2,498 | -1,96E-04 | 2,453 | 2,00E-04 |
| 2,727 | 3,64E-04 | -2,462 | -1,42E-04 | 2,429 | 1,73E-04 |
| 2,703 | 3,11E-04 | -2,425 | -9,88E-05 | 2,405 | 1,48E-04 |
| 2,678 | 2,61E-04 | -2,389 | -6,67E-05 | 2,38 | 1,24E-04 |
| 2,654 | 2,16E-04 | -2,352 | -4,46E-05 | 2,356 | 1,02E-04 |
| 2,622 | 1,63E-04 | -2,315 | -3,06E-05 | 2,324 | 7,65E-05 |
| 2,581 | 1,05E-04 | -2,279 | -2,14E-05 | 2,283 | 5,00E-05 |
| 2,551 | 7,36E-05 | -2,242 | -1,56E-05 | 2,253 | 3,65E-05 |
| 2,52 | 4,77E-05 | -2,206 | -1,18E-05 | 2,222 | 2.68E-05 |
| 2,493 | 3,22E-05 | -2,169 | -9,09E-06 | 2,195 | 2,16E-05 |
| 2,458 | 1,94E-05 | -2,132 | -7.34E-06 | 2,16 | 1,78E-05 |
| 2,434 | 1,38E-05 | -2,096 | -5,95E-06 | 2,136 | 1,61E-05 |
| 2,41 | 1,02E-05 | -2,059 | -5,09E-06 | 2,112 | 1,49E-05 |
| 2,385 | 7,93E-06 | -2,022 | -4,32E-06 | 2,087 | 1,39E-05 |
| 2,361 | 6,49E-06 | -1,986 | -3,73E-06 | 2,063 | 1,31E-05 |
| 2,336 | 5,58E-06 | -1,949 | -3,28E-06 | 12,038 | 1,24E-05 |
| 2,312 | 4,96E-06 | -1,913 | -2,94E-06 | 12,014 | 1,17E-05 |
| 2,288 | 4,53E-06 | -1,876 | -2,65E-06 | 1,99 | 1,11E-05 |
| 2,263 | 4,19E-06 | -1,839 | -2,41E-06 | 1,965 | 1,06E-05 |
| 2,239 | 3,92E-06 | -1,803 | -2,30E-06 | 1,941 | 1,02E-05 |
| 2,214 | 3,67E-06 | -1,766 | -2,10E-06 | 1,916 | 9,71E-06 |
| 2,19 | 3,45E-06 | -1,729 | -1,92E-06 | 1,892 | 9,31E-06 |
| 2,166 | 3,24E-06 | -1,693 | -1,77E-06 | 1,868 | 8,93E-06 |
| 2,141 | 3,03E-06 | -1,656 | -1,62E-06 | 1,843 | 8,58E-06 |
| 2,117 | 2,83E-06 | -1,62 | -1,51E-06 | 1,819 | 8,25E-06 |
| 2,092 | 2,63E-06 | -1,583 | -1,38E-06 | 1,794 | 7,94E-06 |
| 2,068 | 2,44E-06 | -1,546 | -1,27E-06 | 1,77 | 7,66E-06 |
| 2,043 | 2,25E-06 | -1,51 | -1,15E-06 | 1,745 | 7,39E-06 |
| 2,019 | 2,07E-06 | -1,473 | -1,09E-06 | 1,721 | 7,15E-06 |
| 1,995 | 1,91E-06 | -1,436 | -9,72E-07 | 1,697 | 6,92E-06 |
| 1,97 | 1,76E-06 | -1,4 | -8,65E-07 | 1,672 | 6,71E-06 |
| 1,946 | 1,63E-06 | -1,363 | -7,66E-07 | 1,648 | 6,51E-06 |
| 1,921 | 1,51E-06 | -1,327 | -6,73E-07 | 1,623 | 6,32E-06 |
| 1,897 | 1,40E-06 | -1,29 | -5,84E-07 | 1,599 | 6,14E-06 |
| 1,873 | 1,29E-06 | -1,253 | -5,00E-07 | 1,575 | 5,98E-06 |
| 1,848 | 1,20E-06 | -1,217 | -4,17E-07 | 1,55 | 5,82E-06 |
| 1,824 | 1,10E-06 | -1,18 | -3,35E-07 | 1,526 | 5,68E-06 |
| 1,799 | 1,02E-06 | -1,143 | -2,52E-07 | 1,501 | 5,55E-06 |
| 1,775 | 9,31E-07 | -1,107 | -1,68E-07 | 1,477 | 5,42E-06 |
| 1,75 | 8,51E-07 | -1,07 | -7,87E-08 | 1,452 | 5,30E-06 |
| 1,726 | 7,80E-07 | -1,034 | 1,35E-08 | 1,428 | 5,18E-06 |
| 1,702 | 7,15E-07 | -0,997 | 1,10E-07 | 1,404 | 5,07E-06 |
| 1,677 | 6.57E-07 | -0,9604 | 2,01E-07 | 1,379 | 4,96E-06 |
| 1,653 | 6,04E-07 | -0,9238 | 2,84E-07 | 1,355 | 4,85E-06 |
| 1,628 | 5,55E-07 | -0,8871 | 3,60E-07 | 1,33 | 4,74E-06 |
| 1,604 | 5,09E-07 | -0,8505 | 4,32E-07 | 1,306 | 4,63E-06 |
| 1,58 | 4,65E-07 | -0,8139 | 5,00E-07 | 1,282 | 4,52E-06 |
| 1,555 | 4,25E-07 | -0,7773 | 5,64E-07 | 1,257 | 4,41E-06 |
| 1,531 | 3,86E-07 | -0,7407 | 6,21E-07 | 1,233 | 4,30E-06 |
| 1,506 | 3,51E-07 | -0,704 | 6,76E-07 | 1,208 | 4,18E-06 |
| 1,482 | 3,16E-07 | -0,6552 | 7,44E-07 | 1,184 | 4,07E-06 |
| 1,458 | 2,83E-07 | -0,6064 | 8,08E-07 | 1,16 | 3,95E-06 |
| 1,433 | 2,51E-07 | -0,5576 | 8,61E-07 | 1,135 | 3,83E-06 |
| 1,409 | 2,20E-07 | -0,5209 | 8,91E-07 | 1,111 | 3,71E-06 |
| 1,377 | 1,81E-07 | -0,4843 | 9,20E-07 | 1,079 | 3,56E-06 |
| 1,345 | 1,43E-07 | -0,4477 | 9,49E-07 | 1,047 | 3,43E-06 |
| 1,316 | 1,08E-07 | -0,4111 | 9,74E-07 | 1,018 | 3,32E-06 |
| 1,284 | 6,94E-08 | -0,3745 | 9,96E-07 | 0,9862 | 3,23E-06 |
| 1,25 | 2,74E-08 | -0,3378 | 1,01E-06 | 0,952 | 3,15E-06 |
| 1,216 | -1,48E-08 | -0,3012 | 1,03E-06 | 0,9178 | 3,08E-06 |
| 1,167 | -7,63E-08 | -0,2646 | 1,05E-06 | 0,869 | 2,98E-06 |
| 1,135 | -1,16E-07 | -0,228 | 1,07E-06 | 0,8372 | 2,91E-06 |
| 1,099 | -1,61E-07 | -0,1913 | 1,10E-06 | 0,8006 | 2,81E-06 |
| 1,052 | -2,16E-07 | -0,1547 | 1,13E-06 | 0,7542 | 2,66E-06 |
| 1,021 | -2,51E-07 | -0,1181 | 1,16E-06 | 0,7225 | 2,53E-06 |
| 0,9888 | -2,83E-07 | -8,15E-02 | 1,19E-06 | 0,6908 | 2,39E-06 |
| 0,9619 | -3.09E-07 | -4,49E-02 | 1,22E-06 | 0,6639 | 2,25E-06 |
| 0,9448 | -3,24E-07 | -8,24E-03 | 1,25E-06 | 0,6468 | 2,16E-06 |
| 0,9058 | -3,58E-07 | 2,84E-02 | 1,29E-06 | 0,6078 | 1,93E-06 |
| 0,8716 | -3,86E-07 | 6,50E-02 | 1,33E-06 | 0,5736 | 1,73E-06 |
| 0,8423 | -4,09E-07 | 0,1016 | 1,38E-06 | 0,5443 | 1,56E-06 |
| 0,8105 | -4,33E-07 | 0,1382 | 1,44E-06 | 0,5125 | 1,37E-06 |
| 0,7739 | -4,62E-07 | 0,1749 | 1,51E-06 | 0,4759 | 1,06E-06 |
| 0,7397 | -4,89E-07 | 0,2115 | 1,56E-06 | 0,4417 | 6,03E-07 |
| 0,7056 | -5,15E-07 | 0,2481 | 1,61E-06 | 0,4076 | -5,64E-08 |
| 0,6763 | -5,38E-07 | 0,2847 | 1,67E-06 | 0,3783 | -6,65E-07 |
| 0,6421 | -5,65E-07 | 0,3214 | 1,75E-06 | 0,3441 | -1,34E-06 |
| 0,6104 | -5,91E-07 | 0,358 | 1,82E-06 | 0,3123 | -2,06E-06 |
| 0,5811 | -6,15E-07 | 0,3946 | 1,88E-06 | 0,2831 | -2,96E-06 |
| 0,5518 | -6,41E-07 | 0,4312 | 1,95E-06 | 0,2538 | -4,24E-06 |
| 0,52 | -6,71E-07 | 0,4678 | 2,01E-06 | 0,222 | -6,16E-06 |
| 0,4883 | -7,04E-07 | 0,5045 | 2,07E-06 | 0,1903 | -8,56E-06 |
| 0,4565 | -7,44E-07 | 0,5411 | 2,13E-06 | 0,1585 | -1,12E-05 |
| 0,4248 | -7,93E-07 | 0,5777 | 2,19E-06 | 0,1268 | -1,39E-05 |
| 0,3931 | -8,58E-07 | 0,6143 | 2,25E-06 | 9,51E-02 | -1,59E-05 |
| 0,3638 | -9,38E-07 | 0,6509 | 2,32E-06 | 6,58E-02 | -1,65E-05 |
| 0,3345 | -1,05E-06 | 0,6876 | 2,39E-06 | 3,65E-02 | -1,60E-05 |
| 0,3076 | -1,21E-06 | 0,7242 | 2,45E-06 | 9,61E-03 | -1,47E-05 |
| 0,2783 | -1,47E-06 | 0,7608 | 2,51E-06 | -1,97E-02 | -1,33E-05 |
| 0,249 | -1,91E-06 | 0,7974 | 2,56E-06 | -4,90E-02 | -1,19E-05 |
| 0,2173 | -2,84E-06 | 0,834 | 2,62E-06 | -8,07E-02 | -1,08E-05 |
| 0,188 | -4,60E-06 | 0,8707 | 2,70E-06 | -0,11 | -1,01E-05 |
| 0,1563 | -8,26E-06 | 0,9073 | 2,78E-06 | -0,1418 | -9,57E-06 |
| 0,127 | -1,37E-05 | 0,9439 | 2,90E-06 | -0,1711 | -9,45E-06 |
| 9,52E-02 | -2,09E-05 | 0,9805 | 3,07E-06 | -0,2028 | -9,62E-06 |
| 6,35E-02 | -2,71E-05 | 1,017 | 3,33E-06 | -0,2345 | -9,89E-06 |
| 3,42E-02 | -2,99E-05 | 1,054 | 3,71E-06 | -0,2638 | -1,01E-05 |
| 4,88E-03 | -2,90E-05 | 1,09 | 4,32E-06 | -0,2931 | -1,02E-05 |
| -2,69E-02 | -2,56E-05 | 1,127 | 5,53E-06 | -0,3249 | -1,03E-05 |
| -5,86E-02 | -2,19E-05 | 1,164 | 8,16E-06 | -0,3566 | -1,02E-05 |
| -9,03E-02 | -1,93E-05 | 1,2 | 1,39E-05 | -0,3883 | -1,01E-05 |
| -0,117 | -1,83E-05 | 1,237 | 2,45E-05 | -0,4152 | -9,96E-06 |
| -0,148 | -1,87E-05 | 1,273 | 3,90E-05 | -0,4469 | -9,73E-06 |
| -0,178 | -1,99E-05 | 1,31 | 5,22E-05 | -0,4762 | -9,48E-06 |
| -0,21 | -2,20E-05 | 1,347 | 5,82E-05 | -0,508 | -9,18E-06 |
| -0,246 | -2,67E-05 | 1,383 | 5,53E-05 | -0,5446 | -8,85E-06 |
| -0,268 | -2,98E-05 | 1,42 | 4,89E-05 | -0,5666 | -8,68E-06 |
| -0,288 | -3,13E-05 | 1,457 | 4,34E-05 | -0,5861 | -8,56E-06 |
| -0,312 | -3,13E-05 | 1,493 | 3,95E-05 | -0,6105 | -8,47E-06 |
| -0,341 | -2,94E-05 | 1,53 | 3,67E-05 | -0,6398 | -8,47E-06 |
| -0,368 | -2,69E-05 | 1,566 | 3,47E-05 | -0,6667 | -8,59E-06 |
| -0,402 | -2,37E-05 | 1,603 | 3,34E-05 | -0,7008 | -8,99E-06 |
| -0,434 | -2,10E-05 | 1,64 | 3,28E-05 | -0,7326 | -9,62E-06 |
| -0,468 | -1,87E-05 | 1,676 | 3,28E-05 | -0,7668 | -1,07E-05 |
| -0,502 | -1,68E-05 | 1,713 | 3,32E-05 | -0,8009 | -1,24E-05 |
| -0,537 | -1,54E-05 | 1,75 | 3,30E-05 | -0,8351 | -1,45E-05 |
| -0,566 | -1,44E-05 | 1,786 | 3,22E-05 | -0,8644 | -1,64E-05 |
| -0,593 | -1,37E-05 | 1,823 | 3,15E-05 | -0,8913 | -1,82E-05 |
| -0,622 | -1,32E-05 | 1,859 | 3,10E-05 | -0,9206 | -2,02E-05 |
| -0,649 | -1,30E-05 | 1,896 | 3,03E-05 | -0,9474 | -2,20E-05 |
| -0,673 | -1,31E-05 | 1,933 | 2,97E-05 | -0,9718 | -2,35E-05 |
| -0,698 | -1,36E-05 | 1,969 | 2,95E-05 | -0,9962 | -2,49E-05 |
| -0,722 | -1,46E-05 | 2,006 | 2,99E-05 | -1,021 | -2,60E-05 |
| -0,747 | -1,66E-05 | 2,043 | 3,09E-05 | -1,045 | -2,67E-05 |
| -0,771 | -1,95E-05 | 2,079 | 3,28E-05 | -1,069 | -2,71E-05 |
| -0,795 | -2,33E-05 | 2,128 | 3,60E-05 | -1,094 | -2,72E-05 |
| -0,820 | -2,71E-05 | 2,165 | 3,75E-05 | -1,118 | -2,72E-05 |
| -0,844 | -2,84E-05 | 2,201 | 3,75E-05 | -1,143 | -2,70E-05 |
| -0,869 | -2,74E-05 | 2,238 | 3,70E-05 | -1,167 | -2,68E-05 |
| -0,893 | -2,60E-05 | 2,274 | 3,70E-05 | -1,192 | -2,67E-05 |
| -0,918 | -2,47E-05 | 2,311 | 3,79E-05 | -1,216 | -2,66E-05 |
| -0,942 | -2,33E-05 | 2,348 | 3,97E-05 | -1,24 | -2,65E-05 |
| -0,966 | -2,20E-05 | 2,384 | 4,19E-05 | -1,265 | -2,65E-05 |
| -1,003 | -2,02E-05 | 2,433 | 4,53E-05 | -1,301 | -2,66E-05 |
| -1,04 | -1,86E-05 | 2,47 | 4,84E-05 | -1,338 | -2,67E-05 |
| -1,077 | -1,73E-05 | 2,509 | 5,38E-05 | -1,375 | -2,67E-05 |
| -1,113 | -1,62E-05 | 2,558 | 6,77E-05 | -1,411 | -2,66E-05 |
| -1,15 | -1,53E-05 | 2,597 | 8,77E-05 | -1,448 | -2,62E-05 |
| -1,187 | -1,46E-05 | 2,628 | 1,11E-04 | -1,485 | -2,56E-05 |
| -1,223 | -1,39E-05 | 2,67 | 1,51E-04 | -1,521 | -2,47E-05 |
| -1,26 | -1,33E-05 | 2,714 | 2,08E-04 | -1,558 | -2,36E-05 |
| -1,296 | -1,28E-05 | 2,746 | 2,58E-04 | -1,594 | -2,25E-05 |
| -1,333 | -1,23E-05 | 2,726 | 2,18E-04 | -1,631 | -2,16E-05 |
| -1,37 | -1,19E-05 | 2,692 | 1,62E-04 | -1,668 | -2,09E-05 |
| -1,406 | -1,16E-05 | | | -1,704 | -2,02E-05 |
| -1,443 | -1,13E-05 | | | -1,741 | -1,97E-05 |
| -1,479 | -1,11E-05 | | | -1,777 | -1,93E-05 |
| -1,516 | -1,09E-05 | | | -1,814 | -1,90E-05 |
| -1,553 | -1,08E-05 | | | -1,851 | -1,87E-05 |
| -1,589 | -1,08E-05 | | | -1,887 | -1,85E-05 |
| -1,626 | -1,09E-05 | | | -1,924 | -1,84E-05 |
| -1,663 | -1,11E-05 | | | -1,961 | -1,84E-05 |
| -1,699 | -1,11E-05 | | | -1,997 | -1,84E-05 |
| -1,736 | -1,12E-05 | | | -2,034 | -1,86E-05 |
| -1,772 | -1,14E-05 | | | -2,07 | -1,89E-05 |
| -1,809 | -1,18E-05 | | | -2,107 | -1,97E-05 |
| -1,846 | -1,25E-05 | | | -2,144 | -2,10E-05 |
| -1,882 | -1,39E-05 | | | -2,18 | -2,27E-05 |
| -1,919 | -1,69E-05 | | | -2,217 | -2,50E-05 |
| -1,956 | -2,35E-05 | | | -2,254 | -2,77E-05 |
| -1,992 | -2,69E-05 | | | -2,29 | -3,12E-05 |
| -2,029 | -3,14E-05 | | | -2,327 | -3,57E-05 |
| -2,065 | -3,91E-05 | | | -2,363 | -4,14E-05 |
| -2,102 | -5,08E-05 | | | -2,4 | -4,94E-05 |
| -2,139 | -6,67E-05 | | | -2,437 | -6,17E-05 |
| -2,175 | -8,69E-05 | | | -2,473 | -8,12E-05 |
| -2,212 | -1,12E-04 | | | -2,51 | -1,08E-04 |
| -2,249 | -1,42E-04 | | | -2,547 | -1,40E-04 |
| -2,285 | -1,80E-04 | | | -2,583 | -1,77E-04 |
| -2,322 | -2,27E-04 | | | -2,62 | -2,18E-04 |
| -2,358 | -2,88E-04 | | | -2,656 | -2,62E-04 |
| -2,395 | -3,62E-04 | | | -2,693 | -3,07E-04 |
| -2,432 | -4,48E-04 | | | -2,73 | -3,53E-04 |
| -2,468 | -5,42E-04 | | | -2,737 | -3,62E-04 |
| -2,495 | -6,15E-04 | | | | |
| -2,458 | -5,13E-04 | | | | |
| -2,422 | -4,17E-04 | | | | |
| -2,385 | -3,30E-04 | | | | |

**Tabelle zu Abbildung 4: Mittlere Viskositäten bei Temperaturen von -10 °C bis 80 °C.**

| Temp. [°C] | η(BMIM OTf) [mPas] | η(EdiMIM TFSI) [mPas] | η(EMIM TFSI) [mPas] |
|---|---|---|---|
| -10 | 792,05 | 604,24 | 190,63 |
| 0 | 390,45 | 300,25 | 107,81 |
| 10 | 212,78 | 167,41 | 67,00 |
| 20 | 123,16 | 102,33 | 44,89 |
| 30 | 76,98 | 66,53 | 31,64 |
| 40 | 49,01 | 43,71 | 22,36 |
| 50 | 35,65 | 32,38 | 17,59 |
| 60 | 25,89 | 24,21 | 13,74 |
| 70 | 19,54 | 18,45 | 11,01 |
| 80 | 15,25 | 14,58 | 9,00 |

**Tabelle zu Abbildung 5: Mittlere Viskositäten bei Temperaturen von -10 °C bis 80 °C.**

| Temp. [°C] | η(Py14 OTf) [mPas] | η(Py14 TFSI) [mPas] | η(Et3S TFSI) [mPas] |
|---|---|---|---|
| -10 | 1932,07 | 716,93 | 205,44 |
| 0 | 861,45 | 343,15 | 114,16 |
| 10 | 434,65 | 185,70 | 69,74 |
| 20 | 240,44 | 111,76 | 46,11 |
| 30 | 141,85 | 71,33 | 31,71 |
| 40 | 85,89 | 46,14 | 22,01 |
| 50 | 60,26 | 33,87 | 17,14 |
| 60 | 42,53 | 24,86 | 13,22 |
| 70 | 31,27 | 18,88 | 10,59 |
| 80 | 23,74 | 14,82 | 8,56 |

**Tabelle zu Abbildung 6: Mittlere Viskositäten bei Temperaturen von -10 °C bis 80 °C.**

| Temp. [°C] | η((MeOE)DiMIM TFSI) [mPas] | η((MeOE)Pyrr TFSI) [mPas] | η((MeOE)MIM TFSI) [mPas] | η((MeOE)Pyrr Nonaflat) [mPas] | η(Py14 TFSI) [mPas] |
|---|---|---|---|---|---|
| -10 | 634,8 | 310,6 | 296,2 | 3926,7 | 716,93 |
| 0 | 276,7 | 158,6 | 142,9 | 1572,4 | 343,15 |
| 10 | 141,5 | 90,7 | 78,8 | 707,1 | 185,70 |
| 20 | 83,0 | 58,3 | 48,2 | 378,1 | 111,76 |
| 30 | 50,7 | 38,4 | 31,9 | 203,0 | 71,33 |
| 40 | 33,3 | 26,7 | 22,0 | 117,9 | 46,14 |
| 50 | 23,2 | 19,4 | 16,0 | 73,0 | 33,87 |
| 60 | 16,9 | 14,6 | 12,1 | 48,2 | 24,86 |
| 70 | 12,8 | 11,4 | 9,4 | 33,4 | 18,88 |
| 80 | 9,9 | 9,2 | 7,6 | 23,9 | 14,82 |

**Tabelle zu Abbildung 7:**

| MeOEMPyrr TFSI | | MeOEMIM TFSI | | MeOEDiMIM TFSI | | MeOEMPyrr Nonaflat | |
|---|---|---|---|---|---|---|---|
| U [V] | I[A] | U [V] | I [A] | U [V] | I [A] | U [V] | I [A] |
| 3 | 3,34E-04 | 2,743 | 2,79E-04 | -2,843 | -5,11E-04 | 2,993 | 1,13E-04 |
| 2,976 | 3,78E-04 | 2,706 | 2,23E-04 | -2,806 | -4,60E-04 | 2,956 | 9,71E-05 |
| 2,951 | 3,44E-04 | 2,669 | 1,74E-04 | -2,769 | -4,11E-04 | 2,919 | 8,44E-05 |
| 2,927 | 3,11E-04 | 2,633 | 1,32E-04 | -2,733 | -3,65E-04 | 2,883 | 7,33E-05 |
| 2,902 | 2,79E-04 | 2,596 | 9,75E-05 | -2,696 | -3,22E-04 | 2,846 | 6,35E-05 |
| 2,878 | 2,48E-04 | 2,56 | 7,01E-05 | -2,66 | -2,80E-04 | 2,81 | 5,45E-05 |
| 2,854 | 2,18E-04 | 2,523 | 5,01E-05 | -2,623 | -2,42E-04 | 2,773 | 4,63E-05 |
| 2,829 | 1,90E-04 | 2,486 | 3,67E-05 | -2,586 | -2,06E-04 | 2,736 | 3,91E-05 |
| 2,805 | 1,64E-04 | 2,45 | 2,83E-05 | -2,55 | -1,75E-04 | 2,7 | 3,28E-05 |
| 2,78 | 1,38E-04 | 2,413 | 2,31E-05 | -2,513 | -1,47E-04 | 2,663 | 2,75E-05 |
| 2,756 | 1,15E-04 | 2,376 | 1,96E-05 | -2,477 | -1,24E-04 | 2,626 | 2,36E-05 |
| 2,724 | 8,74E-05 | 2,34 | 1,72E-05 | -2,44 | -1,04E-04 | 2,59 | 2,10E-05 |
| 2,683 | 5,78E-05 | 2,303 | 1,56E-05 | -2,403 | -8,67E-05 | 2,553 | 1,94E-05 |
| 2,653 | 4,17E-05 | 2,267 | 1,44E-05 | -2,367 | -7,20E-05 | 2,517 | 1,84E-05 |
| 2,622 | 2,89E-05 | 2,23 | 1,36E-05 | -2,33 | -5,91E-05 | 2,48 | 1,79E-05 |
| 2,595 | 2,16E-05 | 2,193 | 1,29E-05 | -2,293 | -4,83E-05 | 2,443 | 1,75E-05 |
| 2,561 | 1,59E-05 | 2,157 | 1,23E-05 | -2,257 | -3,90E-05 | 2,407 | 1,71E-05 |
| 2,536 | 1,34E-05 | 2,12 | 1,15E-05 | -2,22 | -3,12E-05 | 2,37 | 1,67E-05 |
| 2,512 | 1,18E-05 | 2,083 | 1,05E-05 | -2,184 | -2,48E-05 | 2,334 | 1,64E-05 |
| 2,487 | 1,06E-05 | 2,022 | 8,12E-06 | -2,122 | -1,66E-05 | 2,272 | 1,58E-05 |
| 2,463 | 9,82E-06 | 1,986 | 7,18E-06 | -2,086 | -1,29E-05 | 2,236 | 1,54E-05 |
| 2,439 | 9,19E-06 | 1,949 | 6,60E-06 | -2,049 | -1,00E-05 | 2,199 | 1,51E-05 |
| 2,414 | 8,66E-06 | 1,913 | 6,30E-06 | -2,013 | -7,77E-06 | 2,163 | 1,47E-05 |
| 2,39 | 8,20E-06 | 1,876 | 6,17E-06 | -1,976 | -6,02E-06 | 2,126 | 1,44E-05 |
| 2,365 | 7,80E-06 | 1,839 | 6,12E-06 | -1,939 | -4,70E-06 | 2,089 | 1,40E-05 |
| 2,341 | 7,44E-06 | 1,803 | 6,12E-06 | -1,903 | -3,69E-06 | 2,053 | 1,37E-05 |
| 2,316 | 17,10E-06 | 1,766 | 6,18E-06 | -1,866 | -2,93E-06 | 2,016 | 1,34E-05 |
| 2,292 | 6,80E-06 | 1,729 | 6,26E-06 | -1,83 | -2,37E-06 | 1,98 | 1,31E-05 |
| 2,268 | 6,2E-06 | 1,693 | 6,26E-06 | -1,793 | -1,95E-06 | 1,943 | 1,28E-05 |
| 2,243 | 6,27E-06 | 1,656 | 6,10E-06 | -1,756 | -1,64E-06 | 1,906 | 1,25E-05 |
| 2,219 | 6,04E-06 | 1,62 | 5,76E-06 | -1,72 | -1,39E-06 | 1,87 | 1,22E-05 |
| 2,194 | 5,84E-06 | 1,583 | 5,39E-06 | -1,683 | -1,19E-06 | 1,833 | 1,19E-05 |
| 2,17 | 5,66E-06 | 1,546 | 5,20E-06 | -1,646 | -9,81E-07 | 1,796 | 1,17E-05 |
| 2,146 | 5,51E-06 | 1,51 | 5,11E-06 | -1,61 | -7,52E-07 | 1,76 | 1,14E-05 |
| 2,121 | 5,37E-06 | 1,473 | 4,98E-06 | -1,573 | -4,62E-07 | 1,723 | 1,11E-05 |
| 2,097 | 5,24E-06 | 1,436 | 4,84E-06 | -1,537 | -7,88E-08 | 1,687 | 1,09E-05 |
| 2,072 | 5,12E-06 | 1,4 | 4,66E-06 | -1,5 | 4,41E-07 | 1,65 | 1,06E-05 |
| 2,048 | 5,00E-06 | 1,363 | 4,42E-06 | -1,463 | 1,15E-06 | 1,613 | 1,04E-05 |
| 2,023 | 4,88E-06 | 1,327 | 4,10E-06 | -1,427 | 2,09E-06 | 1,577 | 1,02E-05 |
| 1,999 | 4,77E-06 | 1,29 | 3,71E-06 | -1,39 | 3,33E-06 | 1,54 | 9,93E-06 |
| 1,975 | 4,67E-06 | 1,253 | 3,28E-06 | -1,353 | 4,92E-06 | 1,503 | 9,71E-06 |
| 1,95 | 4,57E-06 | 1,217 | 2,84E-06 | -1,317 | 6,91E-06 | 1,467 | 9,49E-06 |
| 1,926 | 4,47E-06 | 1,18 | 2,45E-06 | -1,28 | 9,27E-06 | 1,43 | 9,26E-06 |
| 1,901 | 4,37E-06 | 1,143 | 2,12E-06 | -1,244 | 1,19E-05 | 1,394 | 9,04E-06 |
| 1,877 | 4,28E-06 | 1,107 | 1,84E-06 | -1,207 | 1,47E-05 | 1,357 | 8,83E-06 |
| 1,853 | 4,18E-06 | 1,07 | 1,62E-06 | -1,17 | 1,74E-05 | 1,32 | 8,61E-06 |
| 1,828 | 4,09E-06 | 1,034 | 1,43E-06 | -1,134 | 1,96E-05 | 1,284 | 8,39E-06 |
| 1,804 | 4,00E-06 | 0,997 | 1,27E-06 | -1,097 | 2,10E-05 | 1,247 | 8,17E-06 |
| 1,779 | 3,91E-06 | 0,9604 | 1,13E-06 | -1,06 | 2,15E-05 | 1,21 | 7,95E-06 |
| 1,755 | 3,82E-06 | 0,9238 | 1,02E-06 | -1,024 | 2,10E-05 | 1,174 | 7,73E-06 |
| 1,73 | 3,73E-06 | 0,8871 | 9,11E-07 | -0,9872 | 2,00E-05 | 1,137 | 7,51E-06 |
| 1,706 | 3,64E-06 | 0,8505 | 8,01E-07 | -0,9506 | 1,88E-05 | 1,101 | 7,29E-06 |
| 1,682 | 3,55E-06 | 0,8139 | 6,78E-07 | -0,914 | 1,80E-05 | 1,064 | 7,07E-06 |
| 1,657 | 3,46E-06 | 0,7773 | 5,48E-07 | -0,8774 | 1,81E-05 | 1,027 | 6,85E-06 |
| 1,633 | 3,37E-06 | 0,7382 | 4,04E-07 | -0,8383 | 1,87E-05 | 0,9883 | 6,60E-06 |
| 1,608 | 3,29E-06 | 0,704 | 2,97E-07 | -0,8041 | 1,87E-05 | 0,9541 | 6,38E-06 |
| 1,584 | 3,21E-06 | 0,6674 | 2,11E-07 | -0,7675 | 1,78E-05 | 0,9175 | 6,14E-06 |
| 1,56 | 3,13E-06 | 0,643 | 1,62E-07 | -0,7431 | 1,69E-05 | 0,8931 | 5,97E-06 |
| 1,535 | 3,05E-06 | 0,6186 | 1,19E-07 | -0,7187 | 1,60E-05 | 0,8687 | 5,80E-06 |
| 1,511 | 2,97E-06 | 0,6064 | 9,88E-08 | -0,7065 | 11,56E-05 | 0,8565 | 5,71E-06 |
| 1,479 | 2,88E-06 | 0,5869 | 6,78E-08 | -0,687 | 1,50E-05 | 0,8369 | 5,56E-06 |
| 1,447 | 2,78E-06 | 0,5453 | 3,95E-09 | -0,6454 | 1,43E-05 | 0,7954 | 5,23E-06 |
| 1,418 | 2,70E-06 | 0,5087 | -5,11E-08 | -0,6088 | 1,45E-05 | 0,7588 | 4,93E-06 |
| 1,386 | 2,61E-06 | 0,4721 | -1,06E-07 | -0,5722 | 1,64E-05 | 0,7222 | 4,62E-06 |
| 1,352 | 2,52E-06 | 0,4355 | -1,61E-07 | -0,5356 | 2,12E-05 | 0,6856 | 4,32E-06 |
| 1,318 | 2,44E-06 | 0,3989 | -2,15E-07 | -0,499 | 2,96E-05 | 0,649 | 4,04E-06 |
| 1,269 | 2,32E-06 | 0,3622 | -2,70E-07 | -0,4623 | 4,09E-05 | 0,6123 | 3,77E-06 |
| 1,237 | 2,25E-06 | 0,3256 | -3,35E-07 | -0,4257 | 5,28E-05 | 0,5757 | 3,51E-06 |
| 1,201 | 2,17E-06 | 0,289 | -4,21E-07 | -0,3891 | 6,22E-05 | 0,5391 | 3,25E-06 |
| 1,154 | 2,07E-06 | 0,2524 | -5,30E-07 | -0,3525 | 6,50E-05 | 0,5025 | 3,00E-06 |
| 1,123 | 2,00E-06 | 0,2158 | -6,53E-07 | -0,3159 | 5,86E-05 | 0,4659 | 2,75E-06 |
| 1,091 | 1,93E-06 | 0,1791 | -7,82E-07 | -0,2792 | 4,91E-05 | 0,4292 | 2,51E-06 |
| 1,064 | 1,87E-06 | 0,1425 | -9,17E-07 | -0,2426 | 4,21E-05 | 0,3926 | 2,27E-06 |
| 1,047 | 1,83E-06 | 0,1059 | -1,06E-06 | -0,206 | 3,70E-05 | 0,356 | 2,03E-06 |
| 1,008 | 1,75E-06 | 6,93E-02 | -1,16E-06 | -0,1694 | 3,33E-05 | 0,3194 | 1,79E-06 |
| 0,9737 | 1,68E-06 | 3,27E-02 | -1,24E-06 | -0,1328 | 3,05E-05 | 0,2827 | 1,56E-06 |
| 0,9444 | 1,62E-06 | -3,97E-03 | -1,30E-06 | -9,61E-02 | 2,82E-05 | 0,2461 | 1,36E-06 |
| 0,9126 | 1,55E-06 | -4,06E-02 | -1,39E-06 | -5,95E-02 | 2,63E-05 | 0,2095 | 1,17E-06 |
| 0,876 | 1,48E-06 | -7,72E-02 | -1,53E-06 | -2,29E-02 | 2,48E-05 | 0,1729 | 1,01E-06 |
| 0,8418 | 1,41E-06 | -0,1138 | -1,76E-06 | 1,37E-02 | 2,34E-05 | 0,1363 | 8,54E-07 |
| 0,8076 | 1,34E-06 | -0,1505 | -2,09E-06 | 5,04E-02 | 2,23E-05 | 9,96E-02 | 7,09E-07 |
| 0,7784 | 1,27E-06 | -0,1871 | -2,42E-06 | 8,70E-02 | 2,13E-05 | 6,30E-02 | 5,66E-07 |
| 0,7442 | 1,20E-06 | -0,2237 | -2,63E-06 | 0,1236 | 2,04E-05 | 2,64E-02 | 4,23E-07 |
| 0,7124 | 1,13E-06 | -0,2603 | -2,70E-06 | 0,1602 | 1,96E-05 | -1,02E-02 | 2,84E-07 |
| 0,6831 | 1,06E-06 | -0,2969 | -2,75E-06 | 0,1968 | 1,89E-05 | -4,68E-02 | 1,52E-07 |
| 0,6538 | 9,83E-07 | -0,3336 | -2,82E-06 | 0,2335 | 1,82E-05 | -8,35E-02 | 3,85E-08 |
| 0,6221 | 8,91E-07 | -0,3702 | -2,92E-06 | 0,2701 | 1,77E-05 | -0,1201 | -5,16E-08 |
| 0,5904 | 7,83E-07 | -0,4068 | -3,04E-06 | 0,3067 | 1,72E-05 | -0,1567 | -1,20E-07 |
| 0,5586 | 6,52E-07 | -0,4434 | -3,21E-06 | 0,3433 | 1,68E-05 | -0,1933 | -1,73E-07 |
| 0,5269 | 4,94E-07 | -0,48 | -3,48E-06 | 0,3799 | 1,66E-05 | -0,23 | -2,14E-07 |
| 0,4951 | 3,08E-07 | -0,5167 | -3,94E-06 | 0,4166 | 1,63E-05 | -0,2666 | -2,49E-07 |
| 0,4659 | 1,12E-07 | -0,5533 | -4,72E-06 | 0,4532 | 1,62E-05 | -0,3032 | -2,79E-07 |
| 0,4366 | -1,15E-07 | -0,5899 | -6,01E-06 | 0,4898 | 1,62E-05 | -0,3398 | -3,05E-07 |
| 0,4097 | -3,53E-07 | -0,6265 | -7,80E-06 | 0,5264 | 1,61E-05 | -0,3764 | -3,30E-07 |
| 0,3804 | -6,53E-07 | -0,6631 | -9,82E-06 | 0,563 | 1,59E-05 | -0,4131 | -3,54E-07 |
| 0,3511 | -1,04E-06 | -0,6998 | -1,27E-05 | 0,5997 | 1,56E-05 | -0,4497 | -3,80E-07 |
| 0,3194 | -1,68E-06 | -0,7364 | -1,70E-05 | 0,6363 | 1,53E-05 | -0,4863 | -4,08E-07 |
| 0,2901 | -2,59E-06 | -0,773 | -2,18E-05 | 0,6729 | 1,51E-05 | -0,5229 | -4,43E-07 |
| 0,2583 | -3,95E-06 | -0,8096 | -2,58E-05 | 0,7095 | 1,49E-05 | -0,5595 | -4,84E-07 |
| 0,229 | -5,42E-06 | -0,8463 | -2,78E-05 | 0,7462 | 1,47E-05 | -0,5962 | -5,37E-07 |
| 0,1973 | -7,14E-06 | -0,8829 | -2,77E-05 | 0,7828 | 1,45E-05 | -0,6328 | -6,02E-07 |
| 0,1656 | -9,12E-06 | -0,9195 | -2,62E-05 | 0,8194 | 1,44E-05 | -0,6694 | -6,86E-07 |
| 0,1363 | -1,13E-05 | -0,9561 | -2,43E-05 | 0,856 | 1,44E-05 | -0,706 | -7,95E-07 |
| 0,107 | -1,38E-05 | -0,9927 | -2,24E-05 | 0,8926 | 1,44E-05 | -0,7426 | -9,36E-07 |
| 7,52E-02 | -1,66E-05 | -1,005 | -2,19E-05 | 0,9048 | 1,44E-05 | -0,7549 | -9,91E-07 |
| 4,35E-02 | -1,90E-05 | -1,042 | -2,04E-05 | 0,9415 | 1,45E-05 | -0,7915 | -1,19E-06 |
| 1,18E-02 | -2,07E-05 | -1,078 | -1,90E-05 | 0,9781 | 1,47E-05 | -0,8281 | -1,45E-06 |
| -1,51E-02 | -2,14E-05 | -1,115 | -1,79E-05 | 1,015 | 1,48E-05 | -0,8647 | -1,79E-06 |
| -4,68E-02 | -2,15E-05 | -1,151 | -1,68E-05 | 1,051 | 1,50E-05 | -0,9013 | -2,23E-06 |
| -7,61E-02 | -2,11E-05 | -1,188 | -1,59E-05 | 1,088 | 1,52E-05 | -0,938 | -2,80E-06 |
| -0,1079 | -2,03E-05 | -1,225 | -1,52E-05 | 1,125 | 1,54E-05 | -0,9746 | -3,48E-06 |
| -0,1445 | -1,92E-05 | -1,261 | -1,44E-05 | 1,161 | 1,57E-05 | -1,011 | -4,30E-06 |
| -0,1665 | -1,85E-05 | -1,298 | -1,37E-05 | 1,198 | 1,59E-05 | -1,048 | -5,23E-06 |
| -0,186 | -1,80E-05 | -1,335 | -1,31E-05 | 1,234 | 1,62E-05 | -1,084 | -6,29E-06 |
| -0,2104 | -1,74E-05 | -1,371 | -1,27E-05 | 1,271 | 1,64E-05 | -1,121 | -7,45E-06 |
| -0,2397 | -1,66E-05 | -1,408 | -1,23E-05 | 1,308 | 1,65E-05 | -1,158 | -8,59E-06 |
| -0,2666 | -1,60E-05 | -1,444 | -1,19E-05 | 1,344 | 1,65E-05 | -1,194 | -9,65E-06 |
| -0,3008 | -1,53E-05 | -1,481 | -1,17E-05 | 1,381 | 1,64E-05 | -1,231 | -1,07E-05 |
| -0,3325 | -1,47E-05 | -1,518 | -1,14E-05 | 1,418 | 1,62E-05 | -1,268 | -1,16E-05 |
| -0,3667 | -1,42E-05 | -1,554 | -1,13E-05 | 1,454 | 1,60E-05 | -1,304 | -1,23E-05 |
| -0,4008 | -1,37E-05 | -1,591 | -1,12E-05 | 1,491 | 1,58E-05 | -1,341 | -1,30E-05 |
| -0,435 | -1,32E-05 | -1,628 | -1,12E-05 | 1,527 | 1,56E-05 | -1,377 | -1,37E-05 |
| -0,4643 | -1,29E-05 | -1,664 | -1,13E-05 | 1,564 | 1,54E-05 | -1,414 | -1,44E-05 |
| -0,4912 | -1,26E-05 | -1,701 | -1,13E-05 | 1,601 | 1,52E-05 | -1,451 | -1,56E-05 |
| -0,5205 | -1,23E-05 | -1,737 | -1,15E-05 | 1,637 | 1,50E-05 | -1,487 | -1,85E-05 |
| -0,5473 | -1,21E-05 | -1,774 | -1,17E-05 | 1,674 | 1,48E-05 | -1,524 | -2,44E-05 |
| -0,5717 | -1,19E-05 | -1,811 | -1,21E-05 | 1,711 | 1,46E-05 | -1,561 | -3,23E-05 |
| -0,5962 | -1,17E-05 | -1,847 | -1,27E-05 | 1,747 | 1,44E-05 | -1,597 | -4,09E-05 |
| -0,6206 | -1,16E-05 | -1,884 | -1,35E-05 | 1,784 | 1,43E-05 | -1,634 | -4,99E-05 |
| -0,645 | -1,14E-05 | -1,92 | -1,47E-05 | 1,82 | 1,41E-05 | -1,67 | -5.88E-05 |
| -0,6694 | -1,13E-05 | -1,957 | -1,64E-05 | 1,857 | 1,40E-05 | -1,707 | -6,77E-05 |
| -0,6938 | -1,11E-05 | -1,994 | -1,85E-05 | 1,894 | 1,40E-05 | -1,744 | -7,63E-05 |
| -0,7182 | -1,09E-05 | -2,03 | -2,12E-05 | 1,93 | 1,40E-05 | -1,78 | -8,44E-05 |
| -0,7426 | -1.08E-05 | -2,067 | -2,42E-05 | 1,967 | 1,41E-05 | -1,817 | -9,15E-05 |
| -0,7671 | -1,06E-05 | -2,104 | -2,75E-05 | 2,003 | 1,42E-05 | -1,853 | -9,69E-05 |
| -0,7915 | -1,05E-05 | -2,128 | -3,13E-05 | 2,028 | 1,43E-05 | -1,878 | -9,90E-05 |
| -0,8159 | -1,03E-05 | -2,165 | -4,10E-05 | 2,065 | 1,46E-05 | -1,915 | -9,74E-05 |
| -0,8403 | -1,02E-05 | -2,201 | -5,80E-05 | 2,101 | 1,51E-05 | -1,951 | -8,67E-05 |
| -0,8647 | -1,01E-05 | -2,238 | -8,44E-05 | 2,138 | 1,59E-05 | -1,988 | -5,03E-05 |
| -0,9013 | -9.99E-06 | -2,274 | -1,21E-04 | 2,174 | 1,74E-05 | -2,024 | -2.15E-05 |
| -0,938 | -9.83E-06 | -2,311 | -1,65E-04 | 2,211 | 2,10E-05 | -2,061 | -1,55E-05 |
| -0,9746 | -9,72E-06 | -2,348 | -2,16E-04 | 2,248 | 2,86E-05 | -2,098 | -1,23E-05 |
| -1,011 | -9,62E-06 | -2,384 | -2,70E-04 | 2,284 | 4,25E-05 | -2,134 | -1,03E-05 |
| -1,048 | -9,48E-06 | -2,421 | -3,28E-04 | 2,321 | 6,35E-05 | -2,171 | -8,84E-06 |
| -1,084 | -9,40E-06 | -2,458 | -3,88E-04 | 2,357 | 9,02E-05 | -2,207 | -7,79E-06 |
| -1,121 | -9.34E-06 | -2,494 | -4,50E-04 | 2,394 | 1,21E-04 | -2,244 | -7,09E-06 |
| -1,158 | -9,34E-06 | -2,531 | -5,12E-04 | 2,431 | 1,56E-04 | -2,281 | -6,51E-06 |
| -1,194 | -9,35E-06 | -2,567 | -5,77E-04 | 2,467 | 1,92E-04 | -2,317 | -6,14E-06 |
| -1,231 | -9,37E-06 | -2,604 | -6,42E-04 | 2,504 | 2,30E-04 | -2,354 | -5,92E-06 |
| -1,268 | -9,49E-06 | -2,641 | -7,07E-04 | | | -2,391 | -5,85E-06 |
| -1,304 | -9,63E-06 | -2,685 | -7,86E-04 | | | -2,435 | -5,99E-06 |
| -1,341 | -9,64E-06 | | | | | -2,476 | -6,33E-06 |
| -1,377 | -9,64E-06 | | | | | -2,513 | -6,67E-06 |
| -1,414 | -9,71E-06 | | | | | -2,549 | -7,20E-06 |
| -1,451 | -9,80E-06 | | | | | -2,586 | -7,64E-06 |
| -1,487 | -9,96E-06 | | | | | -2,623 | -8,17E-06 |
| -1,524 | -1,01E-05 | | | | | -2,659 | -8,81E-06 |
| -1,561 | -1,02E-05 | | | | | -2,696 | -9,35E-06 |
| -1,597 | -1,05E-05 | | | | | -2,732 | -9,96E-06 |
| -1,634 | -1,06E-05 | | | | | -2,769 | -1,06E-05 |
| -1,67 | -1,08E-05 | | | | | -2,806 | -1,13E-05 |
| -1,707 | -1,09E-05 | | | | | -2,842 | -1,20E-05 |
| -1,744 | -1,10E-05 | | | | | -2,879 | -1,28E-05 |
| -1,78 | -1,11E-05 | | | | | -2,915 | -1,35E-05 |
| -1,817 | -1,11E-05 | | | | | -2,952 | -1,41E-05 |
| -1,853 | -1,12E-05 | | | | | -2,989 | -1,46E-05 |
| -1,89 | -1,12E-05 | | | | | -3,001 | -1,47E-05 |
| -1,927 | -1,12E-05 | | | | | -3,038 | -1,50E-05 |
| -1,963 | -1,12E-05 | | | | | -3,074 | -1,54E-05 |
| -2 | -1,13E-05 | | | | | | |
| -2,037 | -1,17E-05 | | | | | | |
| -2,073 | -1,20E-05 | | | | | | |
| -2,11 | -1,22E-05 | | | | | | |
| -2,146 | -1,21E-05 | | | | | | |
| -2,183 | -1,21E-05 | | | | | | |
| -2,22 | -1,22E-05 | | | | | | |
| -2,256 | -1,24E-05 | | | | | | |
| -2,293 | -1,26E-05 | | | | | | |
| -2,33 | -1,30E-05 | | | | | | |
| -2,366 | -1,32E-05 | | | | | | |
| -2,403 | -1,36E-05 | | | | | | |
| -2,439 | -1,40E-05 | | | | | | |
| -2,476 | -1,46E-05 | | | | | | |
| -2,513 | -1,52E-05 | | | | | | |
| -2,549 | -1,59E-05 | | | | | | |
| -2,586 | -1,69E-05 | | | | | | |
| -2,623 | -1,87E-05 | | | | | | |
| -2,659 | -2,18E-05 | | | | | | |
| -2,696 | -2,71E-05 | | | | | | |
| -2,732 | -3,49E-05 | | | | | | |
| -2,769 | -4,48E-05 | | | | | | |
| -2,806 | -5,40E-05 | | | | | | |
| -2,842 | -5,83E-05 | | | | | | |
| -2,879 | -5,99E-05 | | | | | | |
| -2,915 | -6,31E-05 | | | | | | |
| -2,952 | -6,82E-05 | | | | | | |
| -2,989 | -7,39E-05 | | | | | | |
| -3,016 | -7,89E-05 | | | | | | |
| -3,05 | -8,71E-05 | | | | | | |
| -3,082 | -9,78E-05 | | | | | | |
| -3,116 | -1,15E-04 | | | | | | |
| -3,184 | -1,69E-04 | | | | | | |
| -3,221 | -2,07E-04 | | | | | | |
| -3,243 | -2,30E-04 | | | | | | |
| -3,218 | -1,99E-04 | | | | | | |
| -3,199 | -1,76E-04 | | | | | | |

**Tabelle zu Abbildung 8: Leitfähigkeiten verschiedener IL-haltiger Zusammensetzungen bei Zugabe der jeweils angegebenen Menge des angegebenen Lösungsmittels zu 5 ml Ausgangsprobe (IL plus Leitsalz wie angegeben).**

| Zugabe Lösemittel [mL] | σ(Py14TFSI/LiTFS I 0.75 M/ GBL) [mS/cm] | σ(Py14TFSI/LiT FSI 0.50 M/GBL) [mS/cm] | σ(Py14TFSI/LiT FSI 0.75 M/ DMSO [mS/cm] | σ(Py14TFS I/LiTFSI 0.50 M/ DMSO) [mS/cm] |
|---|---|---|---|---|
| 0,0 | 0,70 | 1,12 | 0,71 | 1,13 |
| 0,5 | 1,97 | 2,59 | 2,20 | 2,66 |
| 1,0 | 3,28 | 3,93 | 3,07 | 3,91 |
| 1,5 | 4,69 | 5,54 | 4,34 | 5,31 |
| 2,0 | 5,95 | 6,79 | 5,72 | 6,60 |
| 2,5 | 7,11 | 8,06 | 6,92 | 7,88 |
| 3,0 | 8,17 | 9,08 | 7,97 | 8,82 |
| 3,5 | 9,06 | 9,91 | 8,95 | 9,56 |
| 4,0 | 9,82 | 10,52 | 9,61 | 10,26 |
| 4,5 | 10,43 | 11,11 | 10,23 | 10,75 |
| 5,0 | 10,90 | 11,60 | 10,72 | 11,17 |
| 5,5 | 11,28 | 11,90 | 11,04 | 11,51 |
| 6,0 | 11,55 | 12,16 | 11,32 | 11,68 |
| 6,5 | 11,79 | 12,35 | 11,51 | 11,84 |
| 7,0 | 11,97 | 12,45 | 11,69 | 11,98 |
| 7,5 | 12,09 | 12,54 | 11,79 | 12,07 |
| 8,0 | 12,18 | 12,54 | 11,85 | 12,16 |
| 8,5 | 12,20 | 12,57 | 11,91 | 12,16 |
| 9,0 | 12,24 | 12,57 | 11,91 | 12,16 |
| 9,5 | 12,24 | 12,54 | 11,83 | 12,13 |
| 10,0 | 12,24 | 12,52 | 11,75 | 12,07 |
| 10,5 | 12,18 | 12,46 | 11,69 | 12,01 |
| 11,0 | 12,13 | 12,40 | 11,63 | 11,97 |
| 11,5 | 12,09 | 12,35 | 11,58 | 11,78 |
| 12,0 | 12,01 | 12,28 | 11,51 | 11,75 |
| 12,5 | 11,91 | 12,16 | 11,40 | 11,65 |
| 13,0 | 11,82 | 12,04 | 11,32 | 11,51 |
| 13,5 | | 11,96 | 11,23 | 11,42 |

**Tabelle zu Abbildung 9: Leitfähigkeiten verschiedener IL-haltiger Zusammensetzungen bei Zugabe der jeweils angegebenen Menge des angegebenen Lösungsmittels zu 5 ml Ausgangsprobe (IL plus Leitsalz wie angegeben).**

| Zugabe Lösemittel [mL] | σ(Py14TF SI/GBL) [mS/cm] | σ(Py14TF SI/DMSO) [mS/cm] | σ(Py14TFSI /EC&DMC) [mS/cm] | σ(Py14TFSI /DMC) [mS/cm] | σ(Py14TFSI /E(EG)2E) [mS/cm] | σ(Py14TF SI/DME) [mS/cm] |
|---|---|---|---|---|---|---|
| 0,0 | 1,00 | 2,38 | 2,39 | 2,38 | 2,38 | 2,42 |
| 0,5 | 0,93 | 4,32 | 4,68 | 4,82 | 3,15 | 4,50 |
| 1,0 | 0,86 | 6,02 | 6,52 | 6,73 | 3,78 | 6,45 |
| 1,5 | 0,81 | 7,51 | 8,39 | 8,83 | 4,25 | 8,50 |
| 2,0 | 0,76 | 8,88 | 9,74 | 10,34 | 4,55 | 10,07 |
| 2,5 | 0,71 | 9,86 | 10,93 | 11,62 | 4,84 | 11,51 |
| 3,0 | 0,67 | 10,68 | 11,76 | 12,42 | 5,00 | 12,54 |
| 3,5 | 0,64 | 11,31 | 12,51 | 13,07 | 5,14 | 13,61 |
| 4,0 | 0,61 | 11,78 | 12,97 | 13,42 | 5,18 | 14,21 |
| 4,5 | 0,58 | 12,21 | 13,42 | 13,56 | 5,21 | 14,78 |
| 5,0 | 0,55 | 12,40 | 13,64 | 13,55 | 5,17 | 15,12 |
| 5,5 | 0,53 | 12,54 | 13,86 | 13,42 | 5,14 | 15,45 |
| 6,0 | 0,51 | 12,66 | 13,97 | 13,20 | 5,09 | 15,51 |
| 6,5 | 0,49 | 12,74 | 14,00 | 12,89 | 5,00 | 15,62 |
| 7,0 | 0,47 | 12,77 | 13,97 | 12,58 | 4,90 | 15,66 |
| 7,5 | 0,45 | 12,75 | 13,93 | 12,21 | 4,79 | 15,62 |
| 8,0 | 0,44 | 12,69 | 13,87 | 11,88 | 4,69 | 15,54 |
| 8,5 | 0,42 | 12,54 | 13,83 | 11,45 | 4,56 | 15,41 |
| 9,0 | 0,41 | 12,52 | 13,75 | 11,09 | 4,48 | 15,26 |
| 9,5 | 0,39 | 12,40 | 13,64 | 10,72 | 4,35 | 15,12 |
| 10,0 | 0,38 | 12,32 | 13,53 | 10,37 | 4,25 | 14,89 |
| 10,5 | 0,37 | 12,21 | 13,42 | 9,95 | 4,15 | 14,65 |
| 11,0 | 0,36 | 12,11 | 13,29 | 9,64 | 4,04 | 14,53 |
| 11,5 | 0,35 | 11,98 | 13,16 | 9,29 | 3,95 | 14,29 |
| 12,0 | 0,34 | 11,87 | 13,02 | 8,93 | 3,83 | 14,06 |
| 12,5 | | | | | 3,73 | 13,86 |
| 13,0 | | | | | 3,63 | 13,61 |
| 13,5 | | | | | 3,53 | 13,40 |

**Tabelle zu Abbildung 10: Leitfähigkeiten verschiedener IL-haltiger Zusammensetzungen bei Zugabe der jeweils angegebenen Menge des angegebenen Lösungsmittels zu 5 ml Ausgangsprobe (IL plus Leitsalz wie angegeben).**

| Zugabe Lösemittel [mL] | σ(Py14TFSI/LiT FSI (0.50 M)/GBL) [mS/cm] | σ(Py14TFSI/ LiTFSI (0.50 M)/DMSO) [mS/cm] | σ(Py14TFSI/ LiTFSI (0.50 M) /DME) [mS/cm] | σ(Py14TFSI/ LiTFSI (0.50 M)/ EC/DMC) [mS/cm] |
|---|---|---|---|---|
| 0,0 | 1,12 | 1,13 | 1,12 | 1,12 |
| 0,5 | 2,59 | 2,66 | 2,63 | 2,54 |
| 1,0 | 3,93 | 3,91 | 4,05 | 4,29 |
| 1,5 | 5,54 | 5,31 | 5,71 | 5,83 |
| 2,0 | 6,79 | 6,60 | 7,24 | 7,33 |
| 2,5 | 8,06 | 7,88 | 8,72 | 8,58 |
| 3,0 | 9,08 | 8,82 | 10,05 | 9,73 |
| 3,5 | 9,91 | 9,56 | 11,23 | 10,74 |
| 4,0 | 10,52 | 10,26 | 12,18 | 11,45 |
| 4,5 | 11,11 | 10,75 | 12,97 | 12,18 |
| 5,0 | 11,60 | 11,17 | 13,61 | 12,69 |
| 5,5 | 11,90 | 11,51 | 14,08 | 13,11 |
| 6,0 | 12,16 | 11,68 | 14,42 | 13,42 |
| 6,5 | 12,35 | 11,84 | 14,69 | 13,69 |
| 7,0 | 12,45 | 11,98 | 14,86 | 13,92 |
| 7,5 | 12,54 | 12,07 | 14,99 | 13,97 |
| 8,0 | 12,54 | 12,16 | 15,09 | 14,10 |
| 8,5 | 12,57 | 12,16 | 15,06 | 14,18 |
| 9,0 | 12,57 | 12,16 | 15,03 | 14,17 |
| 9,5 | 12,54 | 12,13 | 14,98 | 14,17 |
| 10,0 | 12,52 | 12,07 | 14,89 | 14,14 |
| 10,5 | 12,46 | 12,01 | 14,80 | 14,14 |
| 11,0 | 12,40 | 11,97 | 14,63 | 14,08 |
| 11,5 | 12,35 | 11,78 | 14,50 | 14,03 |
| 12,0 | 12,28 | 11,75 | 14,30 | 13,96 |
| 12,5 | 12,16 | 11,65 | 14,14 | 13,85 |
| 13,0 | 12,04 | 11,51 | 14,00 | 13,76 |
| 13,5 | 11,96 | 11,42 | 13,80 | 13,68 |

**Tabelle zu Abbildung 11: Leitfähigkeiten verschiedener IL-haltiger Zusammensetzungen bei Zugabe der jeweils angegebenen Menge des angegebenen Lösungsmittels zu 5 ml Ausgangsprobe (IL plus Leitsalz wie angegeben).**

| Zugabe Lösemittel [mL] | σ(Py14TFSI/Li OTf 0.50 M/GBL) [mS/cm] | σ(Py14TFSI/LiOTf 0.50 M/DME) [mS/cm] | σ(Py14TFSI/LiOTf 0.50 M/EC/DMC) [mS/cm] |
|---|---|---|---|
| 0,0 | 1,63 | 1,62 | 1,68 |
| 0,5 | 2,32 | 2,53 | 2,76 |
| 1,0 | 3,60 | 4,04 | 3,78 |
| 1,5 | 4,96 | 5,52 | 5,20 |
| 2,0 | 6,23 | 7,10 | 6,39 |
| 2,5 | 7,39 | 8,65 | 7,56 |
| 3,0 | 8,39 | 9,88 | 8,49 |
| 3,5 | 9,16 | 10,86 | 9,39 |
| 4,0 | 9,84 | 11,73 | 10,10 |
| 4,5 | 10,34 | 12,39 | 10,72 |
| 5,0 | 10,83 | 12,98 | 11,20 |
| 5,5 | 11,18 | 13,39 | 11,60 |
| 6,0 | 11,45 | 13,77 | 11,84 |
| 6,5 | 11,68 | 13,98 | 12,07 |
| 7,0 | 11,84 | 14,10 | 12,28 |
| 7,5 | 11,96 | 14,19 | 12,43 |
| 8,0 | 12,07 | 14,25 | 12,54 |
| 8,5 | 12,07 | 14,25 | 12,57 |
| 9,0 | 12,07 | 14,25 | 12,62 |
| 9,5 | 12,06 | 14,19 | 12,60 |
| 10,0 | 12,06 | 14,09 | 12,60 |
| 10,5 | 11,98 | 13,97 | 12,57 |
| 11,0 | 11,95 | 13,83 | 12,54 |
| 11,5 | 11,91 | 13,72 | 12,52 |
| 12,0 | 11,84 | 13,58 | 12,46 |
| 12,5 | 11,72 | 13,36 | 12,40 |
| 13,0 | 11,62 | 13,21 | 12,35 |
| 13,5 | 11,51 | 13,02 | 12,24 |

**Tabelle zu Abbildung 12: Leitfähigkeiten verschiedener IL-haltiger Zusammensetzungen bei Zugabe der jeweils angegebenen Menge des angegebenen Lösungsmittels zu 5 ml Ausgangsprobe (IL plus Leitsalz wie angegeben).**

| Zugabe Lösemittel [mL] | σ(Py14OTf/LiB OB 0.5 M/EC_DMC) [mS/cm] | σ(Py14OTf/LiTFSI 0.5 M/EC-DMC) [mS/cm] | σ(Py14OTf/-/EC_DMC) [mS/cm] | σ(Py14TFSI/-/EC_DMC) [mS/cm] |
|---|---|---|---|---|
| 0,0 | 1,63 | 1,62 | 1,68 | 1,68 |
| 0,5 | 2,32 | 2,53 | 2,76 | 2,76 |
| 1,0 | 3,60 | 4,04 | 3,78 | 3,78 |
| 1,5 | 4,96 | 5,52 | 5,20 | 5,20 |
| 2,0 | 6,23 | 7,10 | 6,39 | 6,39 |
| 2,5 | 7,39 | 8,65 | 7,56 | 7,56 |
| 3,0 | 8,39 | 9,88 | 8,49 | 8,49 |
| 3,5 | 9,16 | 10,86 | 9,39 | 9,39 |
| 4,0 | 9,84 | 11,73 | 10,10 | 10,10 |
| 4,5 | 10,34 | 12,39 | 10,72 | 10,72 |
| 5,0 | 10,83 | 12,98 | 11,20 | 11,20 |
| 5,5 | 11,18 | 13,39 | 11,60 | 11,60 |
| 6,0 | 11,45 | 13,77 | 11,84 | 11,84 |
| 6,5 | 11,68 | 13,98 | 12,07 | 12,07 |
| 7,0 | 11,84 | 14,10 | 12,28 | 12,28 |
| 7,5 | 11,96 | 14,19 | 12,43 | 12,43 |
| 8,0 | 12,07 | 14,25 | 12,54 | 12,54 |
| 8,5 | 12,07 | 14,25 | 12,57 | 12,57 |
| 9,0 | 12,07 | 14,25 | 12,62 | 12,62 |
| 9,5 | 12,06 | 14,19 | 12,60 | 12,60 |
| 10,0 | 12,06 | 14,09 | 12,60 | 12,60 |
| 10,5 | 11,98 | 13,97 | 12,57 | 12,57 |
| 11,0 | 11,95 | 13,83 | 12,54 | 12,54 |
| 11,5 | 11,91 | 13,72 | 12,52 | 12,52 |
| 12,0 | 11,84 | 13,58 | 12,46 | 12,46 |
| 12,5 | 11,72 | 13,36 | 12,40 | 12,40 |
| 13,0 | 11,62 | 13,21 | 12,35 | 12,35 |
| 13,5 | 11,51 | 13,02 | 12,24 | 12,24 |

**Tabelle zu Abbildung 13: Leitfähigkeiten verschiedener IL-haltiger Zusammensetzungen bei Zugabe der jeweils angegebenen Menge des angegebenen Lösungsmittels zu 5 ml Ausgangsprobe (IL plus Leitsalz wie angegeben).**

| Zugabe Lösemittel [mL] | σ((MeOE)MPyrr TFSI/-/EC_DMC 70_30 [mS/cm] | σ( (MeOE)MPyrr TFSI/LiTFSI 0.5 M/EC_DMC 70_30) [mS/cm] | σ(Py14 TFSI/LiTFSI 0.5 M/EC_DMC) [mS/cm] | σ(Py14TFSI/-/EC_DMC) [mS/cm] |
|---|---|---|---|---|
| 0,0 | 3,39 | 1,77 | 1,18 | 2,39 |
| 0,5 | 5,38 | 3,15 | 2,48 | 4,68 |
| 1,0 | 7,17 | 4,65 | 4,12 | 6,52 |
| 1,5 | 8,74 | 6,16 | 5,63 | 8,39 |
| 2,0 | 10,05 | 7,44 | 6,94 | 9,74 |
| 2,5 | 11,19 | 8,67 | 8,16 | 10,93 |
| 3,0 | 12,01 | 9,61 | 9,22 | 11,76 |
| 3,5 | 12,85 | 10,49 | 10,07 | 12,51 |
| 4,0 | 13,36 | 11,12 | 10,83 | 12,97 |
| 4,5 | 13,75 | 11,69 | 11,40 | 13,42 |
| 5,0 | 14,06 | 12,17 | 11,87 | 13,64 |
| 5,5 | 14,30 | 12,53 | 12,24 | 13,86 |
| 6,0 | 14,44 | 12,80 | 12,46 | 13,97 |
| 6,5 | 14,53 | 13,03 | 12,63 | 14,00 |
| 7,0 | 14,63 | 13,19 | 12,77 | 13,97 |
| 7,5 | 14,63 | 13,30 | 12,86 | 13,93 |
| 8,0 | 14,60 | 13,33 | 12,91 | 13,87 |
| 8,5 | 14,53 | 13,36 | 12,96 | 13,83 |
| 9,0 | 14,47 | 13,36 | 12,91 | 13,75 |
| 9,5 | 14,39 | 13,36 | 12,88 | 13,64 |
| 10,0 | 14,30 | 13,33 | 12,83 | 13,53 |
| 10,5 | 14,20 | 13,28 | 12,74 | 13,42 |
| 11,0 | 14,08 | 13,19 | 12,63 | 13,29 |
| 11,5 | 13,97 | 13,13 | 12,57 | |
| 12,0 | 13,84 | 13,08 | 12,52 | |
| 12,5 | 13,72 | 13,00 | 12,51 | |
| 13,0 | | | | |
| 13,5 | | | | |

**Tabelle zu Abbildung 14: Leitfähigkeiten verschiedener IL-haltiger Zusammensetzungen bei Zugabe der jeweils angegebenen Menge des angegebenen Lösungsmittels zu 5 ml Ausgangsprobe (IL plus Leitsalz wie angegeben).**

| Zugabe Lösemittel [mL] | σ(Et3STFSI/LiT FSI (0.50 M)/GBL) [mS/cm] | σ(Et3STFSI/LiTF SI (0.50 M)/EC_DMC) [mS/cm] | σ(Py14 TFSI/LiTFSI 0.5 M/GBL) [mS/cm] | σ(Py14TFSI/LiTF SI 0.50 M/EC_DMC) [mS/cm] |
|---|---|---|---|---|
| 0,0 | 3,25 | 3,34 | 1,12 | 1,18 |
| 0,5 | 5,33 | 5,25 | 2,59 | 2,48 |
| 1,0 | 6,77 | 7,25 | 3,93 | 4,12 |
| 1,5 | 8,48 | 9,05 | 5,54 | 5,63 |
| 2,0 | 9,94 | 10,53 | 6,79 | 6,94 |
| 2,5 | 11,26 | 11,75 | 8,06 | 8,16 |
| 3,0 | 12,29 | 12,77 | 9,08 | 9,22 |
| 3,5 | 13,08 | 13,69 | 9,91 | 10,07 |
| 4,0 | 13,69 | 14,33 | 10,52 | 10,83 |
| 4,5 | 14,21 | 14,83 | 11,11 | 11,40 |
| 5,0 | 14,59 | 15,25 | 11,60 | 11,87 |
| 5,5 | 14,82 | 15,54 | 11,90 | 12,24 |
| 6,0 | 15,06 | 15,77 | 12,16 | 12,46 |
| 6,5 | 15,20 | 15,90 | 12,35 | 12,63 |
| 7,0 | 15,26 | 16,01 | 12,45 | 12,77 |
| 7,5 | 15,33 | 16,04 | 12,54 | 12,86 |
| 8,0 | 15,37 | 16,01 | 12,54 | 12,91 |
| 8,5 | 15,32 | 15,98 | 12,57 | 12,96 |
| 9,0 | 15,26 | 15,93 | 12,57 | 12,91 |
| 9,5 | 15,20 | 15,87 | 12,54 | 12,88 |
| 10,0 | 15,09 | 15,77 | 12,52 | 12,83 |
| 10,5 | 15,01 | 15,68 | 12,46 | 12,74 |
| 11,0 | 14,89 | 15,54 | 12,40 | 12,63 |
| 11,5 | 14,78 | 15,37 | 12,35 | 12,57 |
| 12,0 | 14,64 | 15,26 | 12,28 | 12,52 |
| 12,5 | 14,47 | 15,12 | 12,16 | 12,51 |
| 13,0 | 14,36 | 15,01 | | |
| 13,5 | 14,25 | 14,86 | | |

**Tabelle zu Abbildung 15: Leitfähigkeiten verschiedener IL-haltiger Zusammensetzungen bei Zugabe der jeweils angegebenen Menge des angegebenen Lösungsmittels zu 5 ml Ausgangsprobe (IL plus Leitsalz wie angegeben).**

| Zugabe Lösemittel [mL] | σ(Et3STFSI/LiT FSI (0.50 M)/EC_DMC 75_25) [mS/cm] | σ(Et3STFSI/Li TFSI (0.50 M)/EC_DMC 70_30) [mS/cm] | σ(Et3STFSI/LiTF SI (0.50 M)/EC_DMC 66_33) [mS/cm] | σ( (MeOE)MPyr TFSI/LiTFSI 0.5 M/EC_DMC 70_30) [mS/cm] |
|---|---|---|---|---|
| 0,0 | 3,36 | 3,25 | 3,32 | 1,18 |
| 0,5 | 5,53 | 5,33 | 5,42 | 2,48 |
| 1,0 | 7,31 | 6,77 | 7,38 | 4,12 |
| 1,5 | 9,23 | 8,48 | 9,31 | 5,63 |
| 2,0 | 10,64 | 9,94 | 10,82 | 6,94 |
| 2,5 | 11,87 | 11,26 | 12,07 | 8,16 |
| 3,0 | 12,85 | 12,29 | 13,10 | 9,22 |
| 3,5 | 13,64 | 13,08 | 14,03 | 10,07 |
| 4,0 | 14,25 | 13,69 | 14,60 | 10,83 |
| 4,5 | 14,69 | 14,21 | 15,12 | 11,40 |
| 5,0 | 15,03 | 14,59 | 15,53 | 11,87 |
| 5,5 | 15,26 | 14,82 | 15,77 | 12,24 |
| 6,0 | 15,45 | 15,06 | 15,98 | 12,46 |
| 6,5 | 15,56 | 15,20 | 16,10 | 12,63 |
| 7,0 | 15,65 | 15,26 | 16,20 | 12,77 |
| 7,5 | 15,65 | 15,33 | 16,26 | 12,86 |
| 8,0 | 15,65 | 15,37 | 16,23 | 12,91 |
| 8,5 | 15,58 | 15,32 | 16,20 | 12,96 |
| 9,0 | 15,55 | 15,26 | 16,12 | 12,91 |
| 9,5 | 15,42 | 15,20 | 16,07 | 12,88 |
| 10,0 | 15,32 | 15,09 | 15,93 | 12,83 |
| 10,5 | 15,23 | 15,01 | 15,77 | 12,74 |
| 11,0 | 15,09 | 14,89 | 15,65 | 12,63 |
| 11,5 | 14,97 | 14,78 | 15,54 | 12,57 |
| 12,0 | 14,82 | 14,64 | 15,41 | 12,52 |
| 12,5 | 14,67 | 14,47 | 15,29 | 12,51 |
| 13,0 | 14,53 | 14,36 | 15,12 | |
| 13,5 | 14,39 | 14,25 | 14,98 | |

**Tabelle zu Abbildung 16: Leitfähigkeiten verschiedener IL-haltiger Zusammensetzungen bei Zugabe der jeweils angegebenen Menge des angegebenen Lösungsmittels zu 5 ml Ausgangsprobe (IL plus Leitsalz wie angegeben).**

| Zugabe Lösemittel [mL] | σ(Py14OT f/LiBOB 0.5 M/EC_DM C) [mS/cm] | σ(Py14TF SI/LiTFSI (0.50 M) /DME) [mS/cm] | σ(Py14T FSI/LiTF SI 0.50 M/EC_D MC) [mS/cm] | σ(Py14T FSI/LiO Tf 0.50 M/EC_D MC) [mS/cm] | σ(Et3ST FSI/LiTF SI (0.50 M)/EC_ DMC) [mS/cm] | σ((MeOE) MPyr TFSI/LiTF SI 0.5 M/EC_DM C 70_30) [mS/cm] | σ((MeOE) MPyr TFSI/LiTF SI 0.5 M/EC_DM C 70_30) [mS/cm] |
|---|---|---|---|---|---|---|---|
| 0,0 | 1,63 | 1,12 | 1,18 | 1,68 | 3,25 | 1,18 | 1,18 |
| 0,5 | 2,32 | 2,63 | 2,48 | 2,76 | 5,33 | 2,48 | 2,48 |
| 1,0 | 3,60 | 4,05 | 4,12 | 3,78 | 6,77 | 4,12 | 4,12 |
| 1,5 | 4,96 | 5,71 | 5,63 | 5,20 | 8,48 | 5,63 | 5,63 |
| 2,0 | 6,23 | 7,24 | 6,94 | 6,39 | 9,94 | 6,94 | 6,94 |
| 2,5 | 7,39 | 8,72 | 8,16 | 7,56 | 11,26 | 8,16 | 8,16 |
| 3,0 | 8,39 | 10,05 | 9,22 | 8,49 | 12,29 | 9,22 | 9,22 |
| 3,5 | 9,16 | 11,23 | 10,07 | 9,39 | 13,08 | 10,07 | 10,07 |
| 4,0 | 9,84 | 12,18 | 10,83 | 10,10 | 13,69 | 10,83 | 10,83 |
| 4,5 | 10,34 | 12,97 | 11,40 | 10,72 | 14,21 | 11,40 | 11,40 |
| 5,0 | 10,83 | 13,61 | 11,87 | 11,20 | 14,59 | 11,87 | 11,87 |
| 5,5 | 11,18 | 14,08 | 12,24 | 11,60 | 14,82 | 12,24 | 12,24 |
| 6,0 | 11,45 | 14,42 | 12,46 | 11,84 | 15,06 | 12,46 | 12,46 |
| 6,5 | 11,68 | 14,69 | 12,63 | 12,07 | 15,20 | 12,63 | 12,63 |
| 7,0 | 11,84 | 14,86 | 12,77 | 12,28 | 15,26 | 12,77 | 12,77 |
| 7,5 | 11,96 | 14,99 | 12,86 | 12,43 | 15,33 | 12,86 | 12,86 |
| 8,0 | 12,07 | 15,09 | 12,91 | 12,54 | 15,37 | 12,91 | 12,91 |
| 8,5 | 12,07 | 15,06 | 12,96 | 12,57 | 15,32 | 12,96 | 12,96 |
| 9,0 | 12,07 | 15,03 | 12,91 | 12,62 | 15,26 | 12,91 | 12,91 |
| 9,5 | 12,06 | 14,98 | 12,88 | 12,60 | 15,20 | 12,88 | 12,88 |
| 10,0 | 12,06 | 14,89 | 12,83 | 12,60 | 15,09 | 12,83 | 12,83 |
| 10,5 | 11,98 | 14,80 | 12,74 | 12,57 | 15,01 | 12,74 | 12,74 |
| 11,0 | 11,95 | 14,63 | 12,63 | 12,54 | 14,89 | 12,63 | 12,63 |
| 11,5 | 11,91 | 14,50 | 12,57 | 12,52 | 14,78 | 12,57 | 12,57 |
| 12,0 | 11,84 | 14,30 | 12,52 | 12,46 | 14,64 | 12,52 | 12,52 |
| 12,5 | 11,72 | 14,14 | 12,51 | 12,40 | 14,47 | 12,51 | 12,51 |
| 13,0 | 11,62 | 14,00 | | 12,35 | 14,36 | | |
| 13,5 | 11,51 | 13,80 | | 12,24 | 14,25 | | |

## Patentansprüche

1. Eine Elektrolytzubereitung, enthaltend:
a) eine ionische Flüssigkeit, die über einen Bereich von mindestens 4,5 V elektrochemisch stabil ist, eine Viskosität von kleiner 300 mPa s bei 20 -C aufweist und eine Leitfähigkeit von mindestens 1 mS/cm bei 20 °C besitzt, und
b) ein aprotisches, dipolares Lösungsmittel in einer Menge von 20 bis 60 Vol.-% bezogen auf die Elektrolytzubereitung,
wobei die Leitfähigkeit der Elektrolytzubereitung mindestens um den Faktor 2 größer ist als die Leitfähigkeit der ionischen Flüssigkeit,
wobei die ionische Flüssigkeit ausgewählt ist aus der Gruppe, die [Et₃S][TFSI],
[(MeOE)MePyrr][OTf], [(MeOE)MePyrr][Nonaflat], [(MeOE)MePyrr][TFSI], [(MeOE)MIM][OTf], [(MeOE)MIM][Nonaflat], [(MeOE)MIM][TFSI], [(MeOE)DiMIM][OTf], [(MeOE)DiMIM][Nonaflat] und [(MeOE)DiMIM][TFSI] umfasst,
wobei das aprotische, dipolare Lösungsmittel Ethylencarbonat, Propylencarbonat, Dimethylcarbonat, Dimethylsulfoxid, Aceton, Acetonitril, Dimethylformamid, γ-Butyrolacton, Dimethoxyethan, Tetrahydrofuran, ein Dialkylcarbonat, ein Carbonsäureester oder Mischungen davon, vorzugsweise γ-Butyrolacton oder eine Mischung aus mindestens 50 Vol.-% Ethylencarbonat und einem anderen Lösungsmittel ist.

2. Zubereitung nach Anspruch 1, wobei das Lösungsmittel eine Mischung aus Ethylencarbonat und Dimethylcarbonat, bevorzugt im Verhältnis im Bereich von von 50-100 : 50-0, bevorzugt 60-95 : 40-5, bevorzugter 70-90 : 30-10 ist.

3. Zubereitung nach einem der vorherigen Ansprüche, wobei die Zubereitung zusätzlich ein Additiv mit einer polymerisationsfähigen funktionellen Gruppe enthält.

4. Zubereitung nach einem der vorherigen Ansprüche, wobei das Additiv ausgewählt ist aus der Gruppe, die Acrylnitril, Ethylensulfit, Propansulton, ein organisches Carbonat, vorzugsweise Ethylencarbonat, Vinylencarbonat, Vinylethylencarbonat oder Fluorethylencarbonat, und Sulfolane, umfasst oder Mischungen davon.

5. Zubereitung nach einem der vorherigen Ansprüche, wobei die Zubereitung einen Flammpunkt von über 150 °C, vorzugsweise über 170 °C und bevorzugter über 200 °C, aufweist.

6. Zubereitung nach einem der vorherigen Ansprüche, wobei die Zubereitung zusätzlich ein Leitsalz enthält, welches ausgewählt ist aus der Gruppe, die LiBOB, LiTFSI, LiFSI, LiCO₄, LiBF₄, LiOTf und LiPF₆ umfasst.

7. Zubereitung nach einem der Ansprüche 1 bis 6, wobei die ionische Flüssigkeit [(MeOE)MPyrr][TFSI] ist, und die Zubereitung LiTFSI oder LiOTf als Leitsalz enthält.

8. Zubereitung nach Anspruch 7, wobei die Zubereitung LiTFSI als Leitsalz in einer Konzentration von weniger als 0,75 mol/l, bevorzugt weniger als 0,7 mol/l, besonders bevorzugt weniger als 0,6 mol/l, bezogen auf die ionische Flüssigkeit enthält.

9. Zubereitung nach einem der Ansprüche 1 bis 6, wobei die ionische Flüssigkeit [(MeOE)MePyrr][TFSI] ist, und die Zubereitung DMC, DME oder EC/DMC, vorzugsweise im Verhältnis im Bereich von 60-100 zu 40-0, als Lösungsmittel enthält.

10. Zubereitung nach einem der Ansprüche 1 bis 6, wobei die ionische Flüssigkeit eine Trialkylsulfoniumverbindung, [Et₃S][TFSI], [Et₃S][OTf] oder [Et₃S][ FSI], ist und die Zubereitung DMC, DME oder EC/DMC, vorzugsweise im Verhältnis im Bereich von 60-100 zu 40-0, als Lösungsmittel enthält.

11. Zubereitung nach Anspruch 10, wobei die ionische Flüssigkeit [Et₃S][TFSI] ist, die Zubereitung EC/DMC, vorzugsweise im Verhältnis im Bereich von 60-100 zu 40-0, als Lösungsmittel und LiTFSI als Leitsalz in einer Konzentration von weniger als 0,75 mol/l, bevorzugt weniger als 0,7 mol/l, besonders bevorzugt 0,4 bis 0,6 mol/l, bezogen auf die ionische Flüssigkeit enthält.

12. Verwendung einer Elektrolytzubereitung nach einem der vorherigen Ansprüche in elektrischen Energiespeichersystemen, vorzugsweise in Lithium-Ionen-Batterien oder in Doppelschichtkondensatoren.

## Claims

1. An electrolyte composition, comprising:
a) an ionic liquid, which is electrochemically stable over a range of at least 4.5 V, has a viscosity of less than 300 mPa s at 20 °C and has a conductivity of at least 1 mS/cm at 20 °C, and
b) an aprotic, dipolar solvent in an amount of 20 to 60 vol% relative to the electrolyte composition,
wherein the conductivity of the electrolyte composition is at least by factor 2 greater than the conductivity of the ionic liquid,
wherein the ionic liquid is selected from the group comprising [Et₃S][TFSI], [(MeOE)MePyrr][OTf], [(MeOE)MePyrr][Nonaflat], [(MeOE)MePyrr][TFSI], [(MeOE)MIM][OTf], ((MeOE)MIM][Nonaflat], [(MeOE)MIM][TFSI], [(MeOE)DiMIM][OTf], [(MeOE)DiMIM][Nonaflat] und [(MeOE)DiMIM][TFSI],
wherein the aprotic, dipolar solvent is ethylene carbonate, propylene carbonate, dimethyl carbonate, dimethyl sulfoxide, acetone, acetonitrile, dimethylformamide, γ-butyrolactone, dimethoxyethane, tetrahydrofuran, a dialkyl carbonate, an ester of a carboxylic acid, or mixtures thereof, preferably γ-butyrolactone, or a mixture of at least 50 vol% ethylene carbonate and another solvent.

2. A composition according to claim 1, wherein the solvent is a mixture of ethylene carbonate and dimethyl carbonate, preferably in a ratio in the range of 50-100 : 50-0, preferably 60-95 : 40-5, more preferably 70-90 : 30-10.

3. A composition according to one of the preceding claims, wherein the composition additionally contains an additive having a functional group capable of polymerization.

4. A composition according to one of the preceding claims, wherein the additive is selected from the group comprising acrylonitrile, ethylene sulfite, propane sultone, an organic carbonate, preferably ethylene carbonate, vinylene carbonate, vinyl ethylene carbonate, or fluoroethylene carbonate, and sulfolane, or mixtures thereof.

5. A composition according to one of the preceding claims, wherein the composition has a flash point above 150 °C, preferably above 170 °C, and more preferably above 200 °C.

6. A composition according to one of the preceding claims, wherein the composition additionally contains a conducting salt, which is selected from the group comprising LiBOB, LiTFSI, LiFSI, LiClO₄, LiBF₄, LiOTf and LiPF₆.

7. A composition according to one of claims 1 to 6, wherein the ionic liquid is [(MeOE)MPyrr][TFSI], and the composition contains LiTFSI or LiOTf as conducting salt.

8. A composition according to claim 7, wherein the composition contains LiTFSI as a conducting salt in a concentration of less than 0.75 mol/L, preferably less than 0.7 mol/L, particularly preferably less than 0.6 mol/L, relative to the ionic liquid.

9. A composition according to one of claims 1 to 6, wherein the ionic liquid is [(MeOE)MePyrr][TFSI], and the composition contains as solvent DMC, DME or EC/DMC, preferably in a ratio in the range of 60-100 to 40-0.

10. A composition according to one of claims 1 to 6, wherein the ionic liquid is a trialkylsulfonium compound, [Et₃S][TFSI], [Et₃S][OTf] or [Et₃S][FSI], and the composition contains as a solvent DMC, DME or EC/DMC, preferably in a ratio in the range of 60-100 to 40-0.

11. A composition according to claim 10, wherein the ionic liquid is [Et₃S][TFSI], the composition contains as a solvent EC/DMC, preferably in a ratio in the range of 60-100 to 40-0, and as a conducting salt LiTFSI in a concentration of less than 0.75 mol/L, preferably less than 0.7 mol/L, particularly preferably 0.4 to 0.6 mol/L, relative to the ionic liquid.

12. Use of an electrolyte composition according to one of the preceding claims, in electrical energy storage systems, preferably in lithium-ion batteries or in double layer capacitors.

## Revendications

1. Préparation d'électrolyte, contenant :
a) un liquide ionique, qui est électrochimiquement stable sur un domaine d'au moins 4,5 V, présente une viscosité inférieure à 300 mPa.s à 20°C et possède une conductivité d'au moins 1 mS/cm à 20°C, et
b) un solvant aprotique, dipolaire dans une quantité de 20 à 60 % en volume, rapporté à la préparation d'électrolyte,
la conductivité de la préparation d'électrolyte étant supérieure d'au moins le facteur 2 à la conductivité du liquide ionique,
le liquide ionique étant choisi dans le groupe qui comprend [Et₃S][TFSI], [(MeOE)MePyrr][OTf], [(MeOE)MePyrr][nonaflate], [(MeOE)MePyrr][TFSI], [(MeOE)MIM][OTf], [(MeOE)MIM][nonaflate], [(MeOE)MIM][TFSI], [(MeOE)DiMIM][OTf], [(MeOE)DiMIM][nonaflate] et [(MeOE)DiMIM][TFSI],
le solvant aprotique, dipolaire étant le carbonate d'éthylène, le carbonate de propylène, le carbonate de diméthyle, le diméthylsulfoxyde, l'acétone, l'acétonitrile, le diméthylformamide, la γ-butyrolactone, le diméthoxyéthane, le tétrahydrofurane, un carbonate de dialkyle, un ester d'acide carboxylique ou des mélanges de ceux-ci, de préférence la γ-butyrolactone ou un mélange d'au moins 50 % en volume de carbonate d'éthylène et d'un autre solvant.

2. Préparation selon la revendication 1, le solvant étant un mélange de carbonate d'éthylène et de carbonate de diméthyle, de préférence dans un rapport dans un domaine de 50-100 : 50-0, de préférence de 60-95 : 40-5, encore mieux de 70-90 : 30-10.

3. Préparation selon l'une quelconque des revendications précédentes, la préparation comprenant de plus un additif avec un groupe fonctionnel apte à la polymérisation.

4. Préparation selon l'une quelconque des revendications précédentes, l'additif étant choisi dans le groupe qui comprend l'acrylonitrile, le sulfite d'éthylène, la propanesultone, un carbonate organique, de préférence le carbonate d'éthylène, le carbonate de vinylène, le carbonate de vinyléthylène ou le carbonate de fluoroéthylène, et le sulfolane, ou des mélanges de ceux-ci.

5. Préparation selon l'une quelconque des revendications précédentes, la préparation présentant un point d'inflammation supérieur à 150°C, de préférence supérieur à 170°C et encore mieux supérieur à 200°C.

6. Préparation selon l'une quelconque des revendications précédentes, la préparation contenant de plus un sel conducteur, lequel est choisi dans le groupe qui comprend LiBOB, LiTFSI, LiFSI, LiClO₄, LiBF₄, LiOTf et LiPF₆.

7. Préparation selon l'une quelconque des revendications 1 à 6, le liquide ionique étant [(MeOE)MPyrr][TFSI], et la préparation contenant comme sel conducteur LiTFSI ou LiOTf.

8. Préparation selon la revendication 7, la préparation contenant LiTFSI comme sel conducteur dans une concentration inférieure à 0,75 mol/l, de préférence inférieure à 0,7 mol/l, encore mieux inférieure à 0,6 mol/l, rapporté au liquide ionique.

9. Préparation selon l'une quelconque des revendications 1 à 6, le liquide ionique étant [(MeOE)MePyrr][TFSI], et la préparation contenant comme solvant DMC, DME ou EC/DMC, de préférence dans un rapport dans un domaine de 60-100 à 40-0.

10. Préparation selon l'une quelconque des revendications 1 à 6, le liquide ionique étant un composé de trialkylsulfonium, [Et₃S][TFSI], [Et₃S][OTf] ou [Et₃S][FSI] et la préparation contenant comme solvant DMC, DME ou EC/DMC, de préférence dans un rapport dans un domaine de 60-100 à 40-0.

11. Préparation selon la revendication 10, le liquide ionique étant [Et₃S][TFSI], la préparation contenant comme solvant EC/DMC, de préférence dans un rapport dans un domaine de 60-100 à 40-0, et comme sel conducteur LiTFSI dans une concentration inférieure à 0,75 mol/l, de préférence inférieure à 0,7 mol/l, encore mieux de 0,4 à 0,6 mol/l, rapporté au liquide ionique.

12. Utilisation d'une préparation d'électrolyte selon l'une quelconque des revendications précédentes dans des systèmes électriques de stockage d'énergie, de préférence dans des accumulateurs à ions lithium ou dans des condensateurs à double couche.
